# EUROPEAN PATENT SPECIFICATION

(11) **EP 3 824 659 B1**
(45) Date of publication and mention of the grant of the patent: **12.04.2023**
(21) Application number: 18926413.8
(22) Date of filing: 21.12.2018
(51) Int. Cl.: H04W 4/00, H04L 67/50, H04L 41/0631, H04L 41/5067, H04L 43/08, H04W 24/02, H04W 24/08, H04W 28/02, H04L 65/80, G06N 20/00, H04L 43/028, H04L 43/16

(54) **DETECTING COMMUNICATION NETWORK INSIGHTS OF ALERTS**
ERKENNUNG VON KOMMUNIKATIONSNETZWERKEINSICHTEN VON ALARMEN
DÉTECTION D'APERÇUS D'ALERTES DE RÉSEAU DE COMMUNICATION

(30) Priority: 17.07.2018 US 201862699312 P; 09.10.2018 US 201816155510; 30.10.2018 US 201862752908 P; 19.12.2018 US 201816226477
(43) Date of publication of application: 26.05.2021
(60) Divisional application: 23159210.6
(73) Proprietor: Meta Platforms, Inc., Menlo Park, CA 94025 (US)
(72) Inventor: LI, Ying, Menlo Park, CA 94025 (US); DE JONGH, Martinus Arnold, Menlo Park, CA 94025 (US); GONGUET, Vincent, Menlo Park, CA 94025 (US)
(74) Representative: Murgitroyd & Company
(86) International application number: PCT/US2018/067120
(87) International publication number: WO 2020/018139

(56) References cited:
- WO-A1-2016/091292
- US-A1- 2015 373 574
- US-A1- 2016 065 419
- US-A1- 2016 112 894
- US-A1- 2016 174 081
- US-A1- 2017 078 171
- CHEN WANG et al.: "Identifying Persistent and Recurrent QoE Anomalies for DASH Streaming in the Cloud", 2017 IEEE International Conference on Cloud Computing Technology and Science (CloudCom, 28 December 2017 (2017-12-28), pages 263-271, XP033281048, ISSN: 2330-2186

## Description

### TECHNICAL FIELD

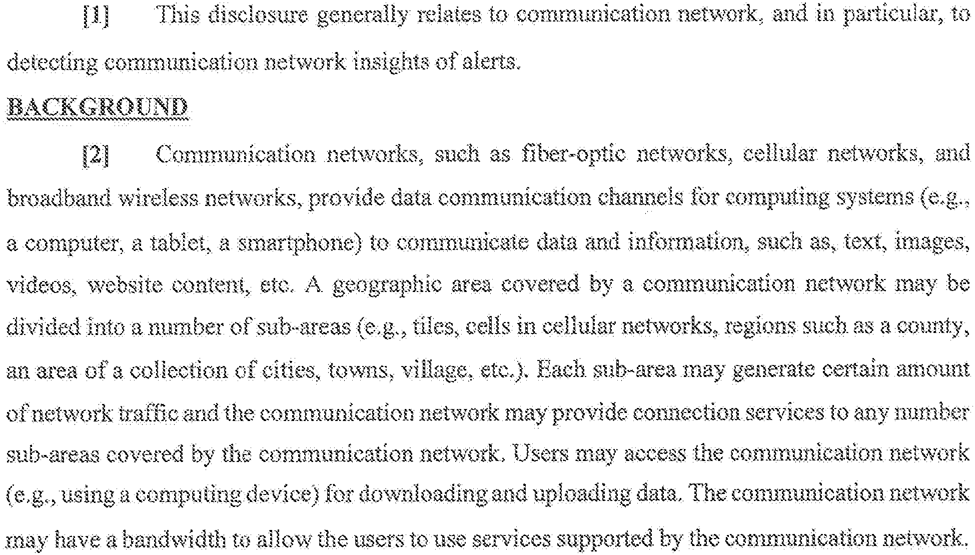

Patent documents US 2016/112894 A1 (LAU KEVIN [US] ET AL) 21 April 2016 (2016-04-21) and US 2016/065419 A1 (SZILAGYI PETER [HU] ET AL) 3 March 2016 (2016-03-03) are relevant prior part.

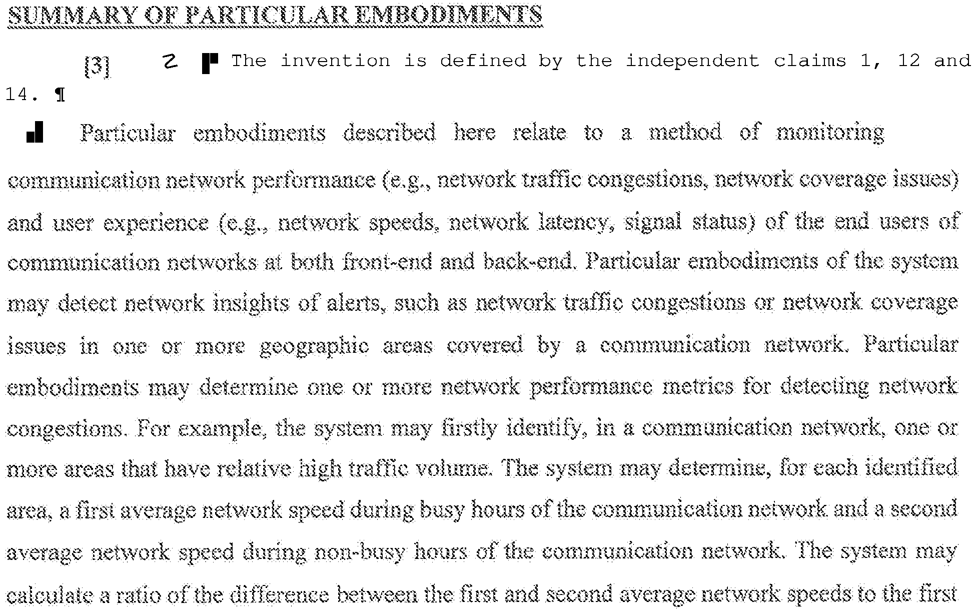

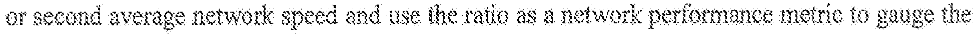

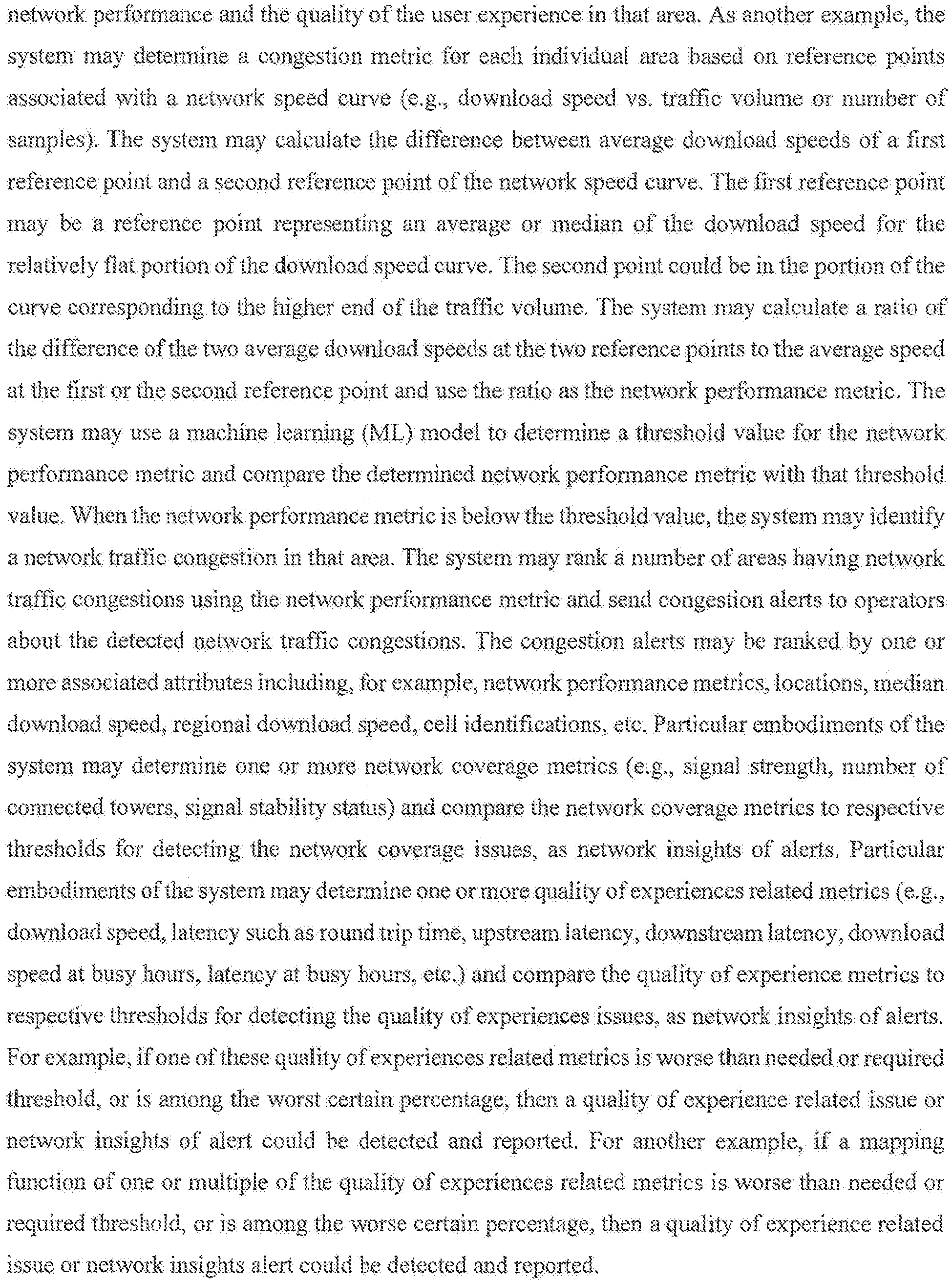

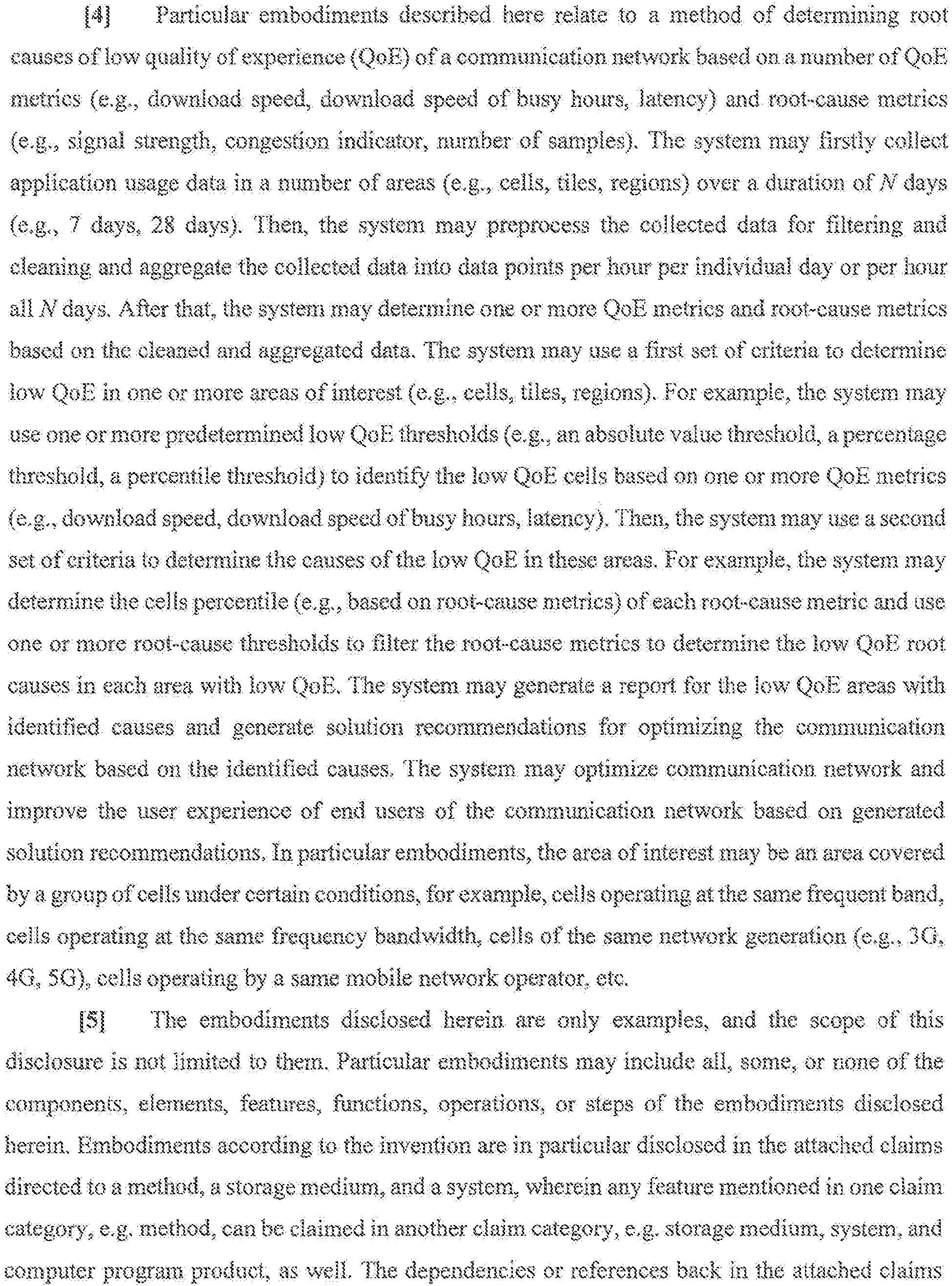

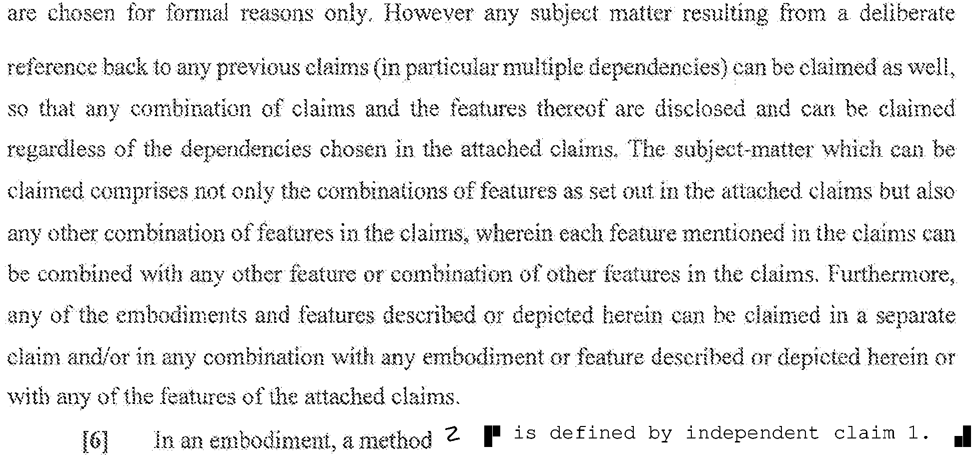

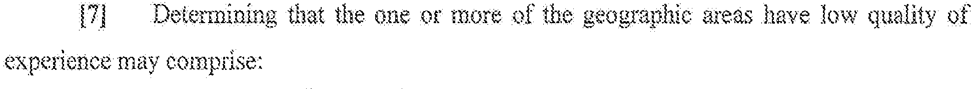

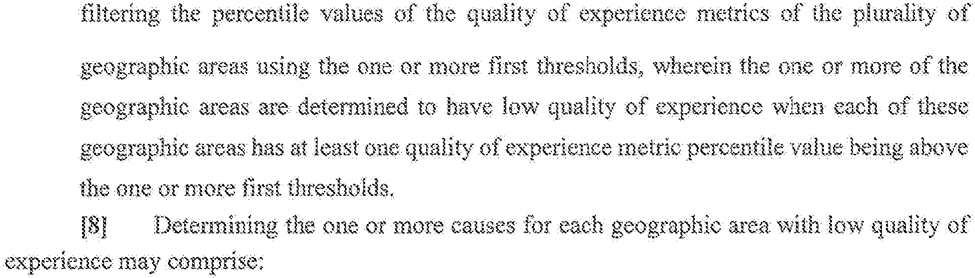

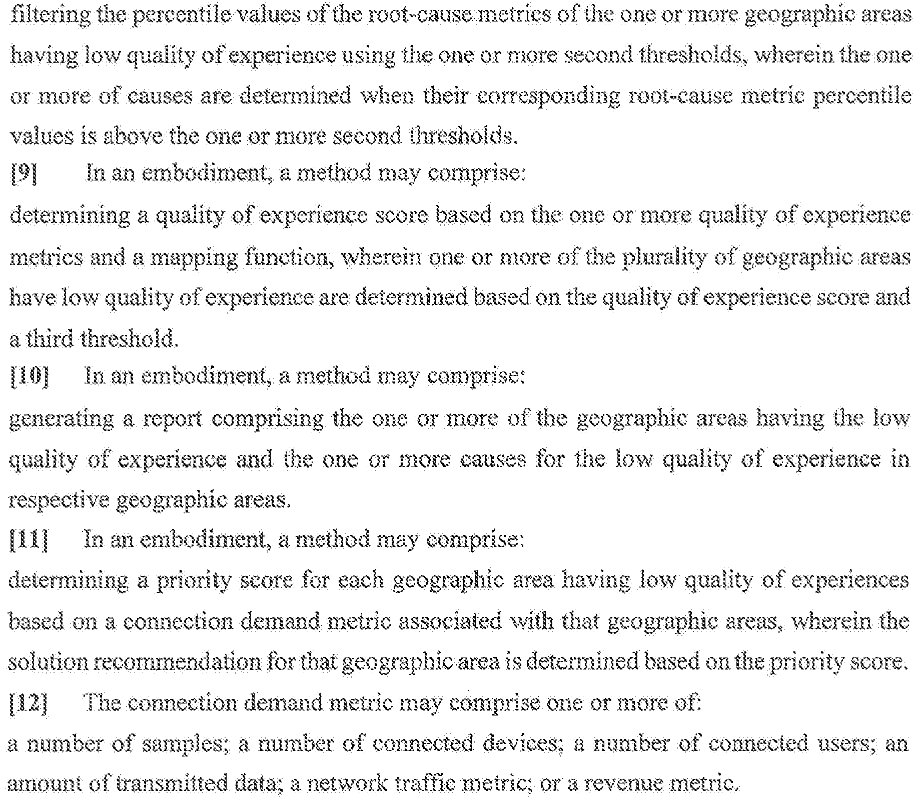

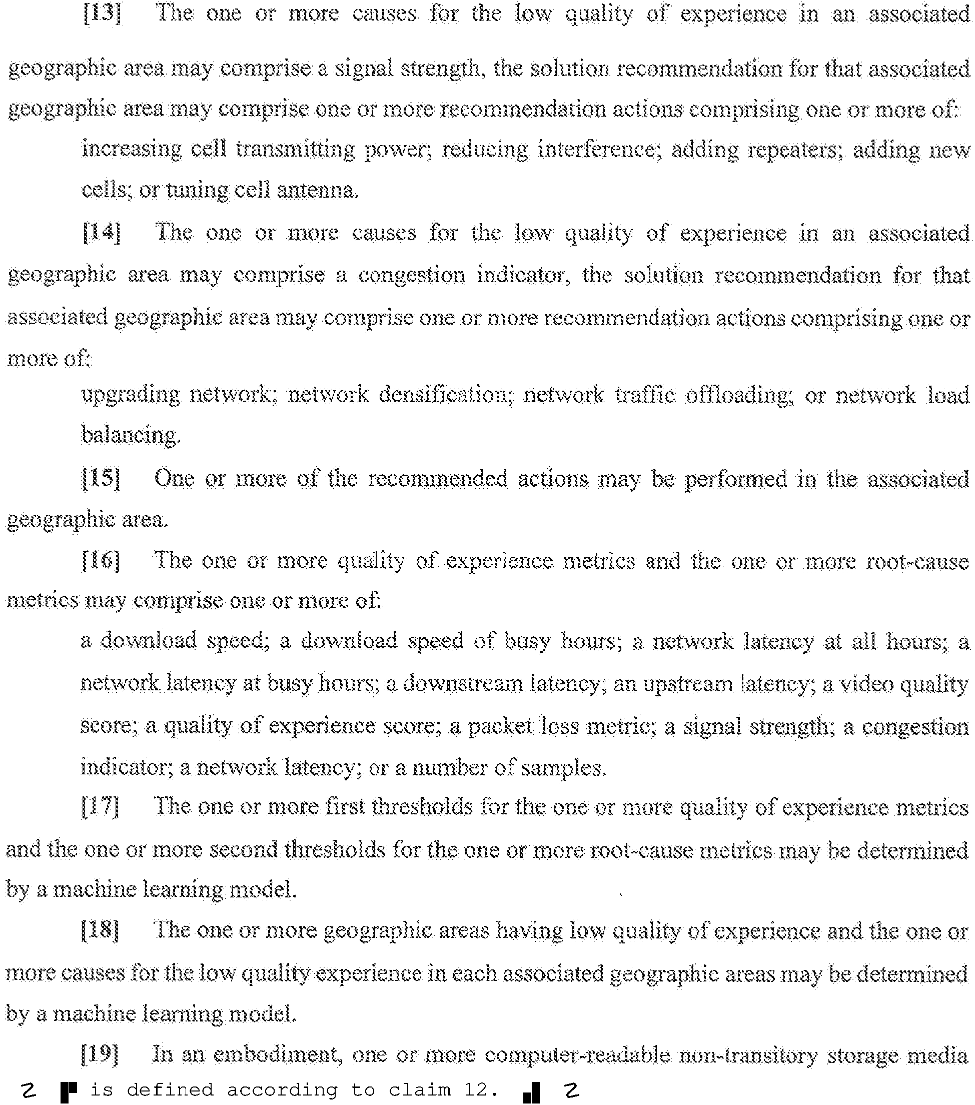

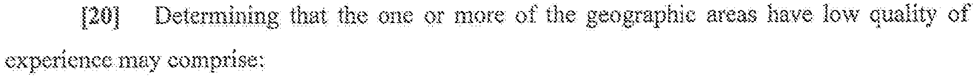

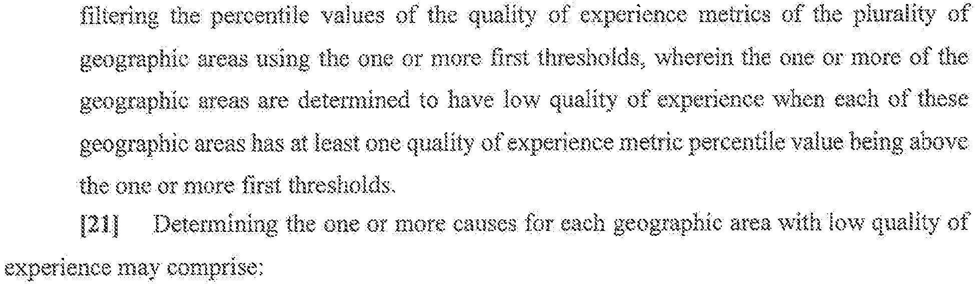

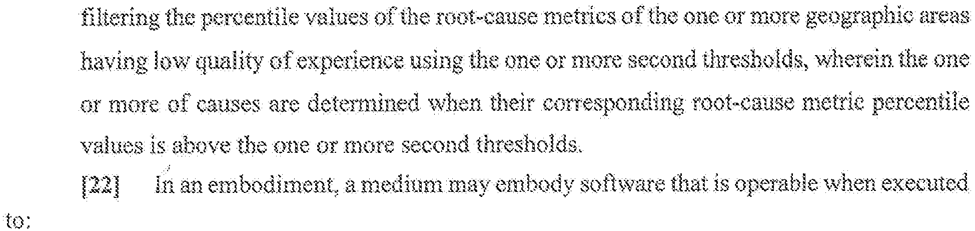

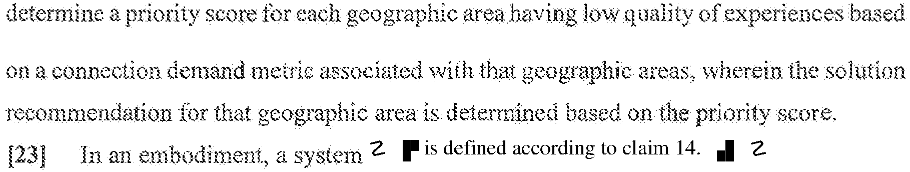

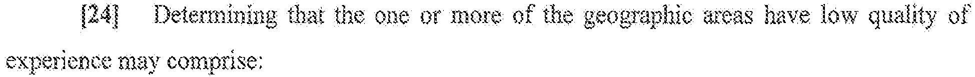

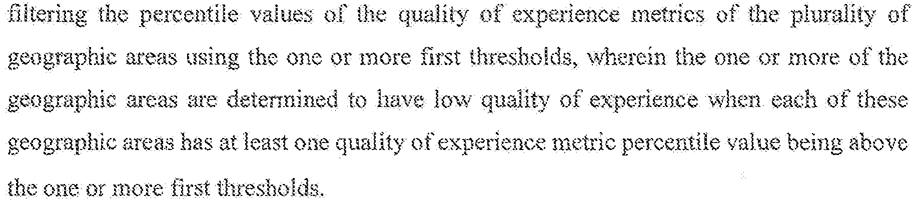

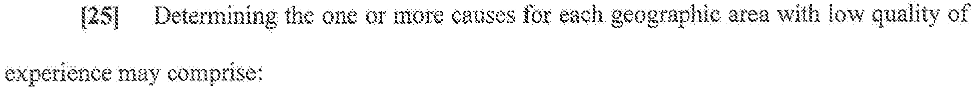

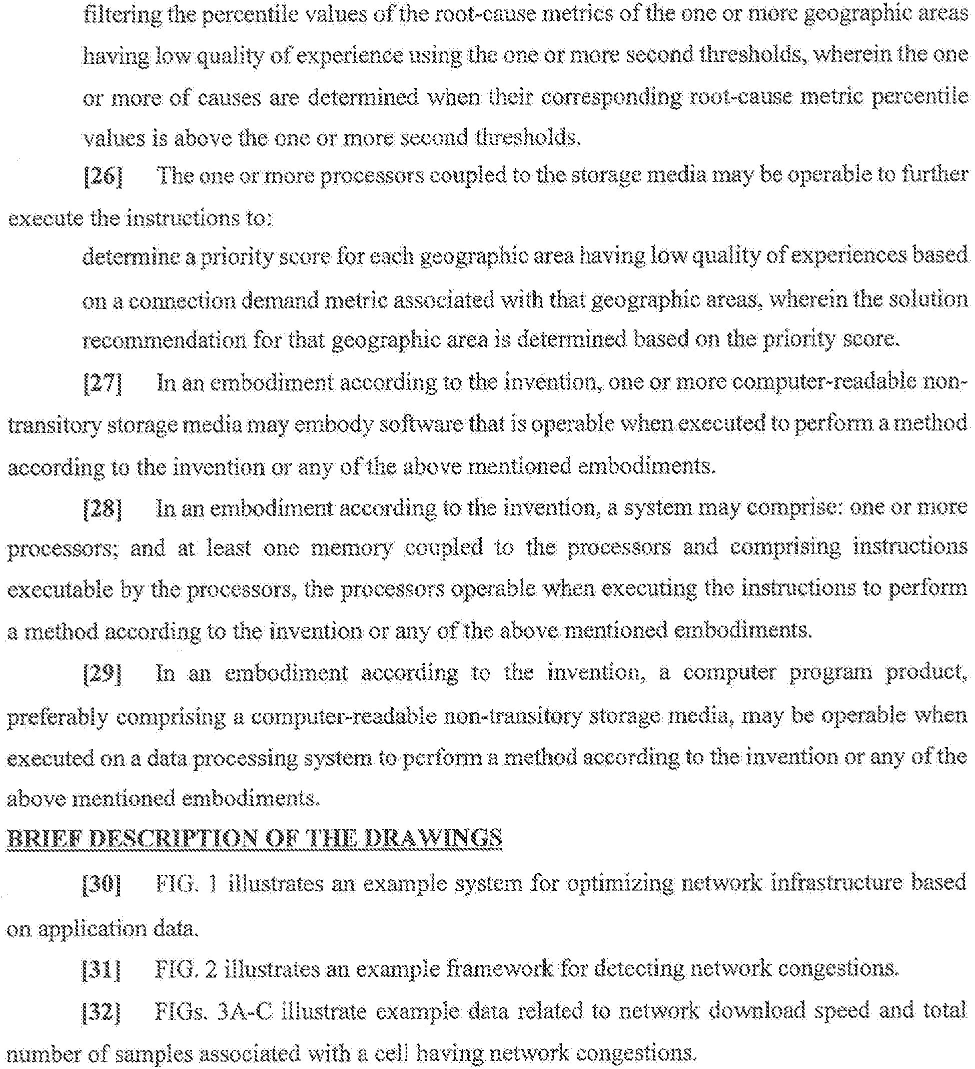

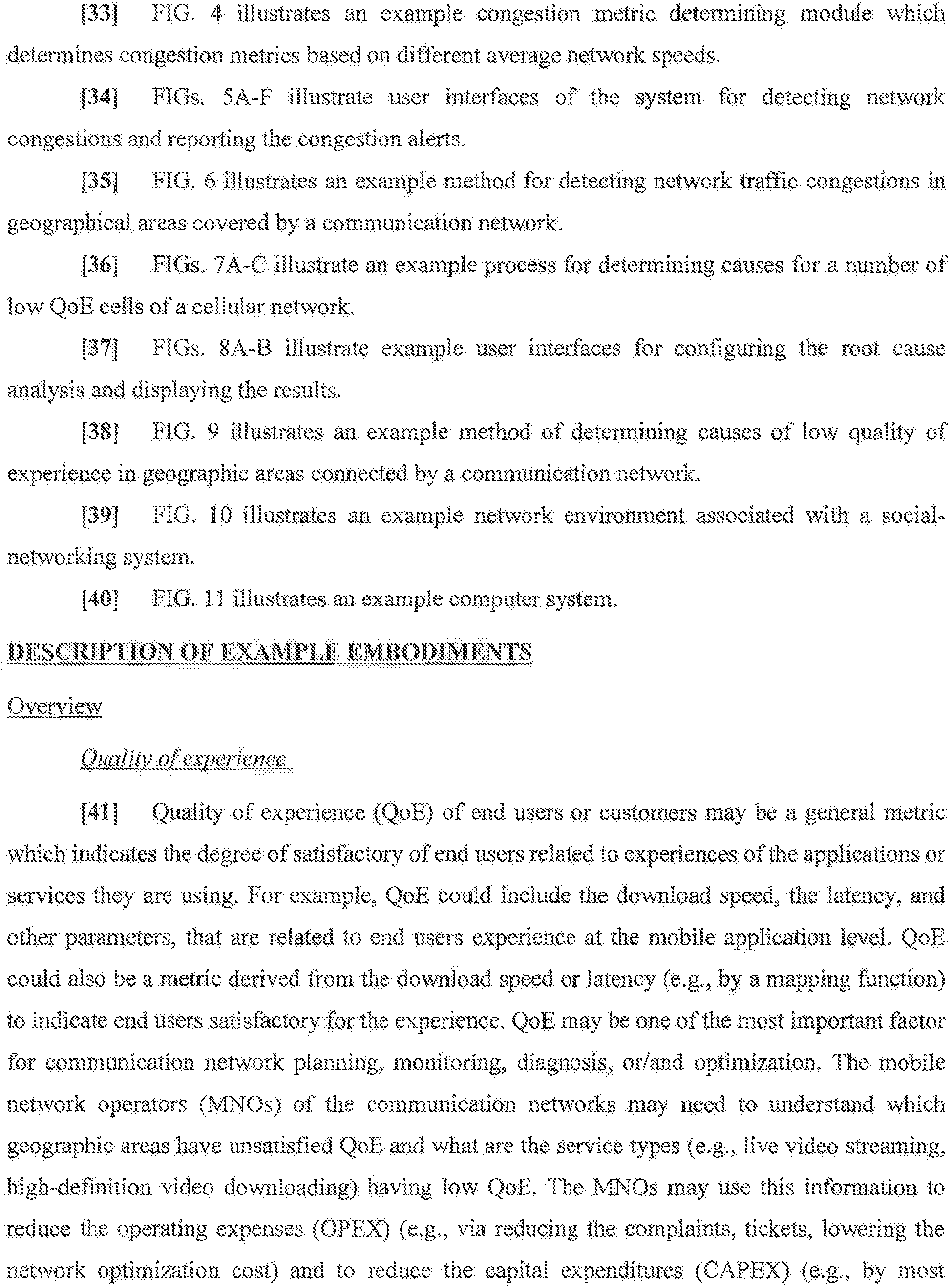

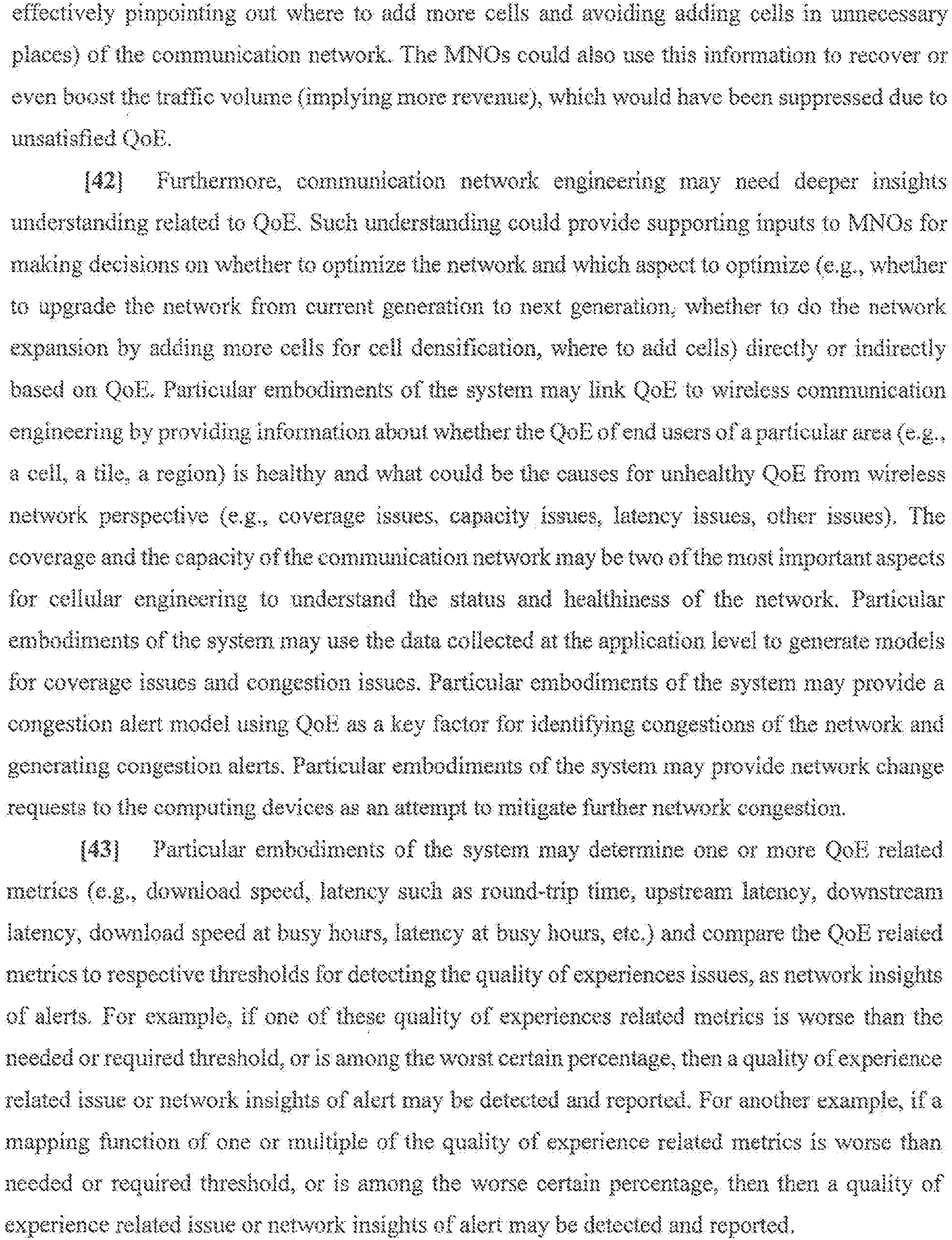

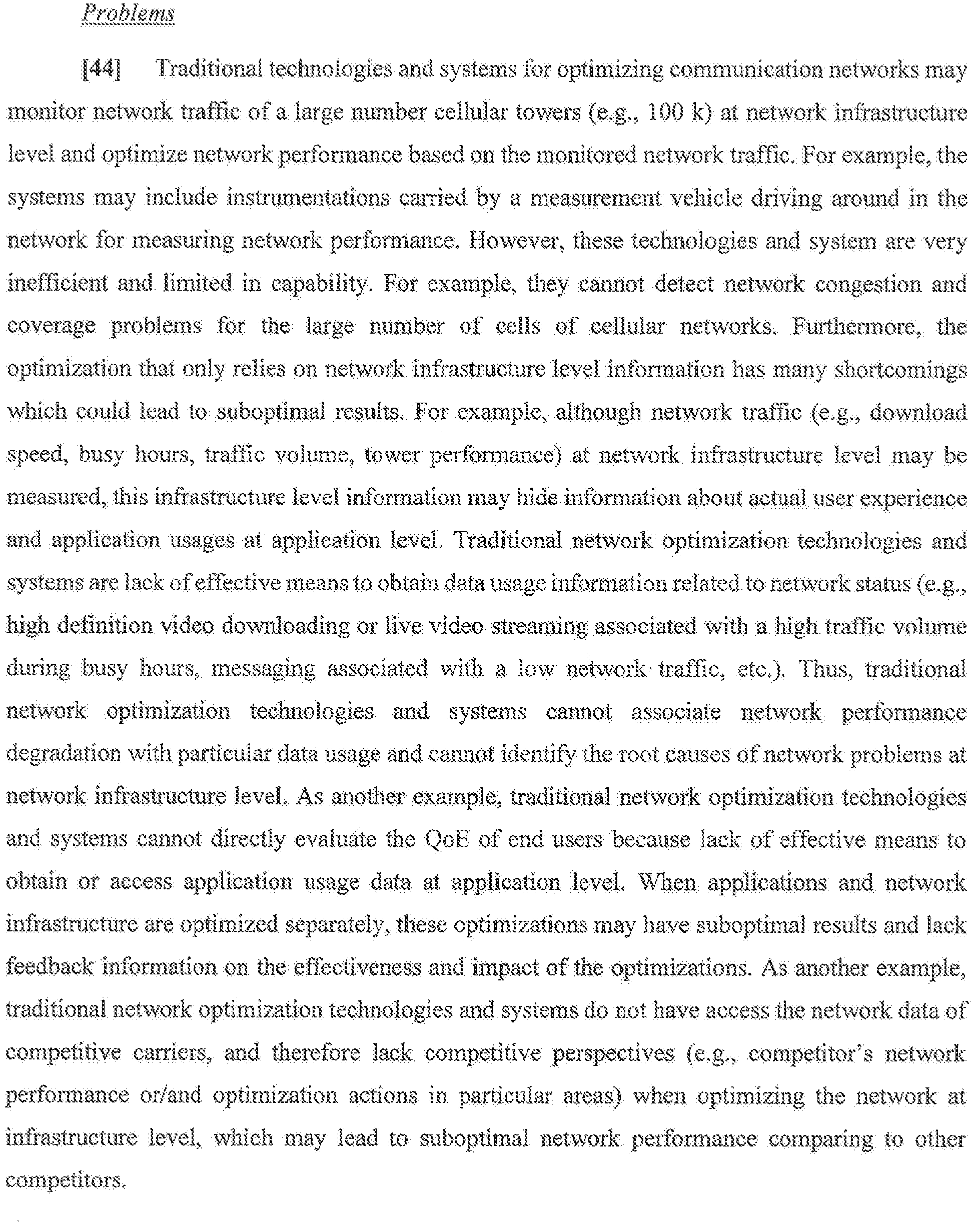

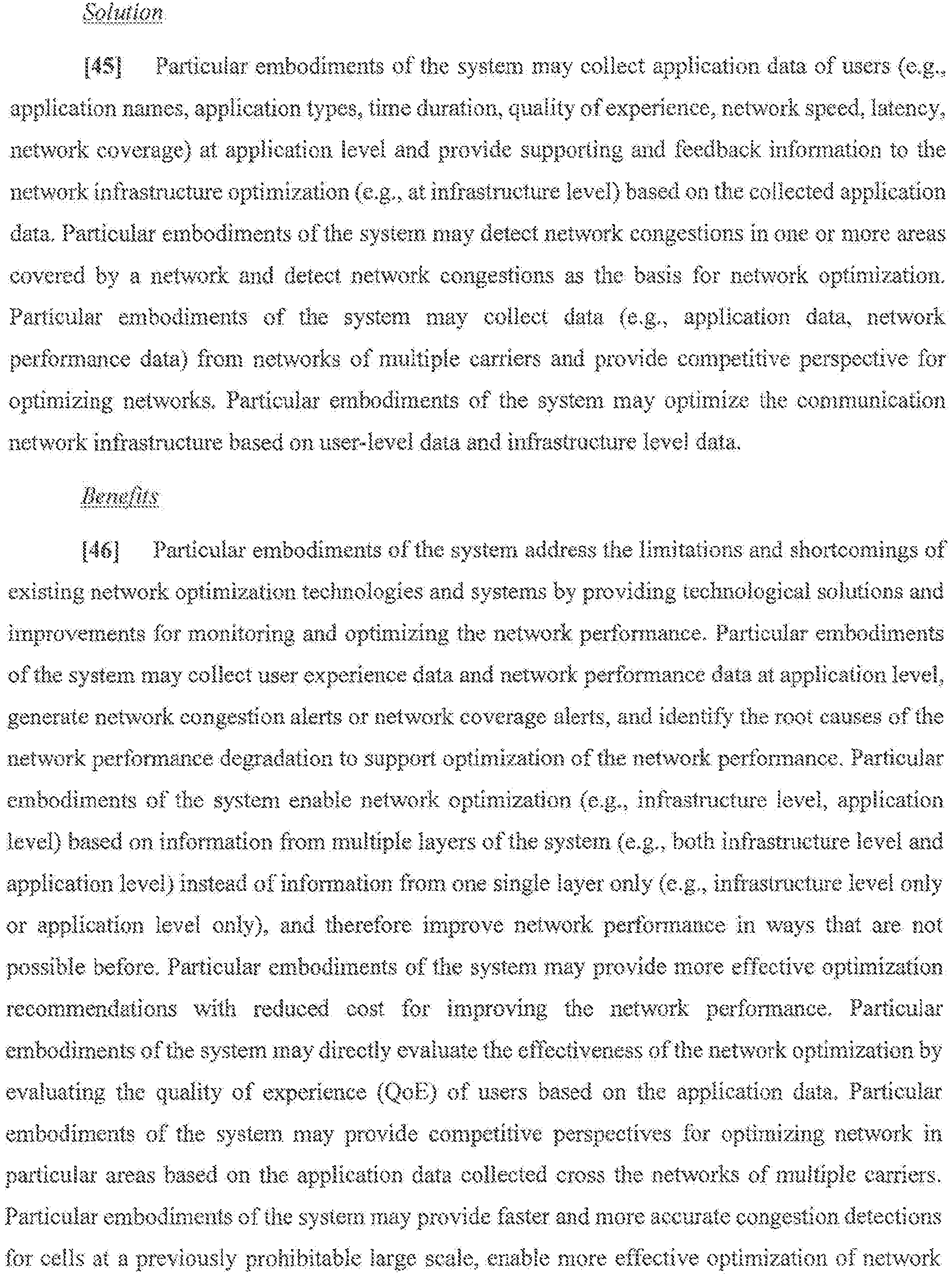

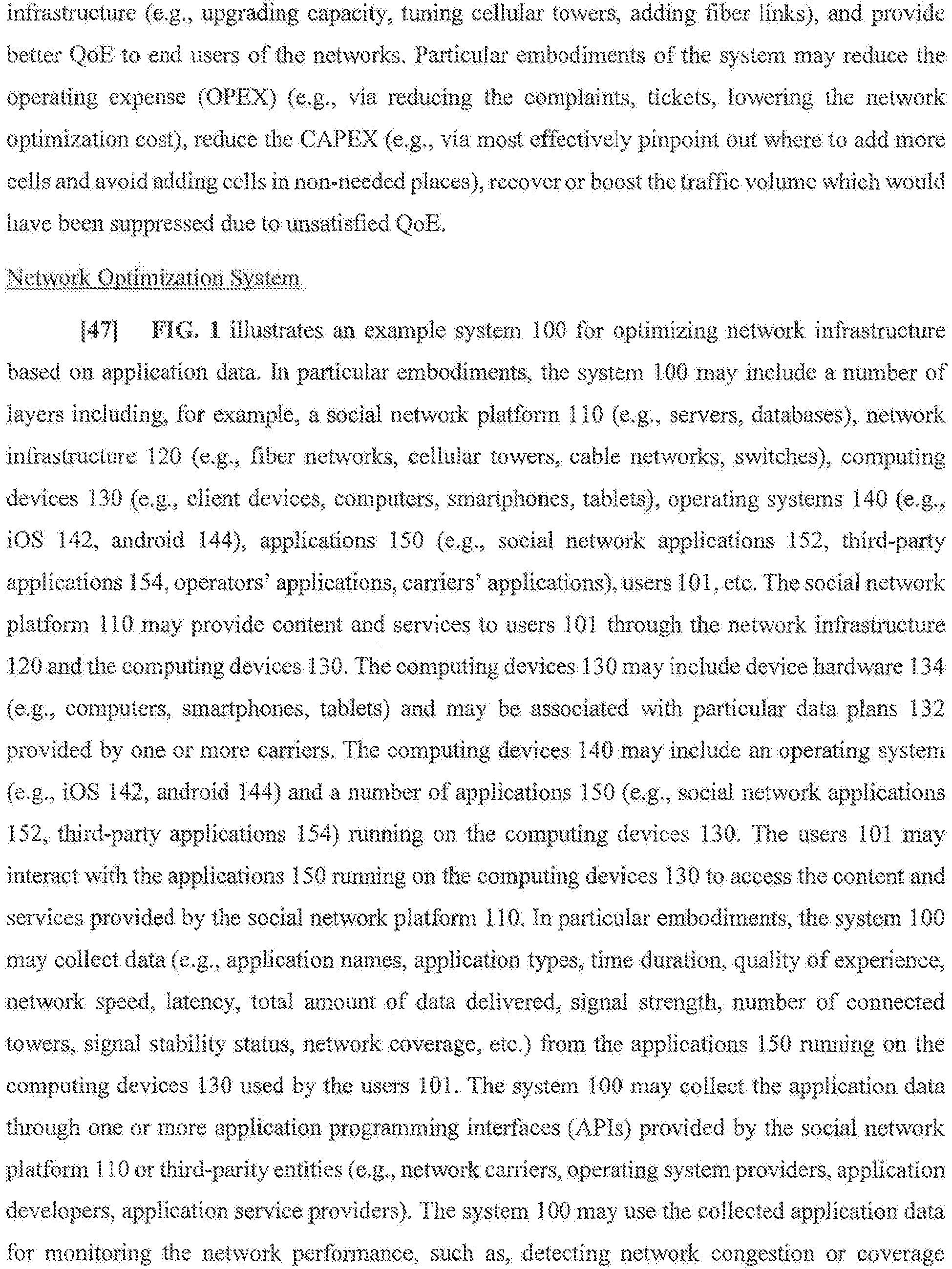

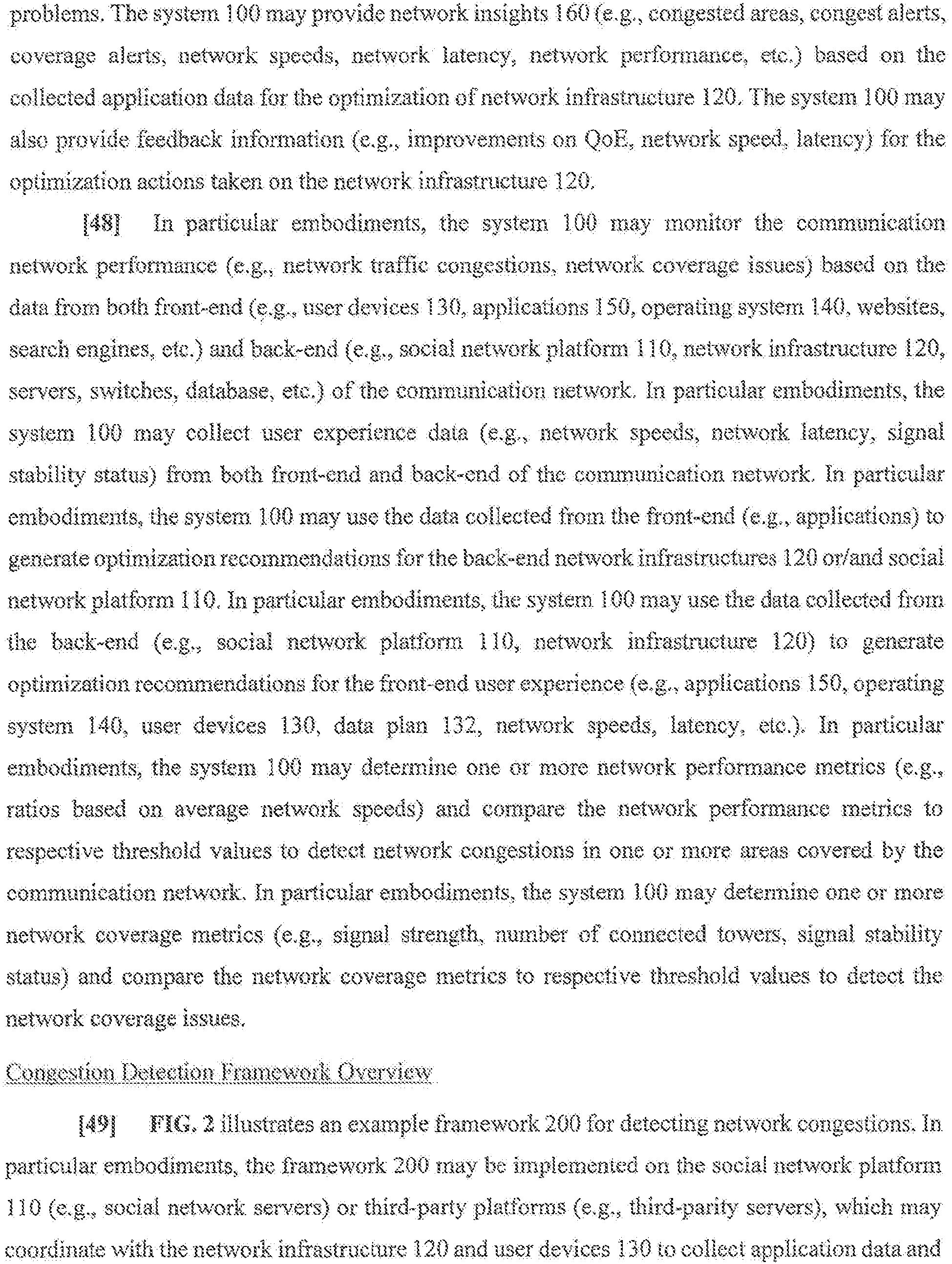

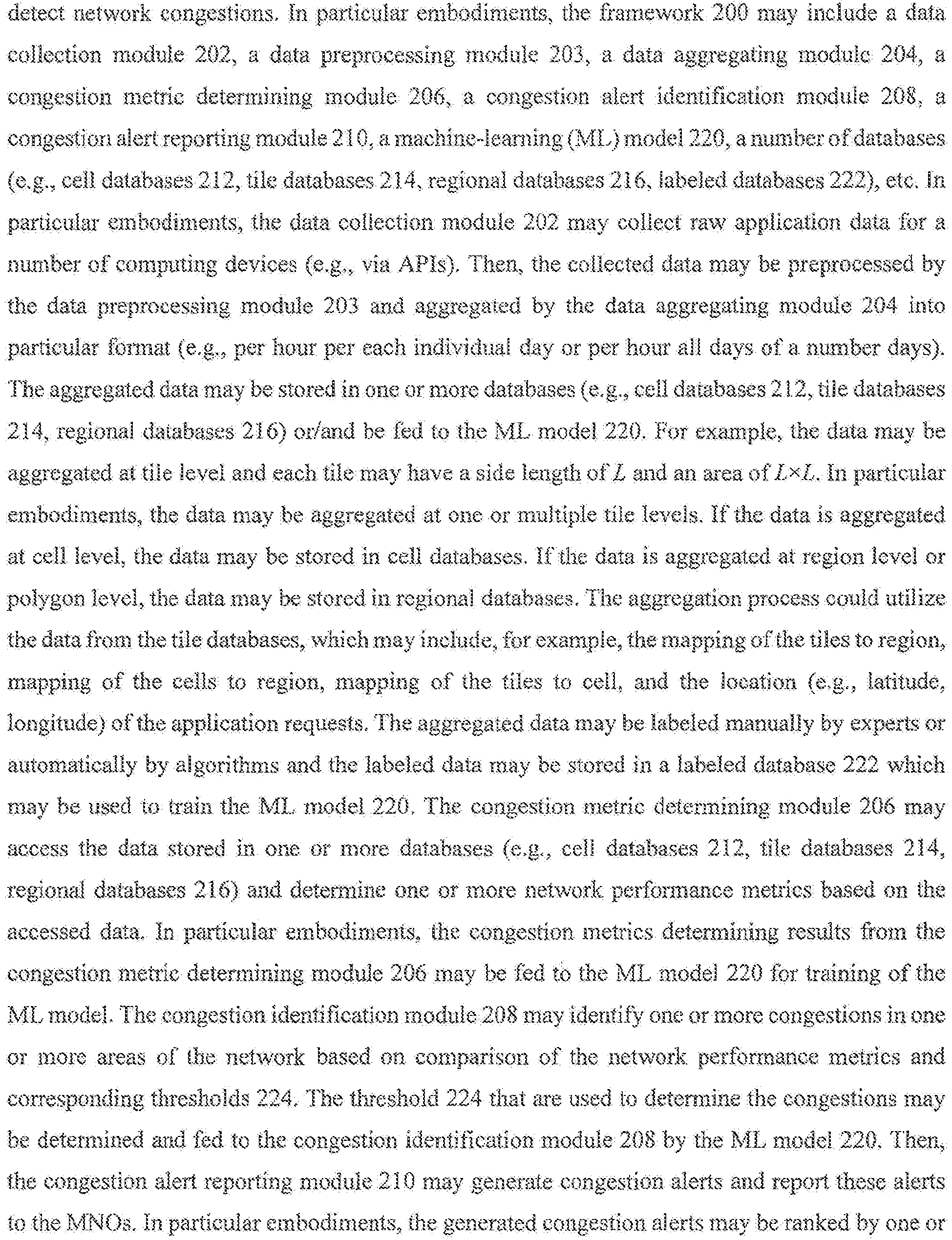

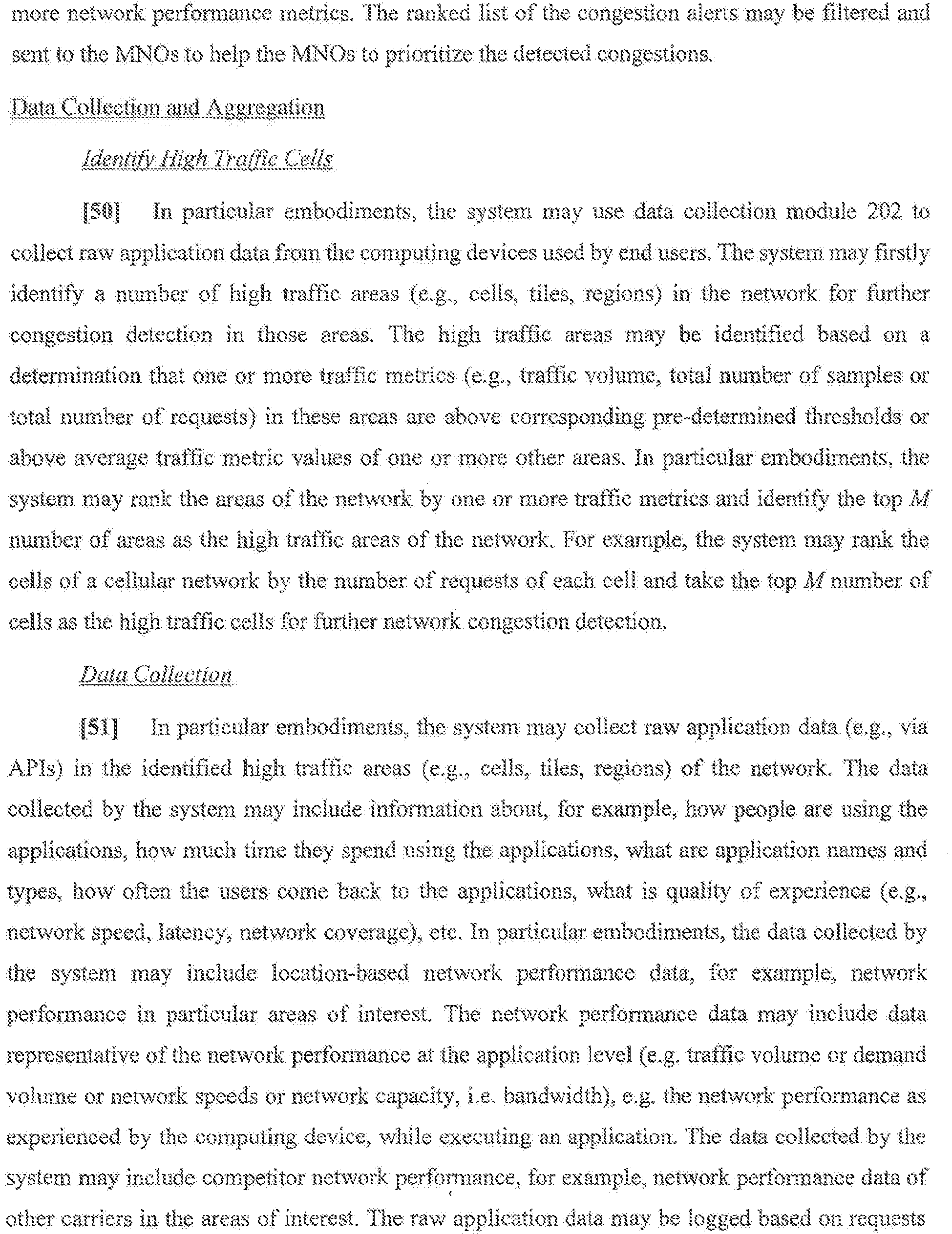

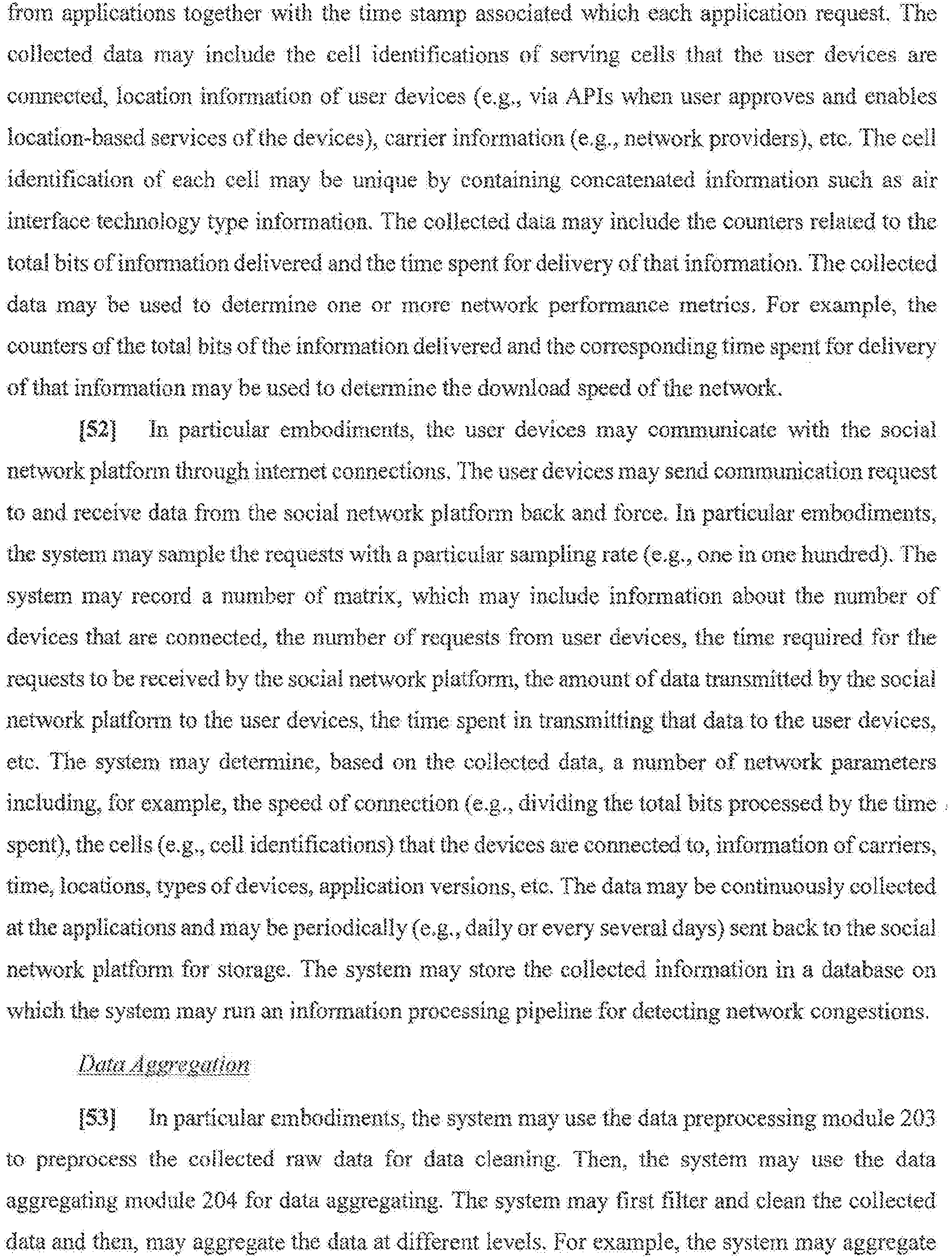

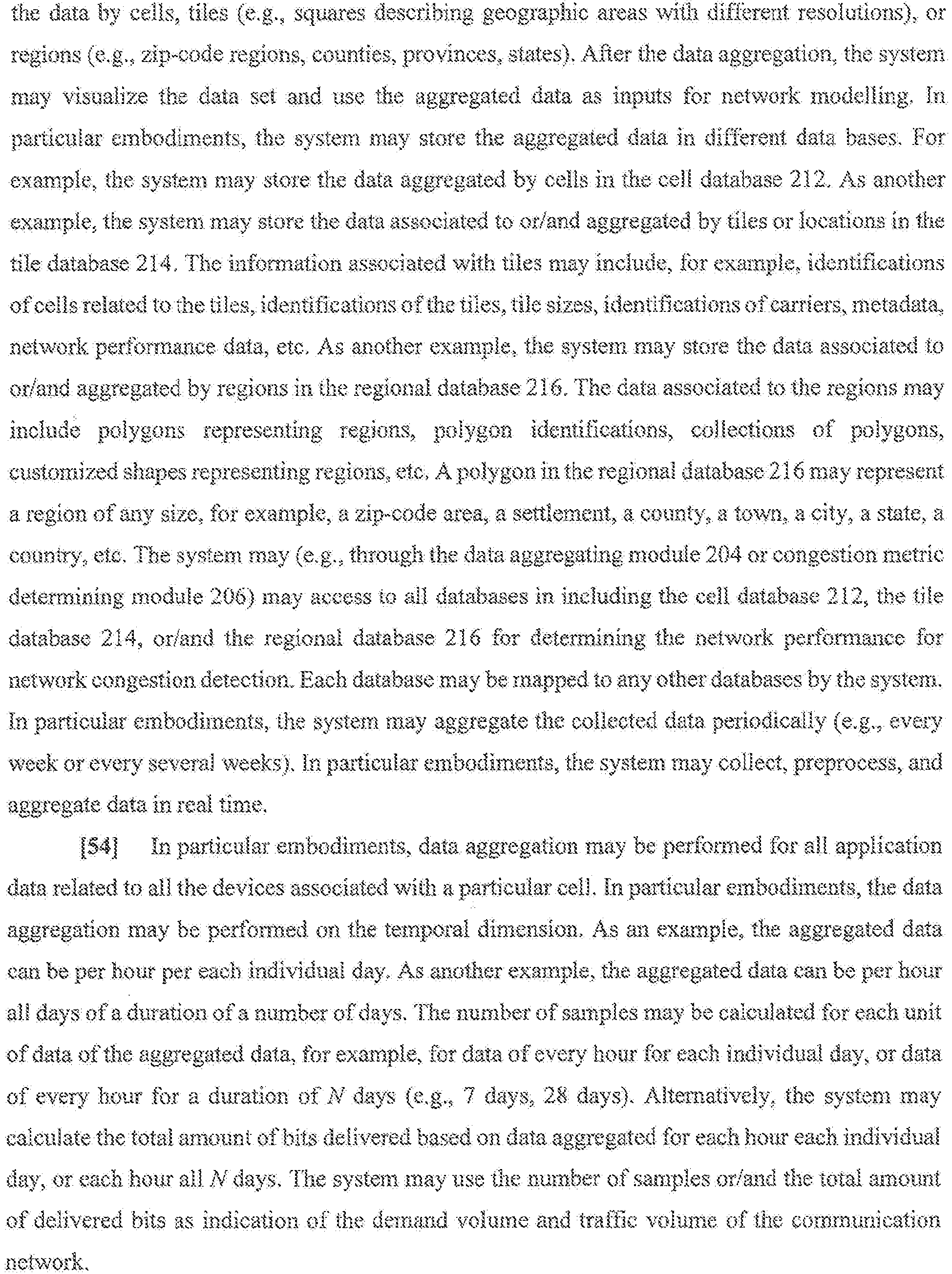

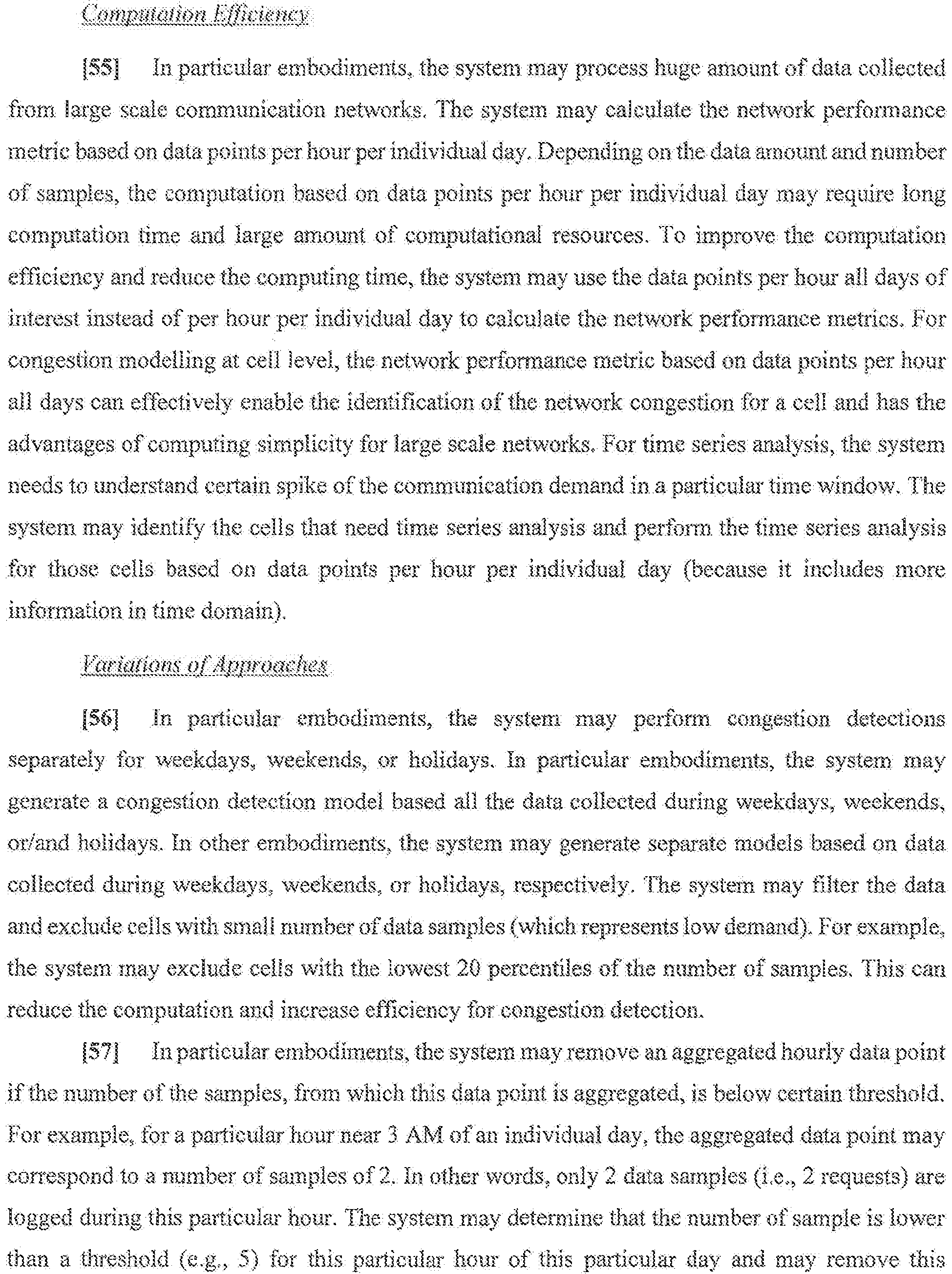

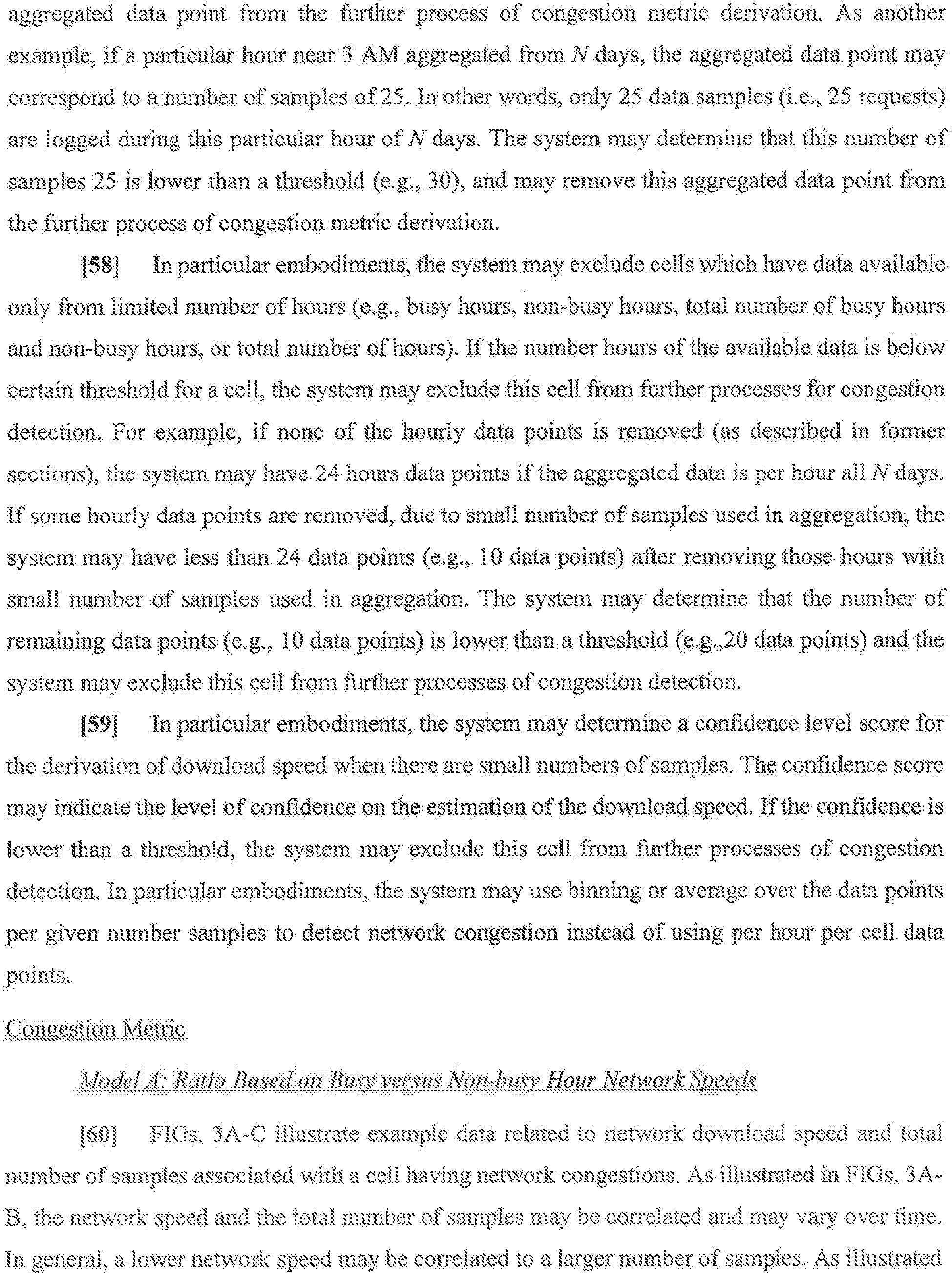

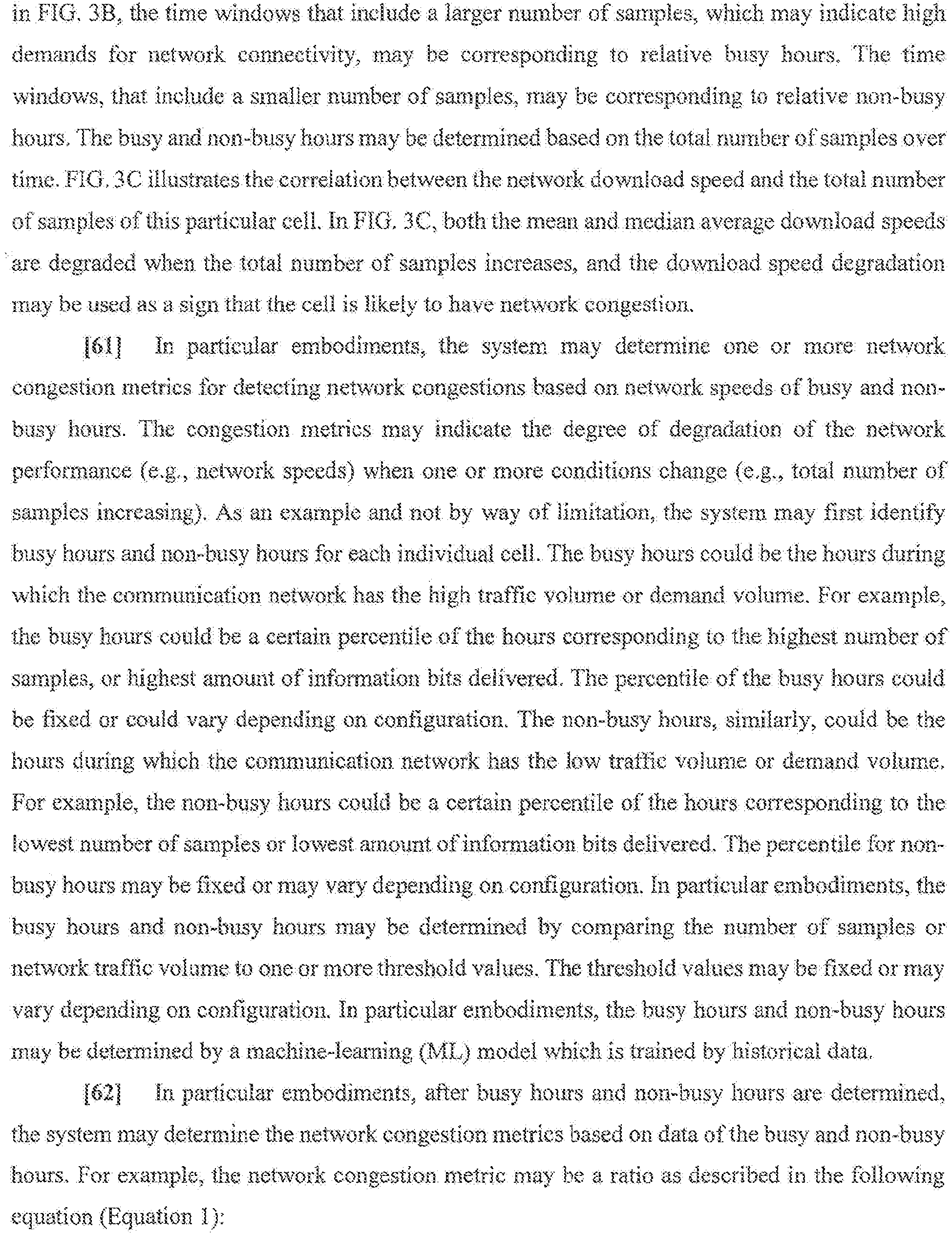

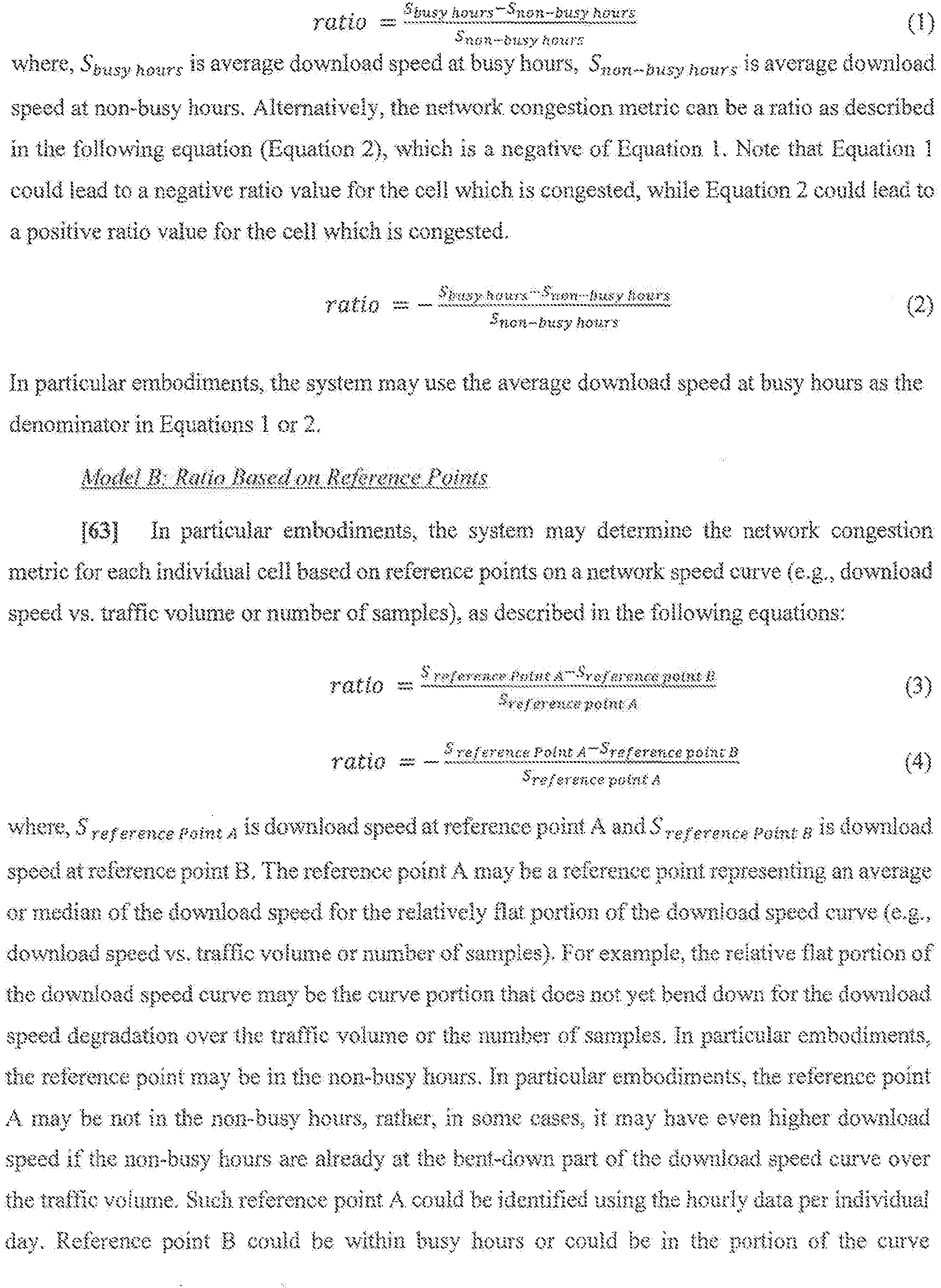

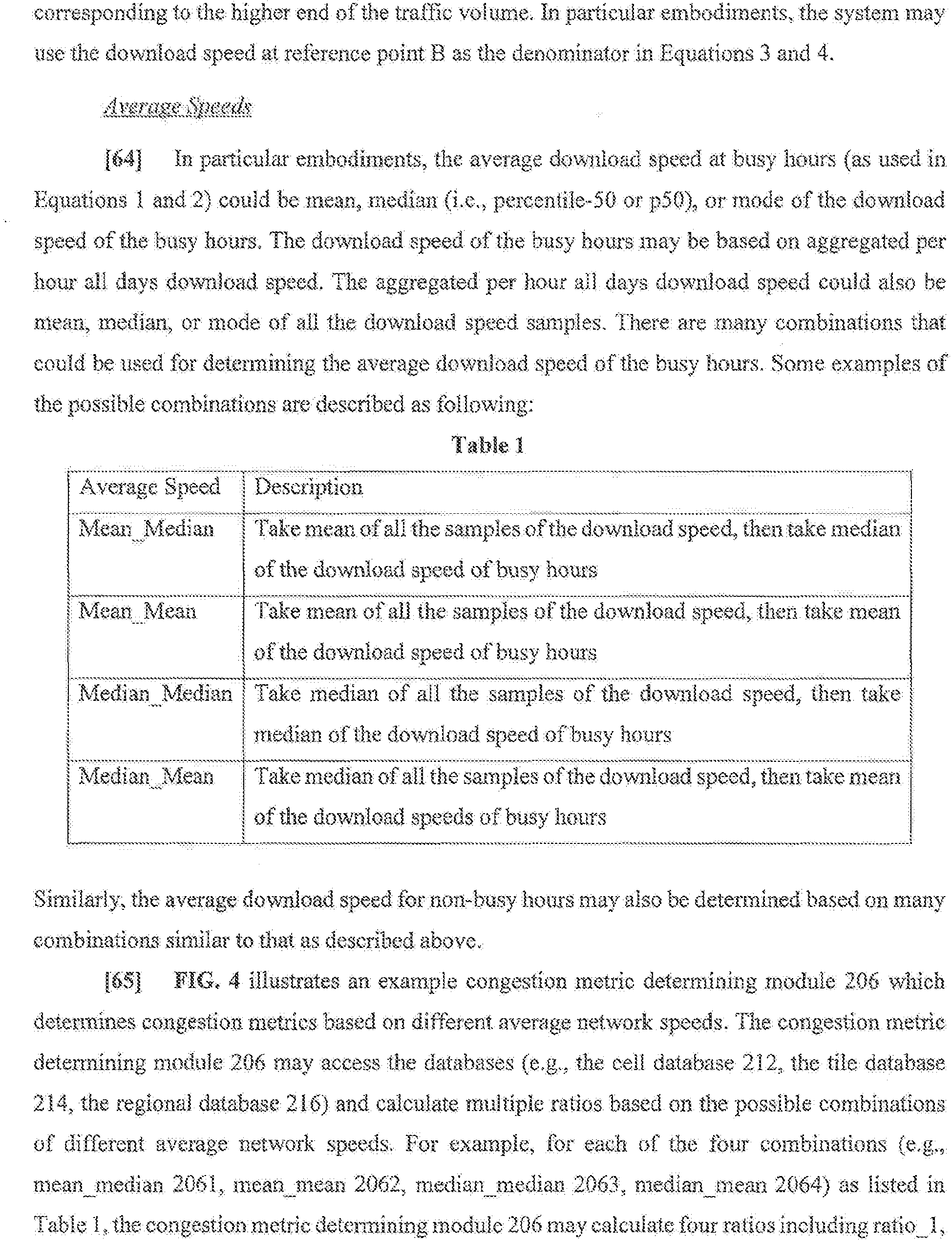

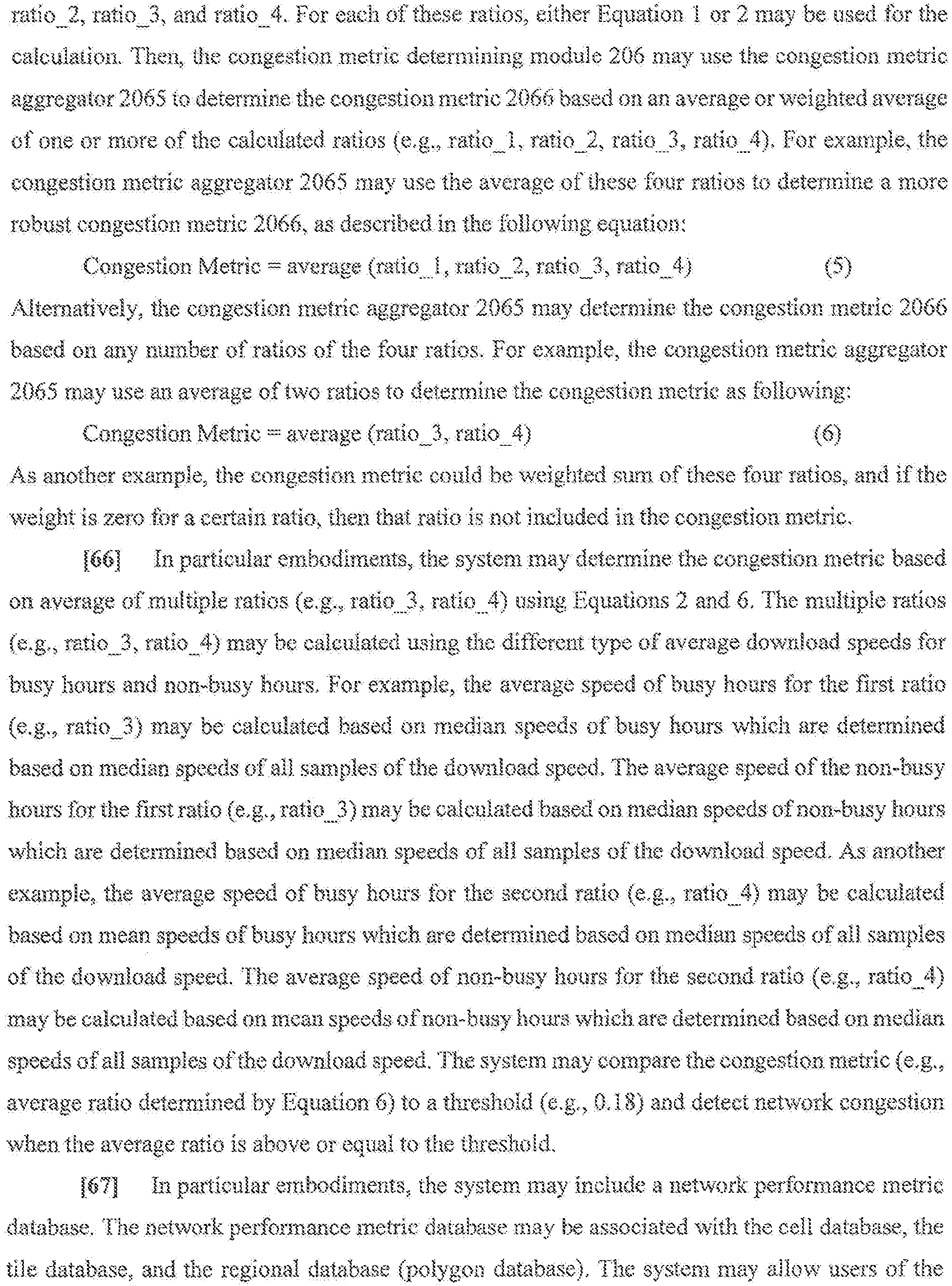

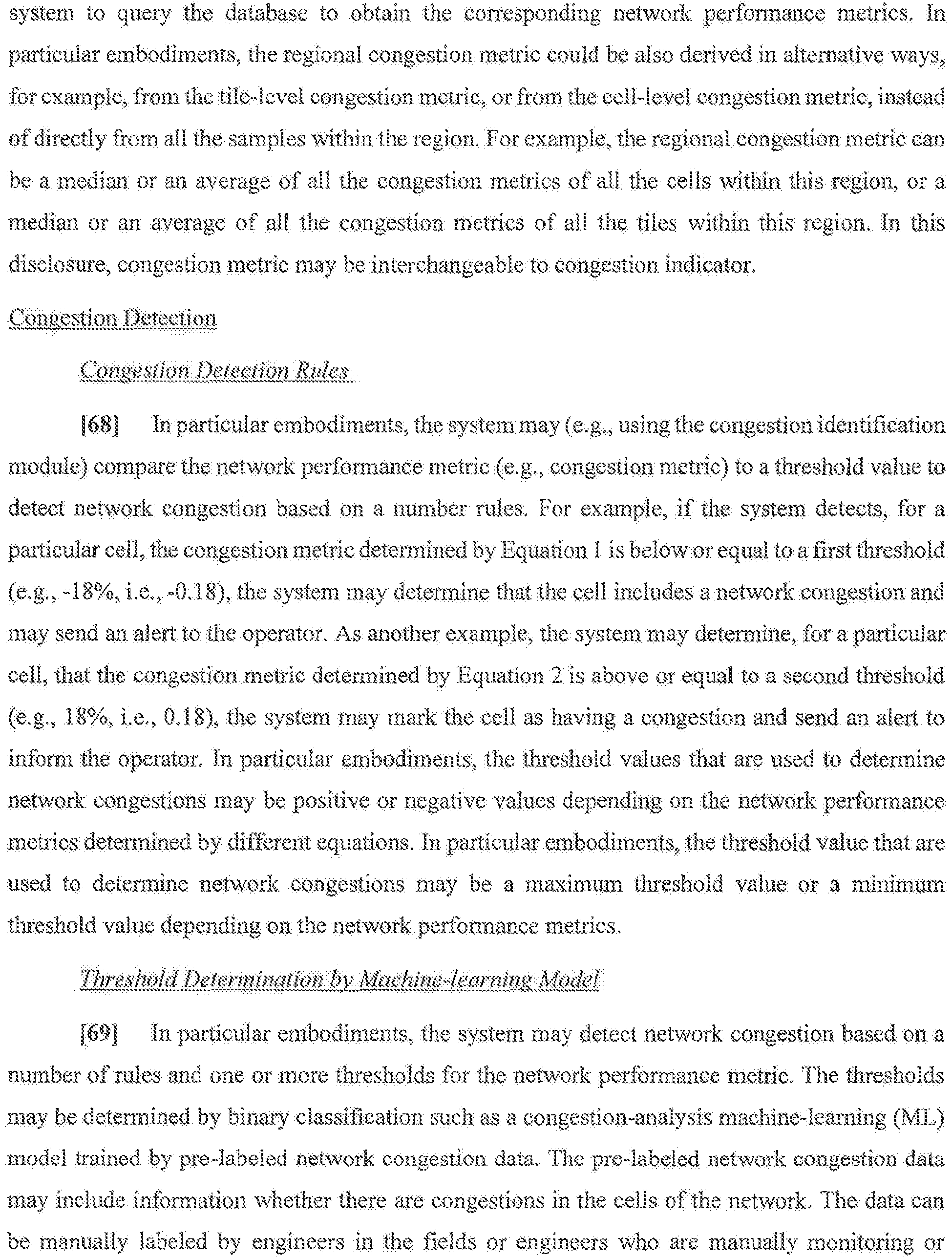

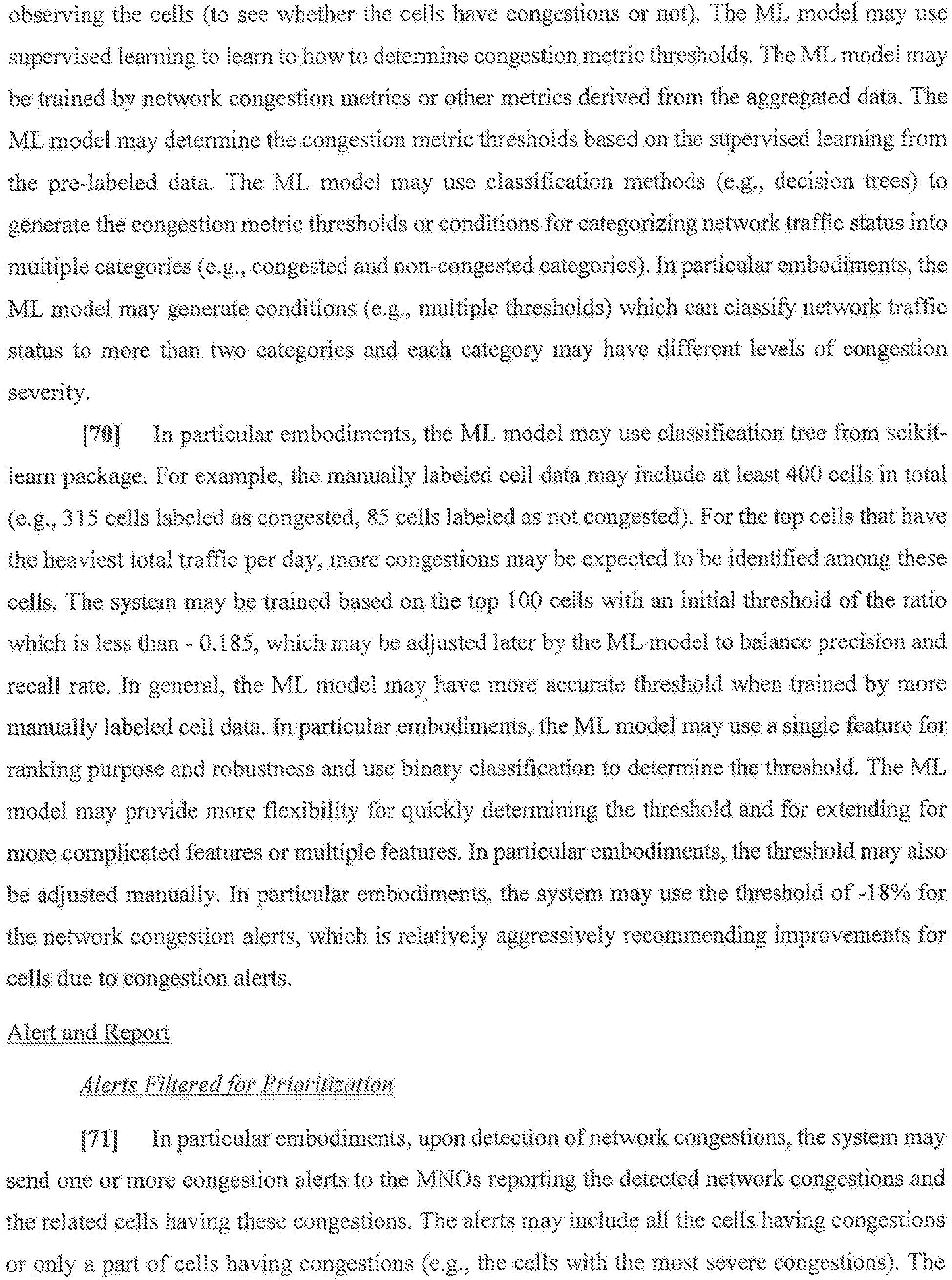

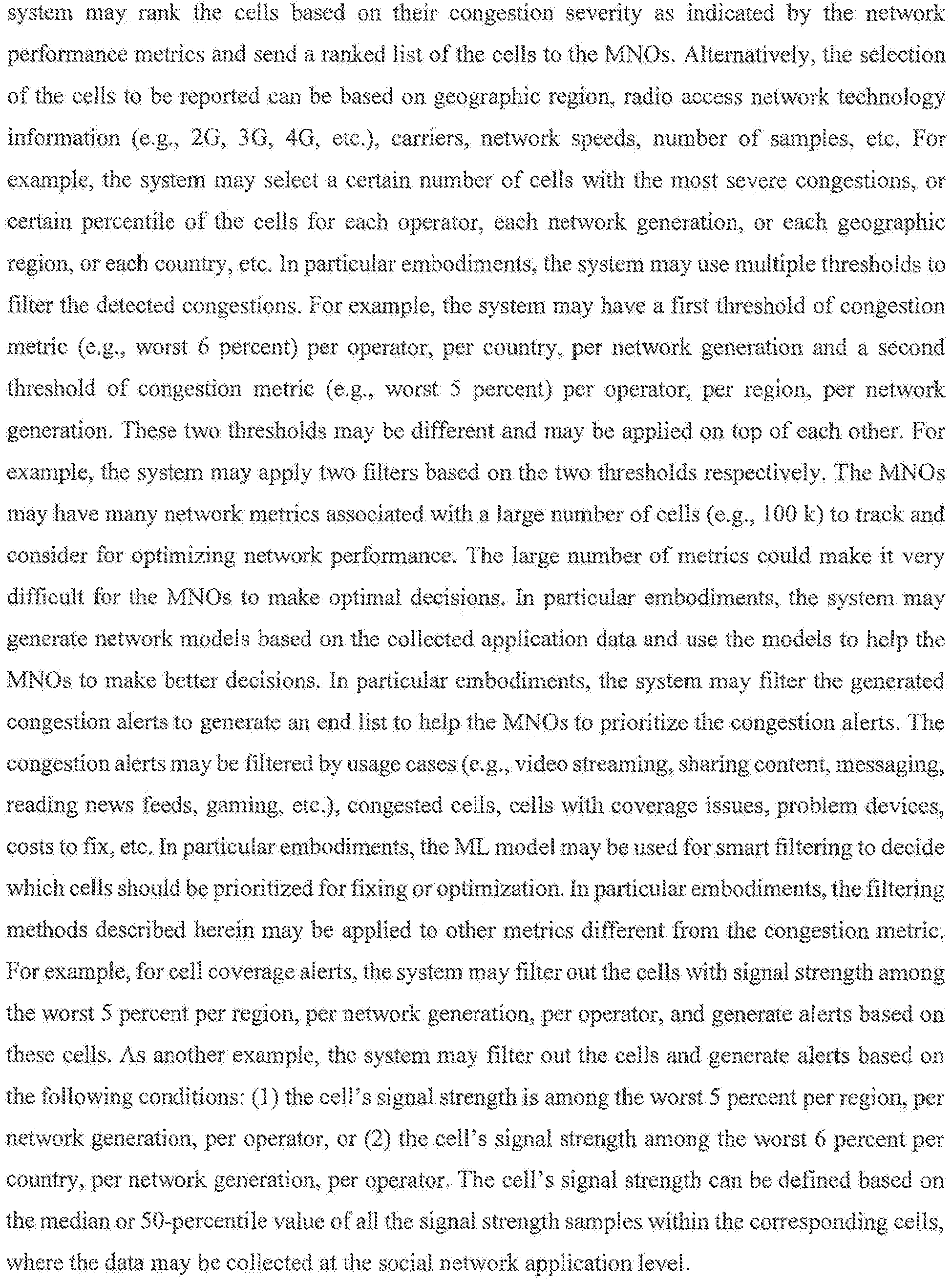

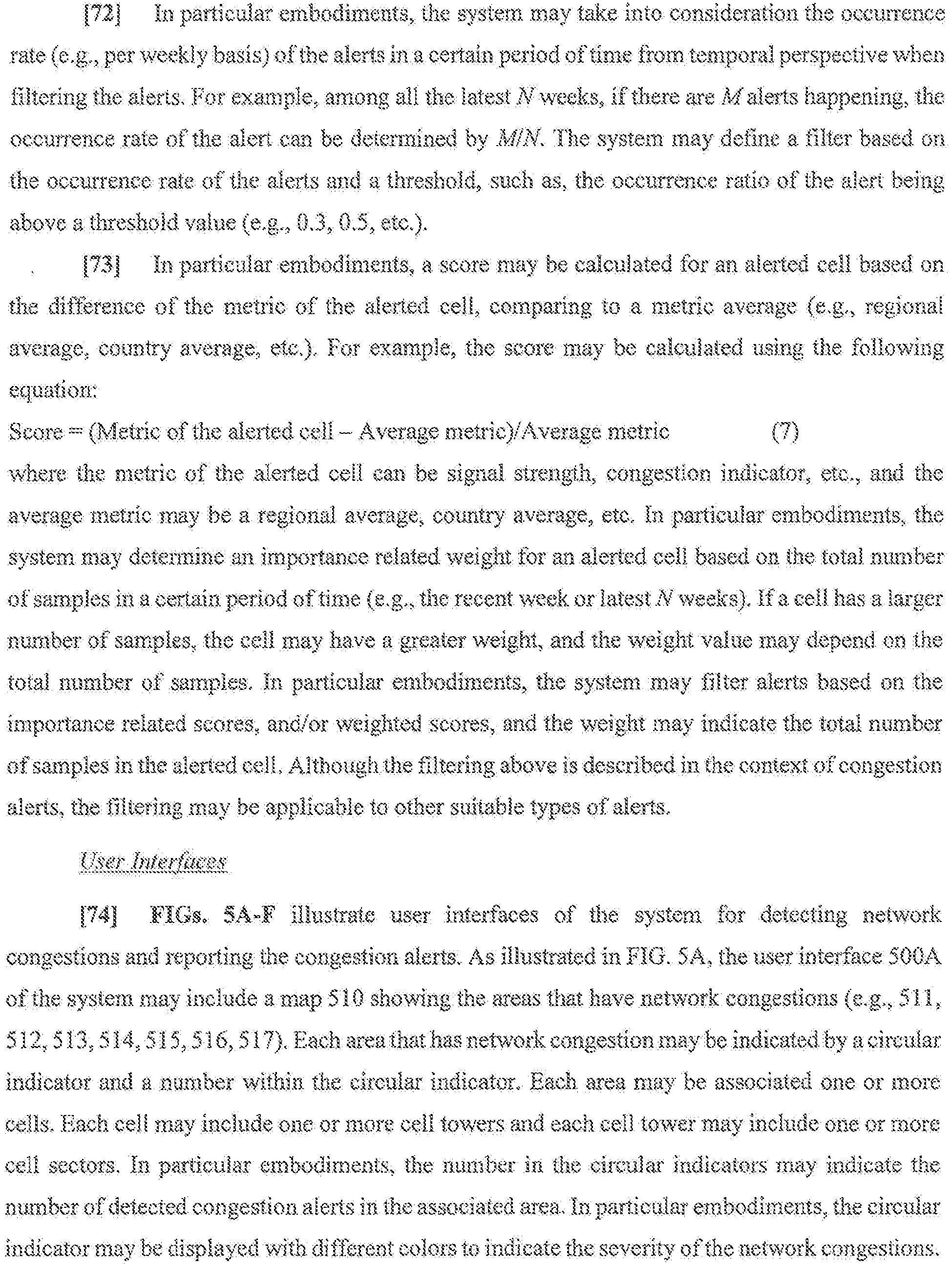

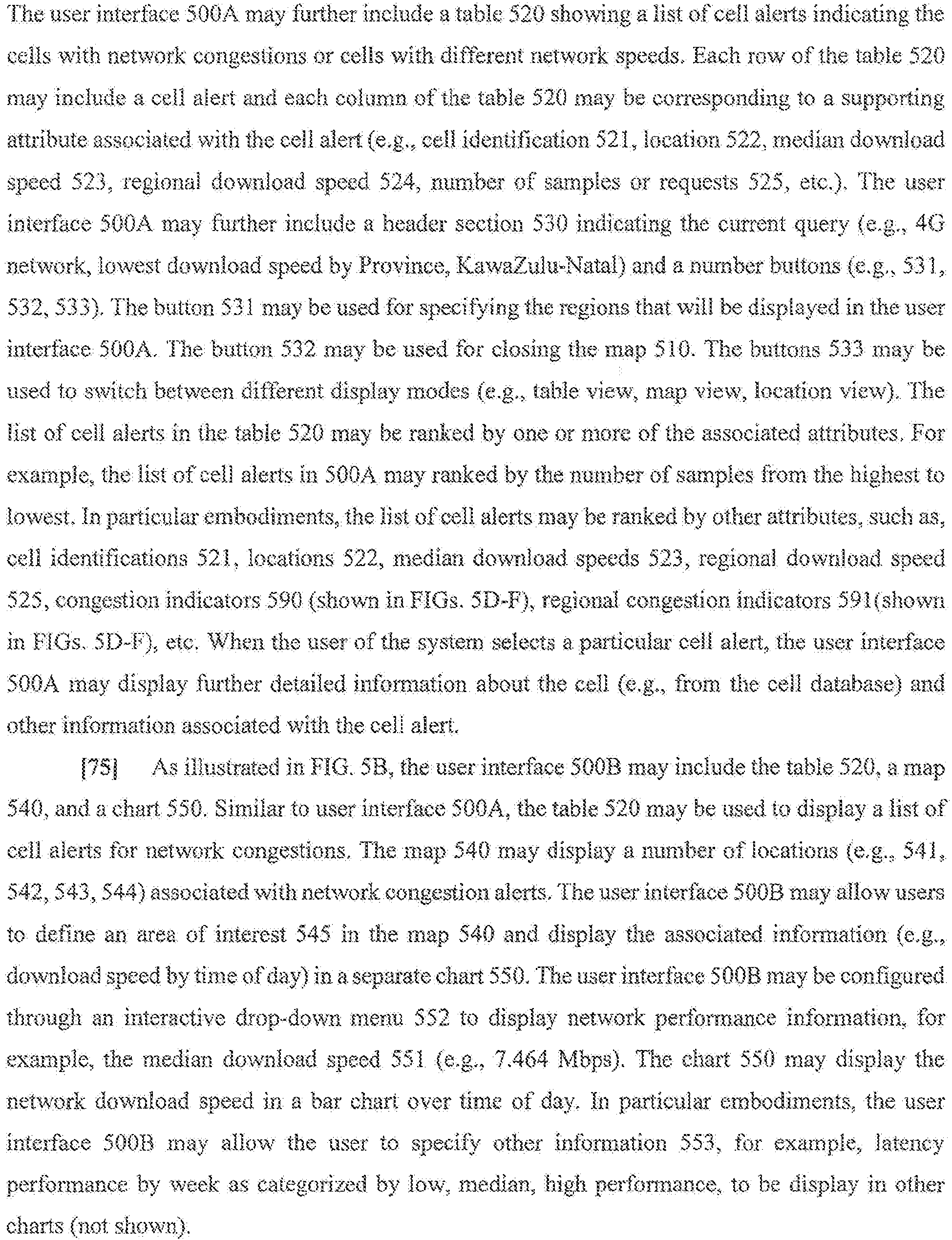

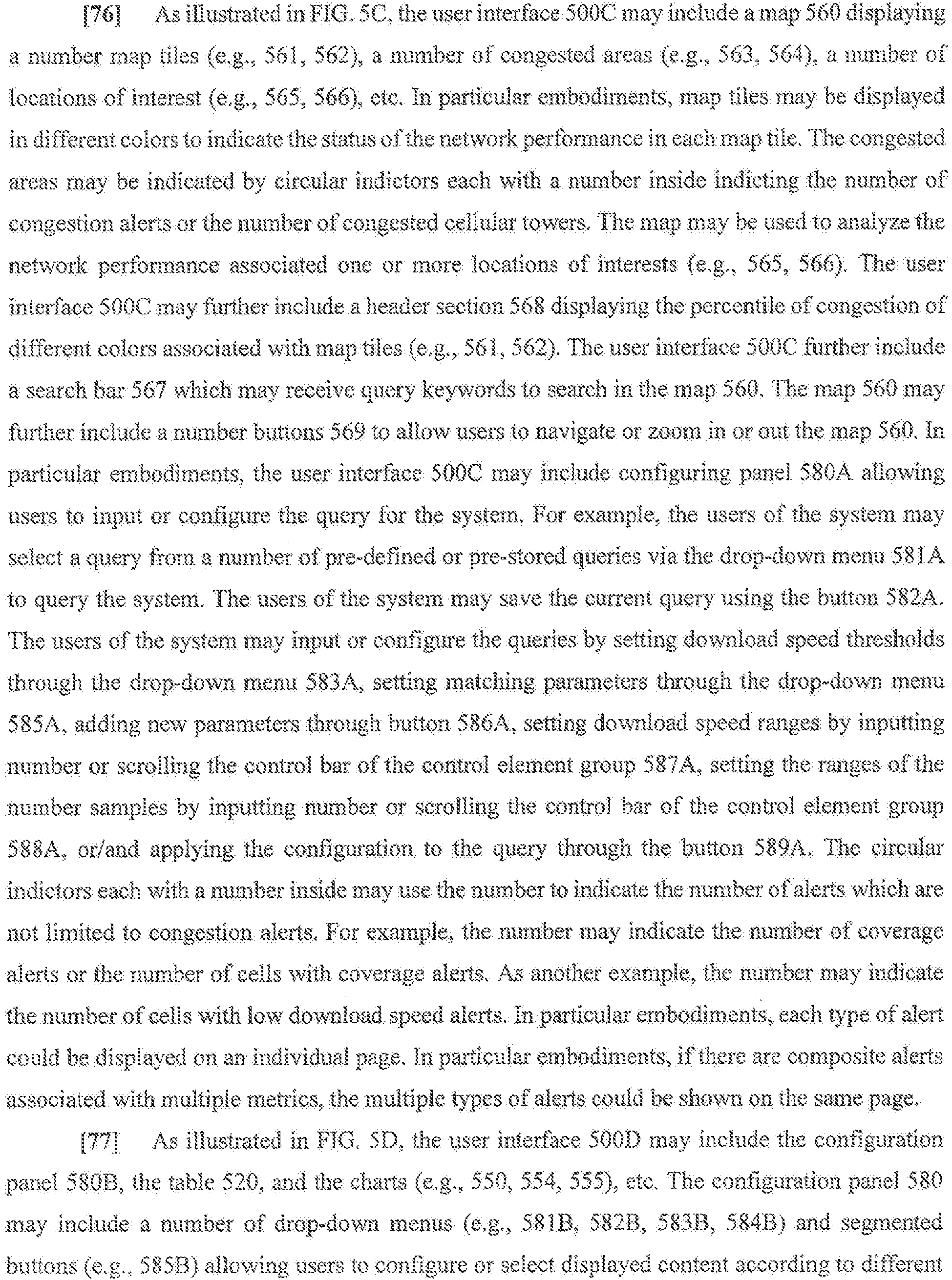

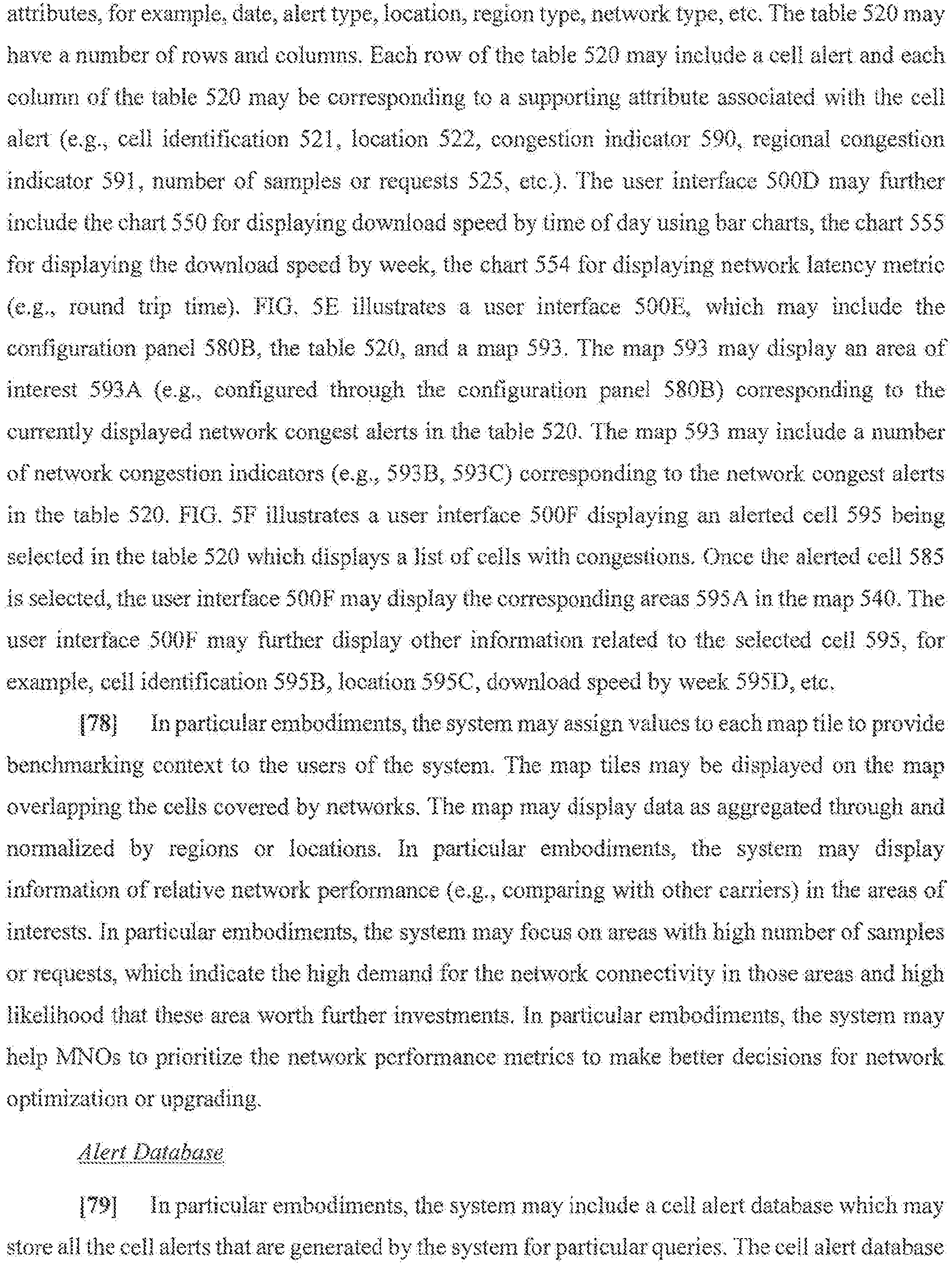

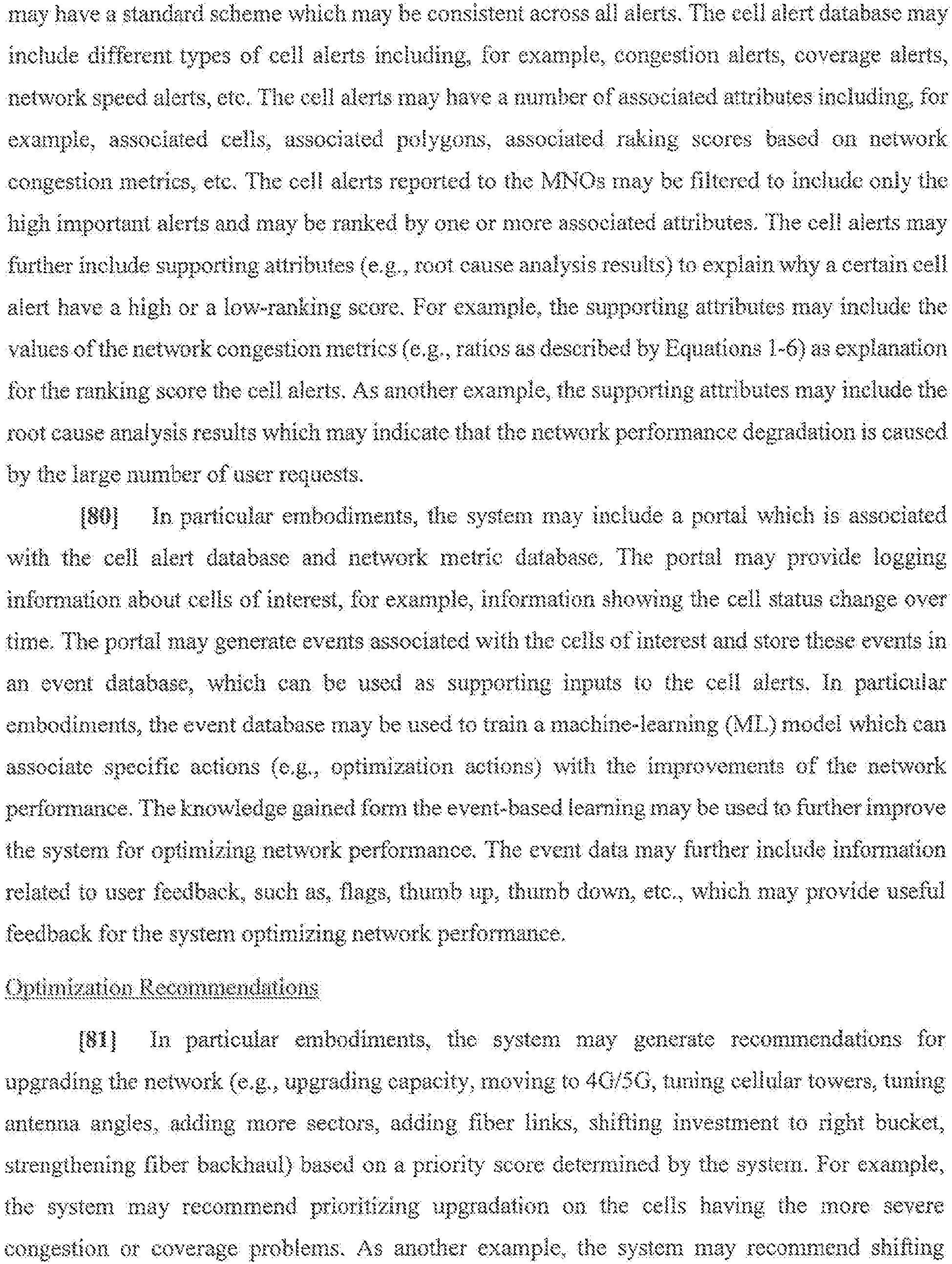

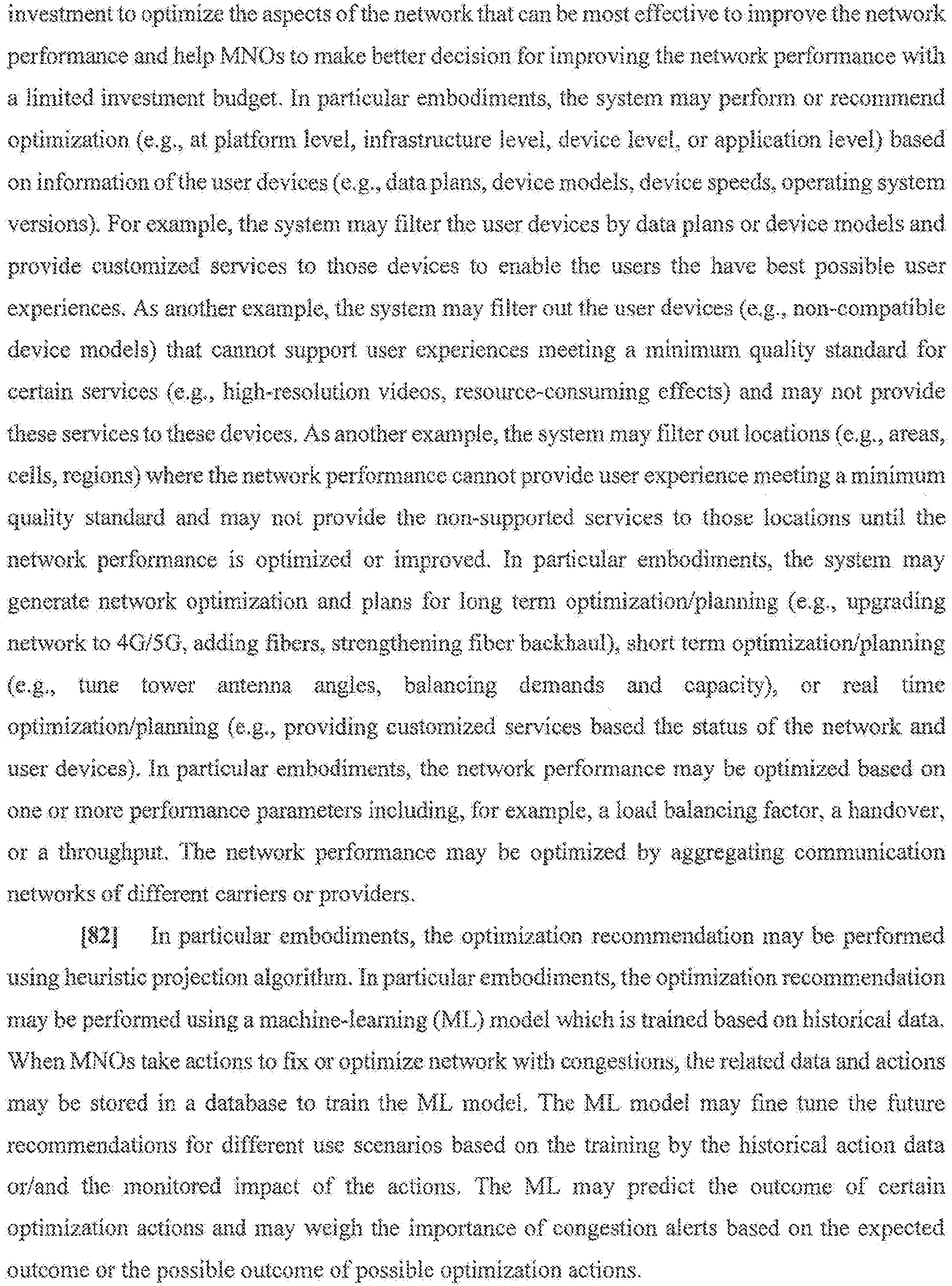

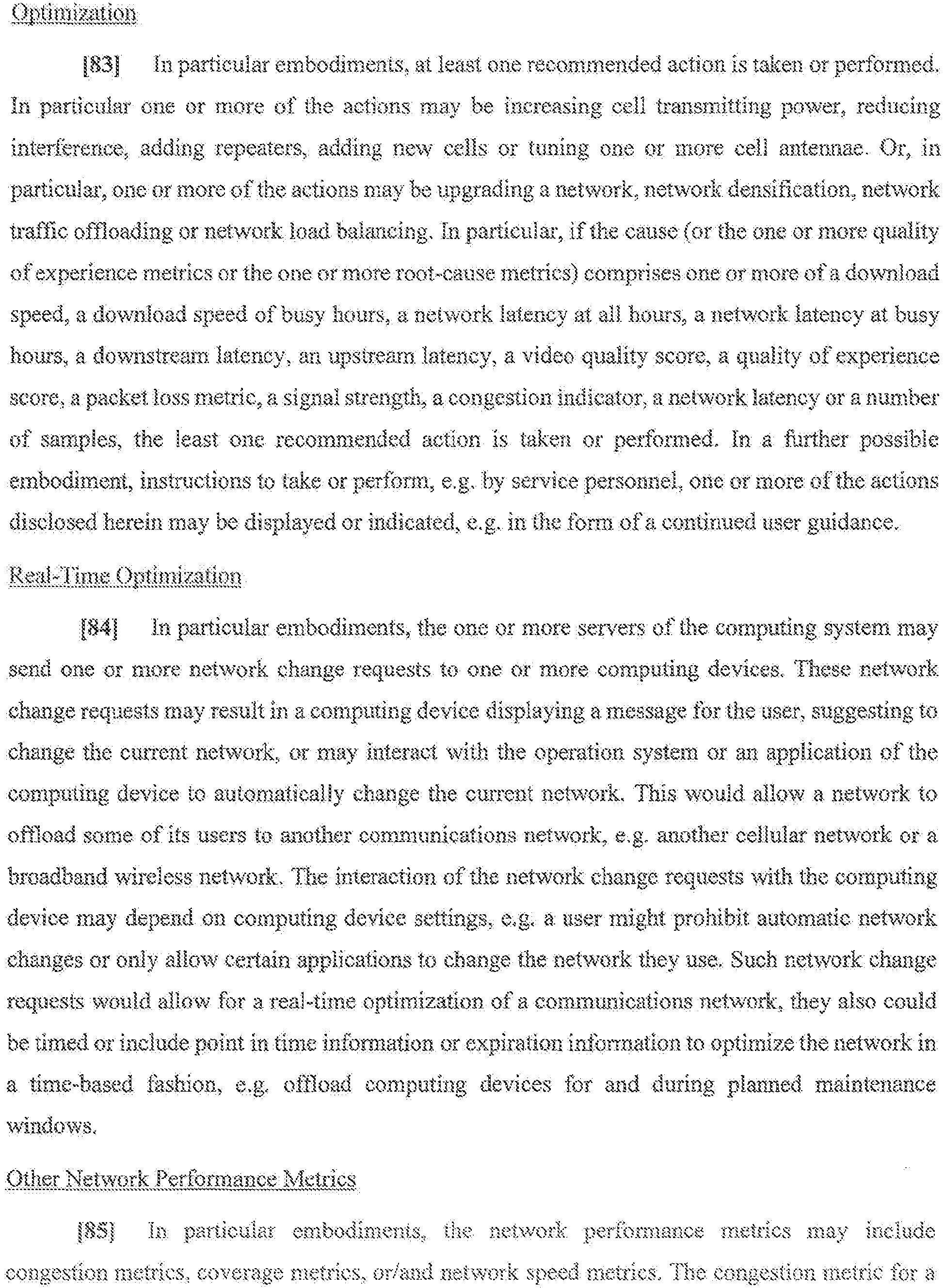

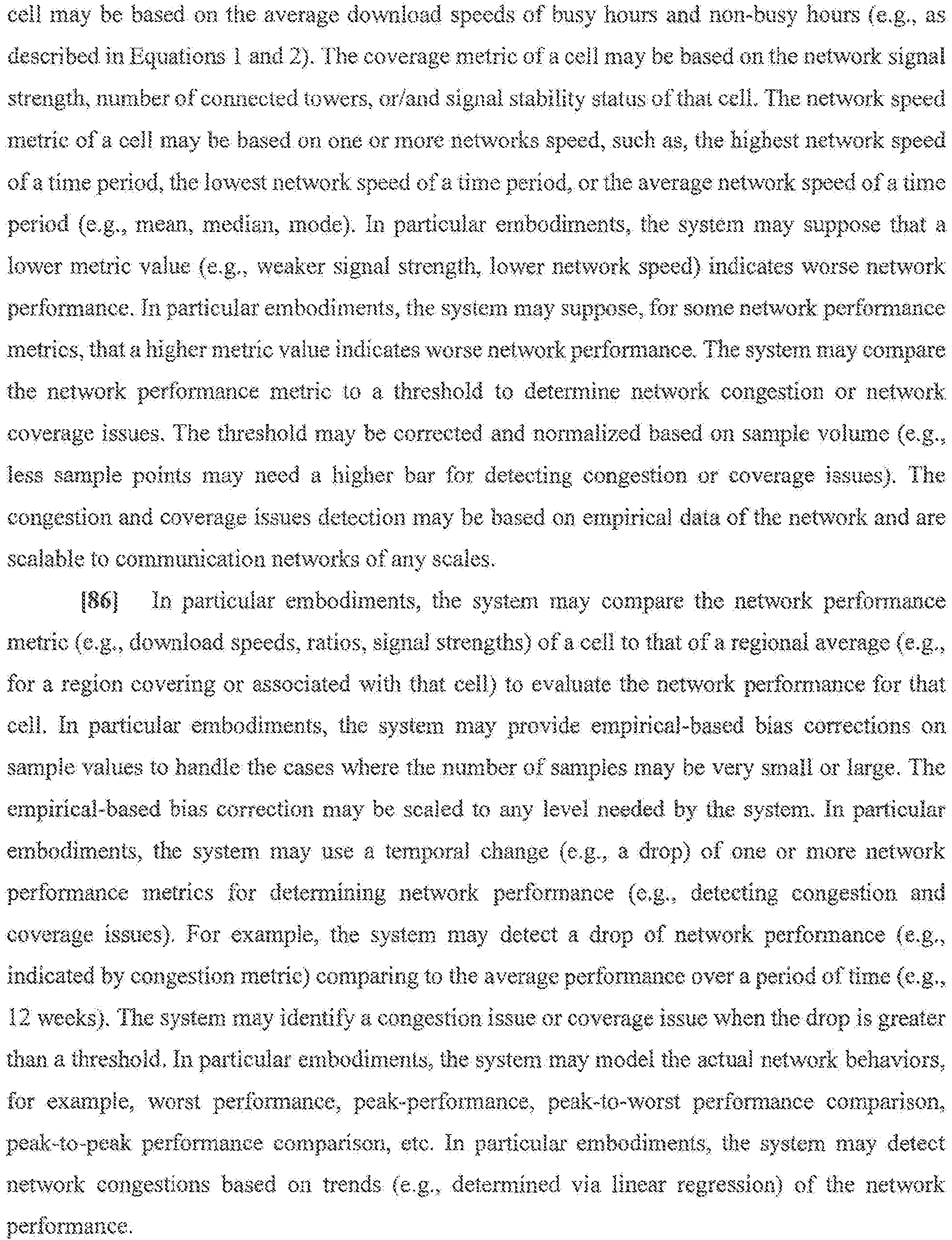

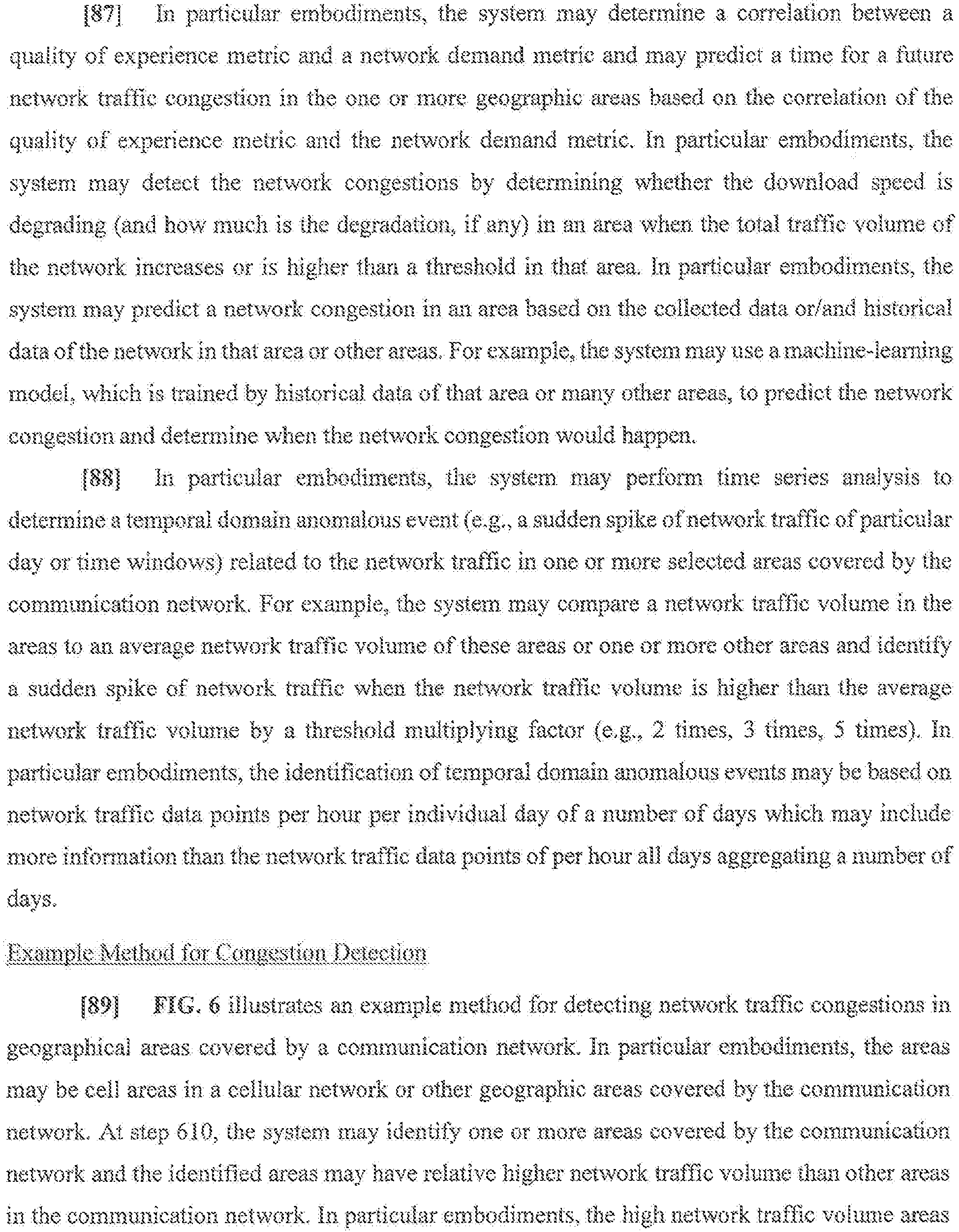

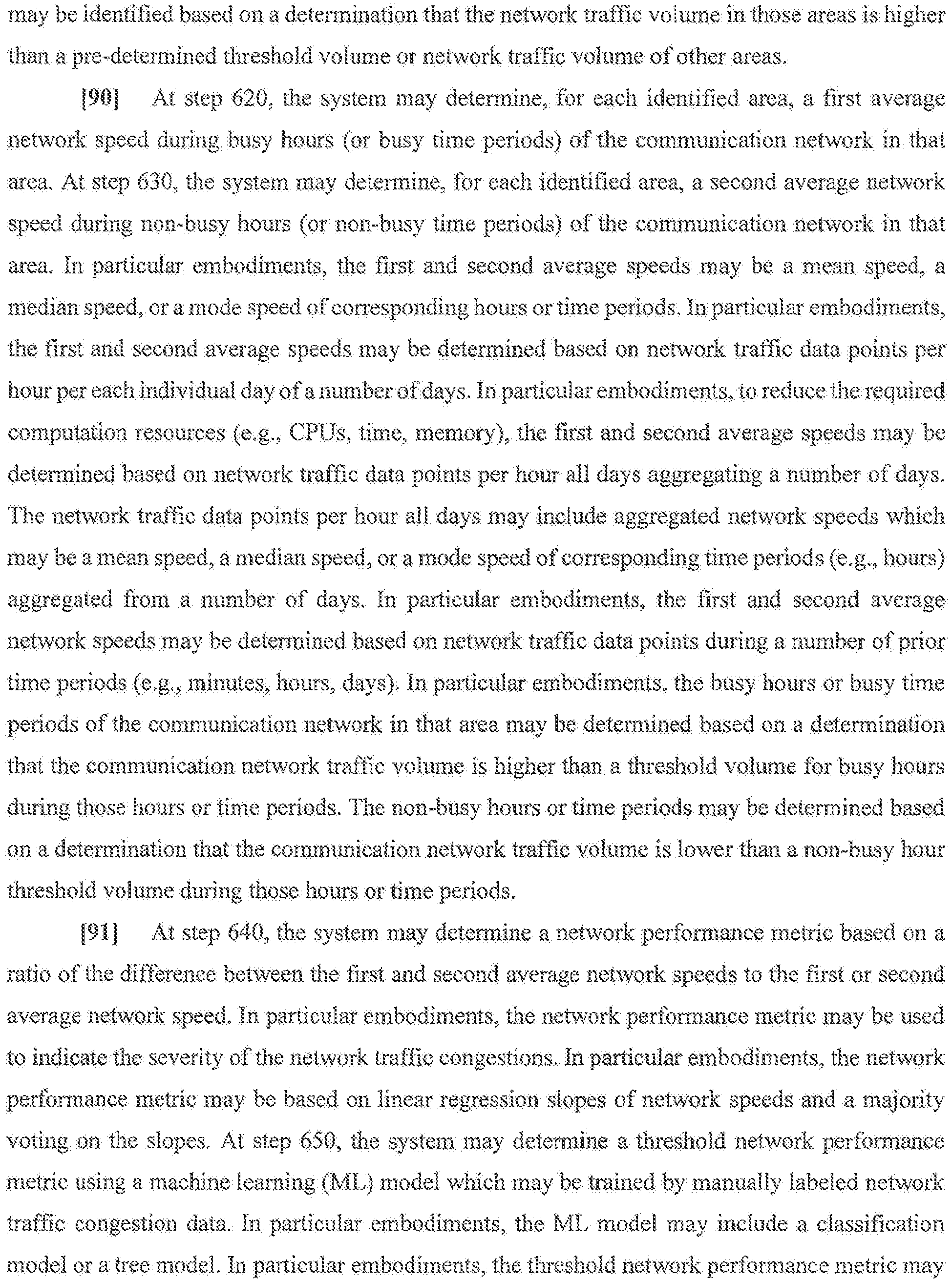

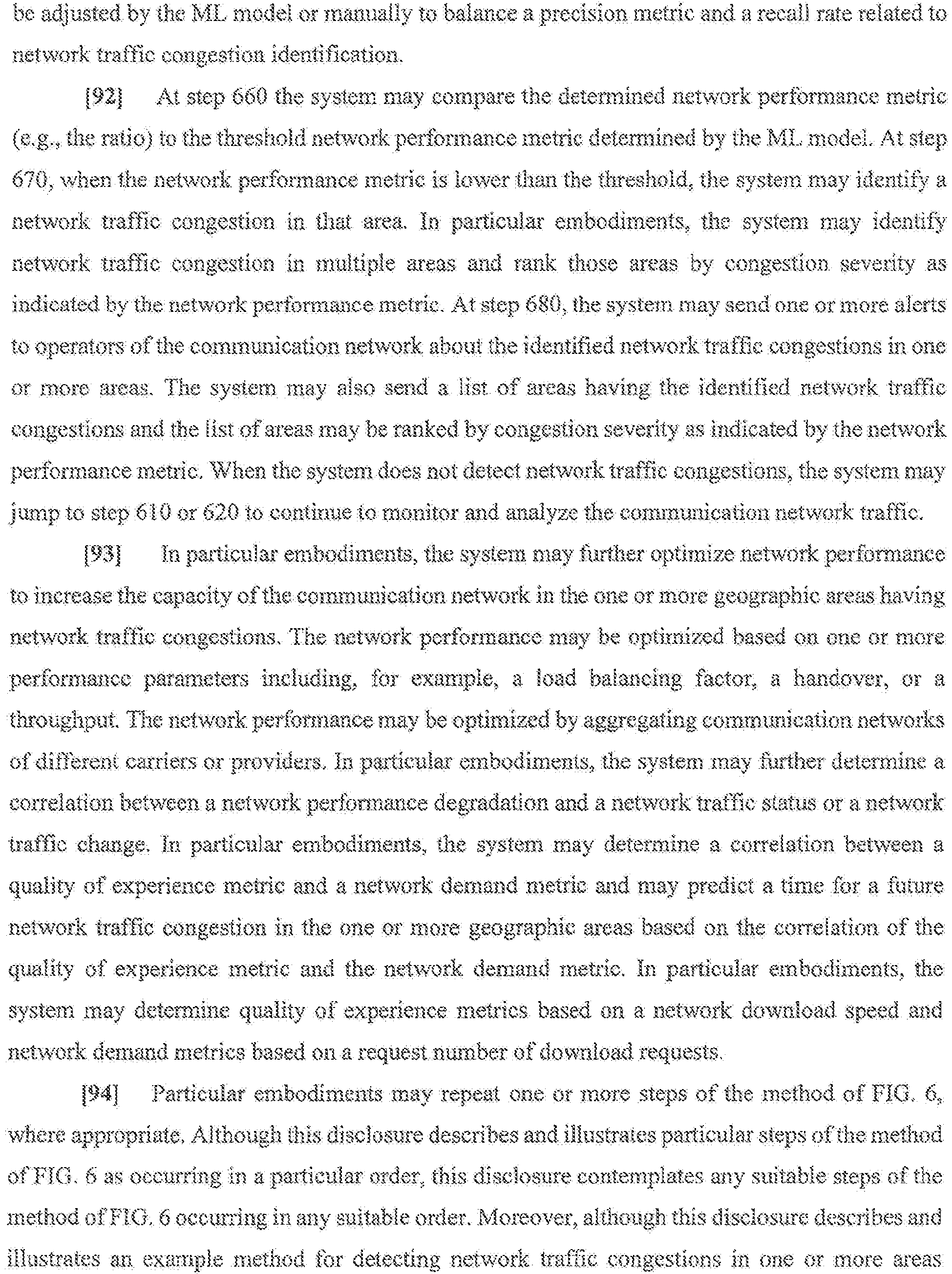

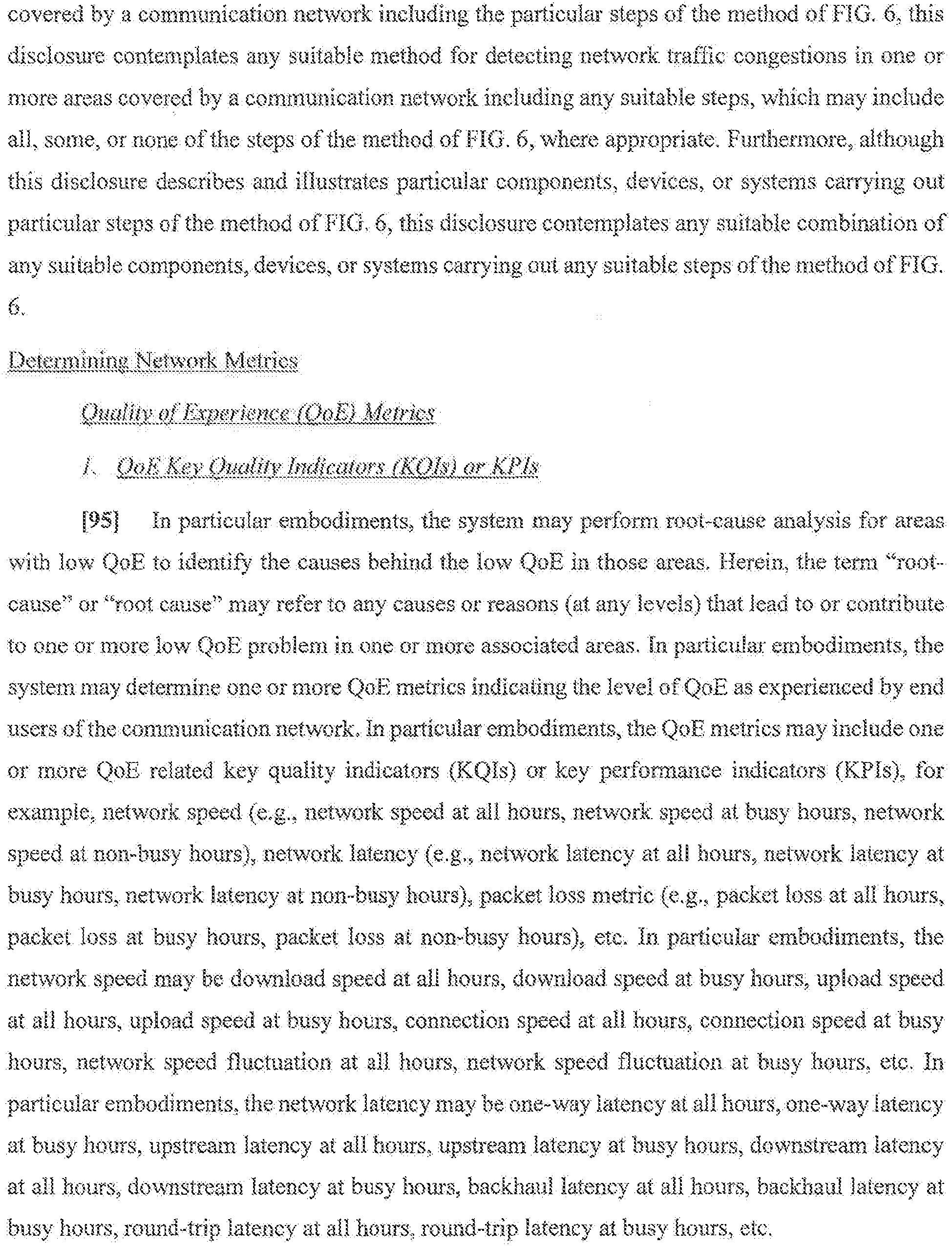

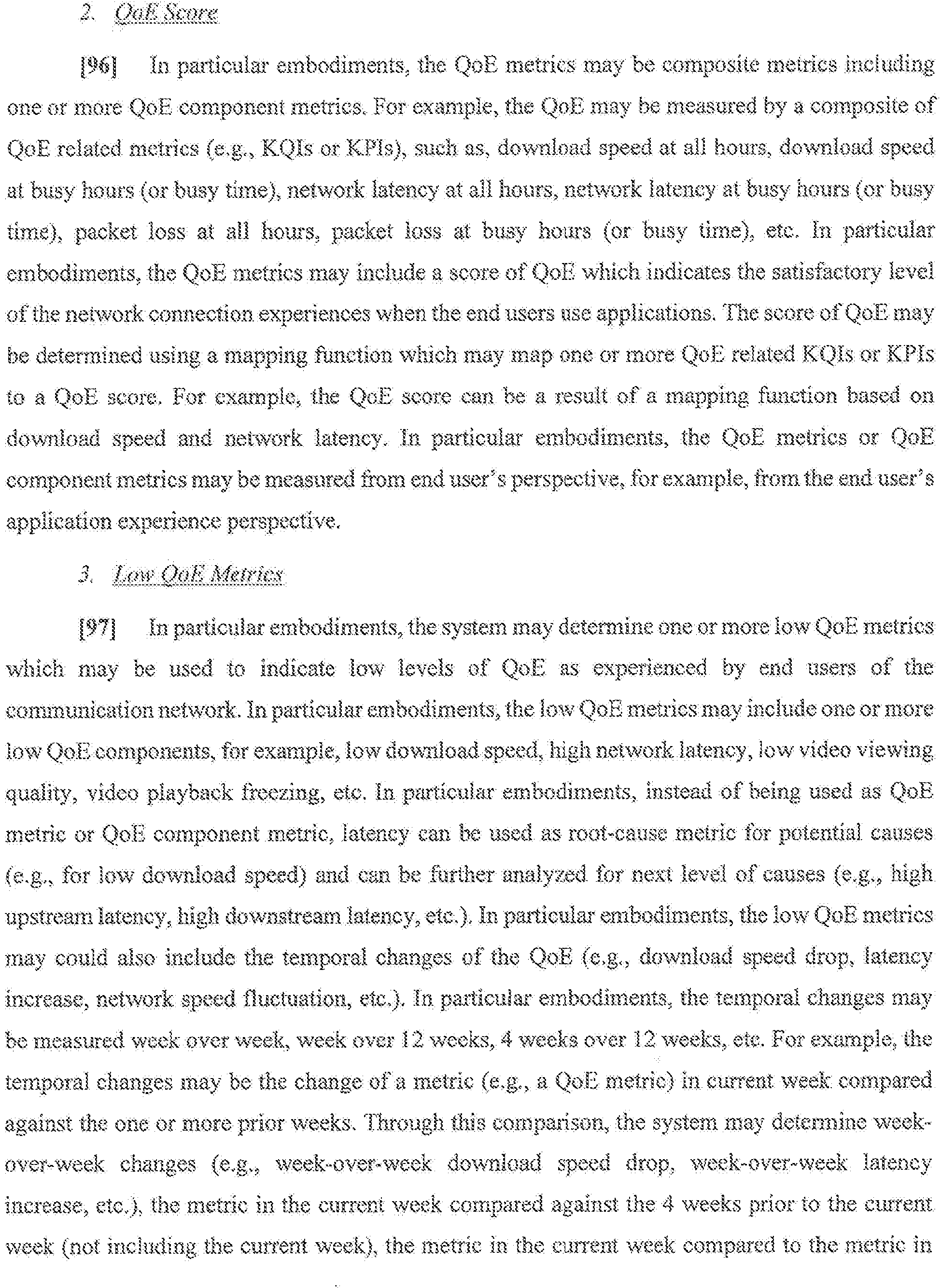

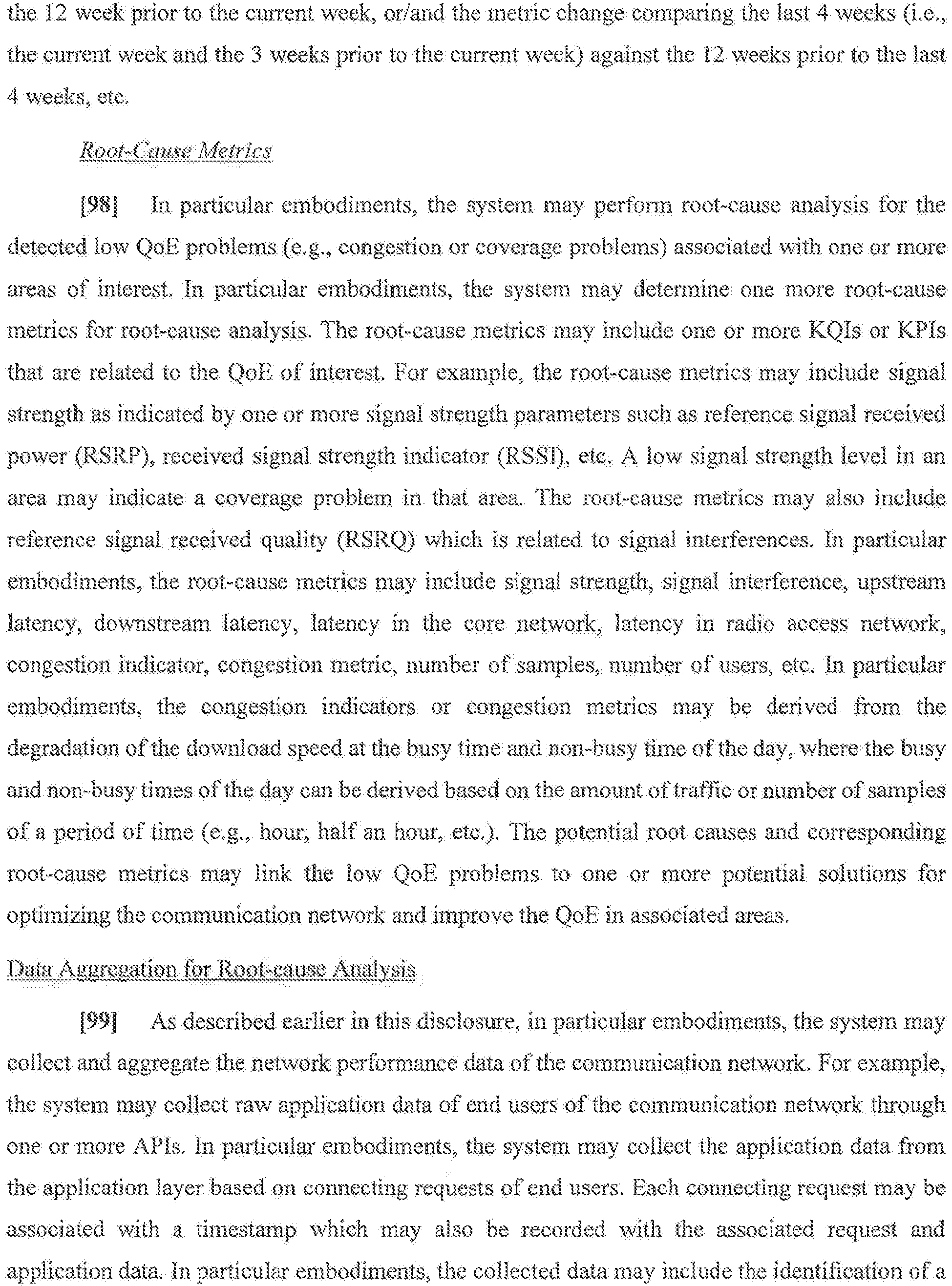

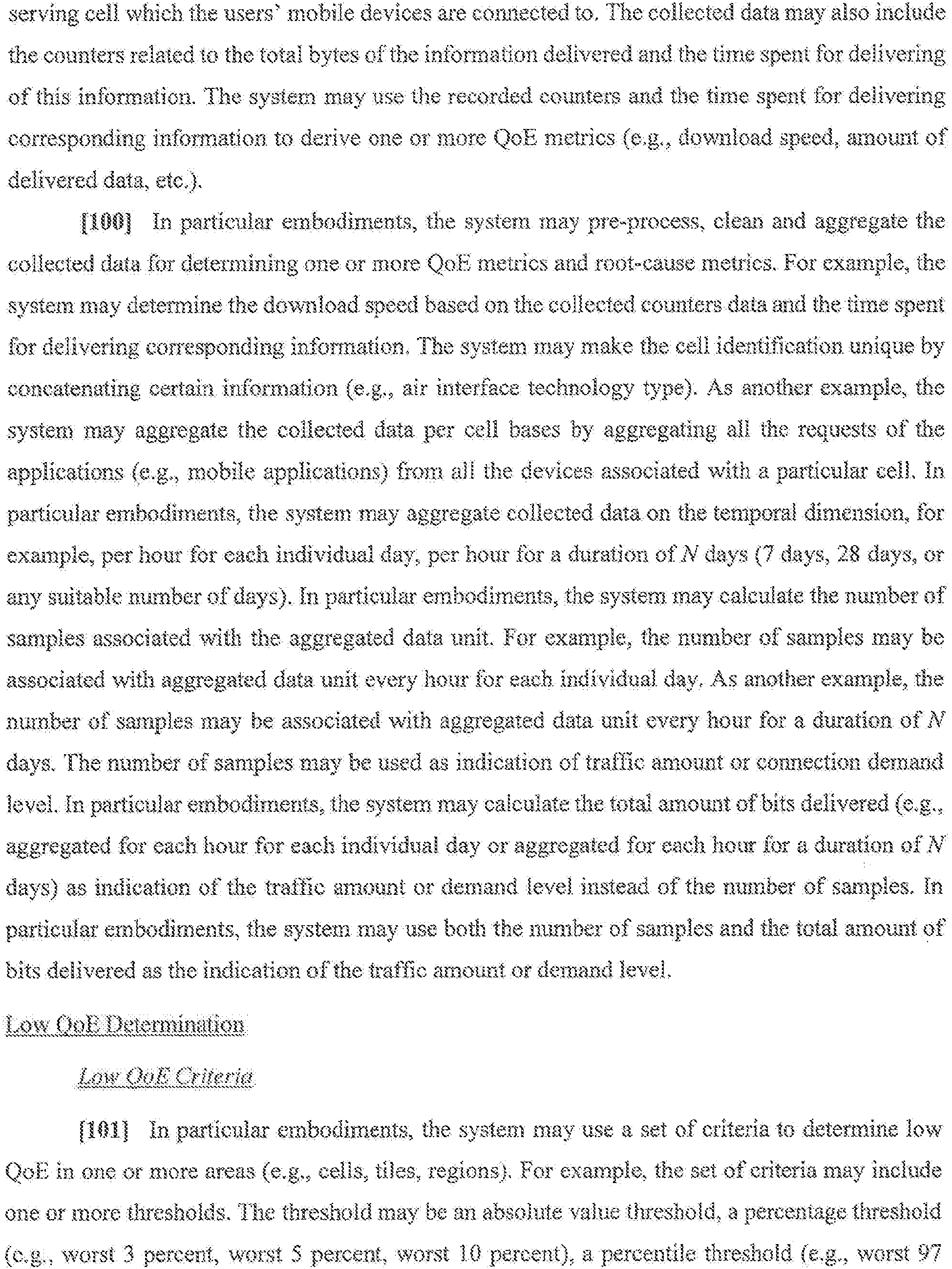

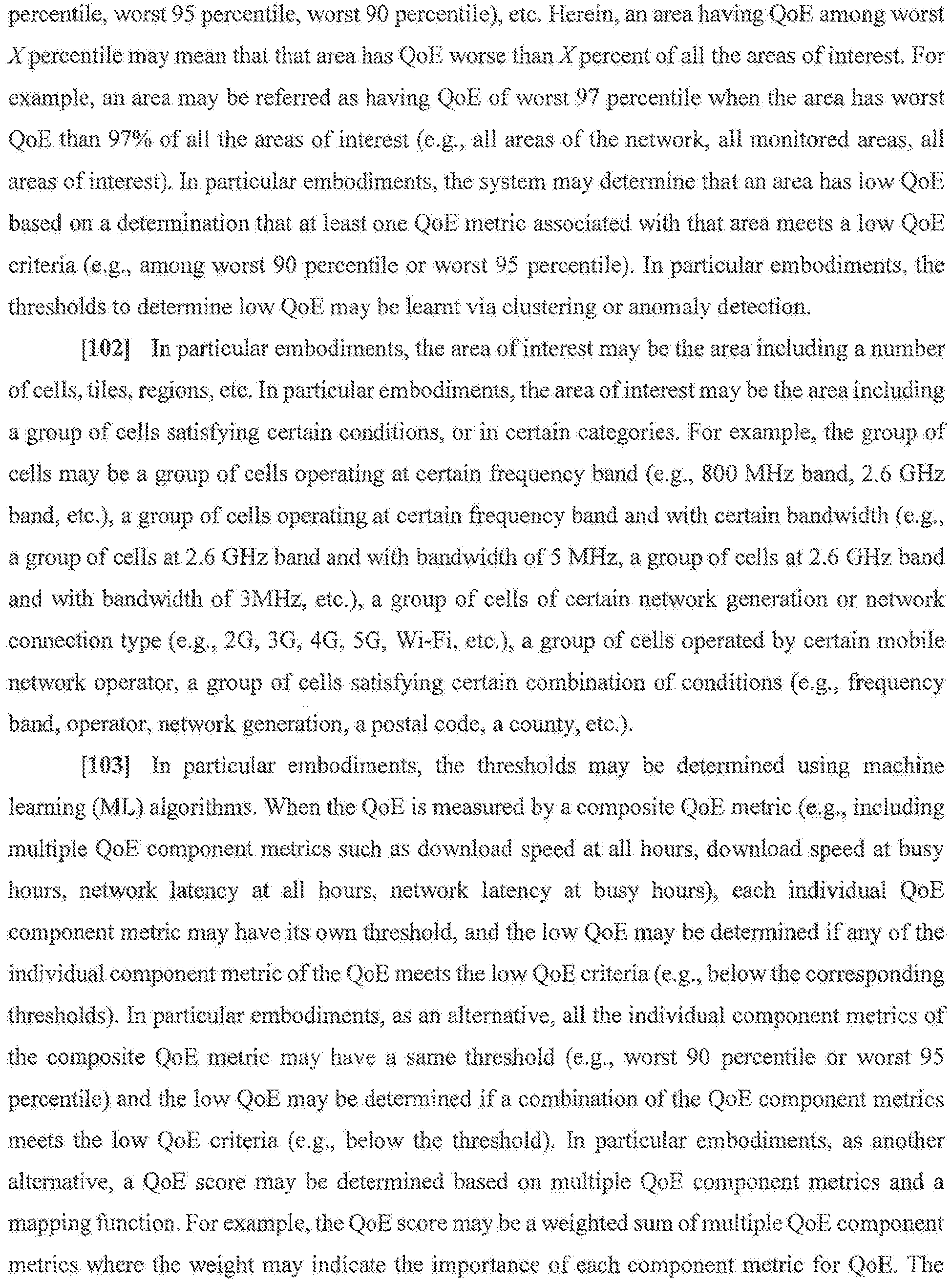

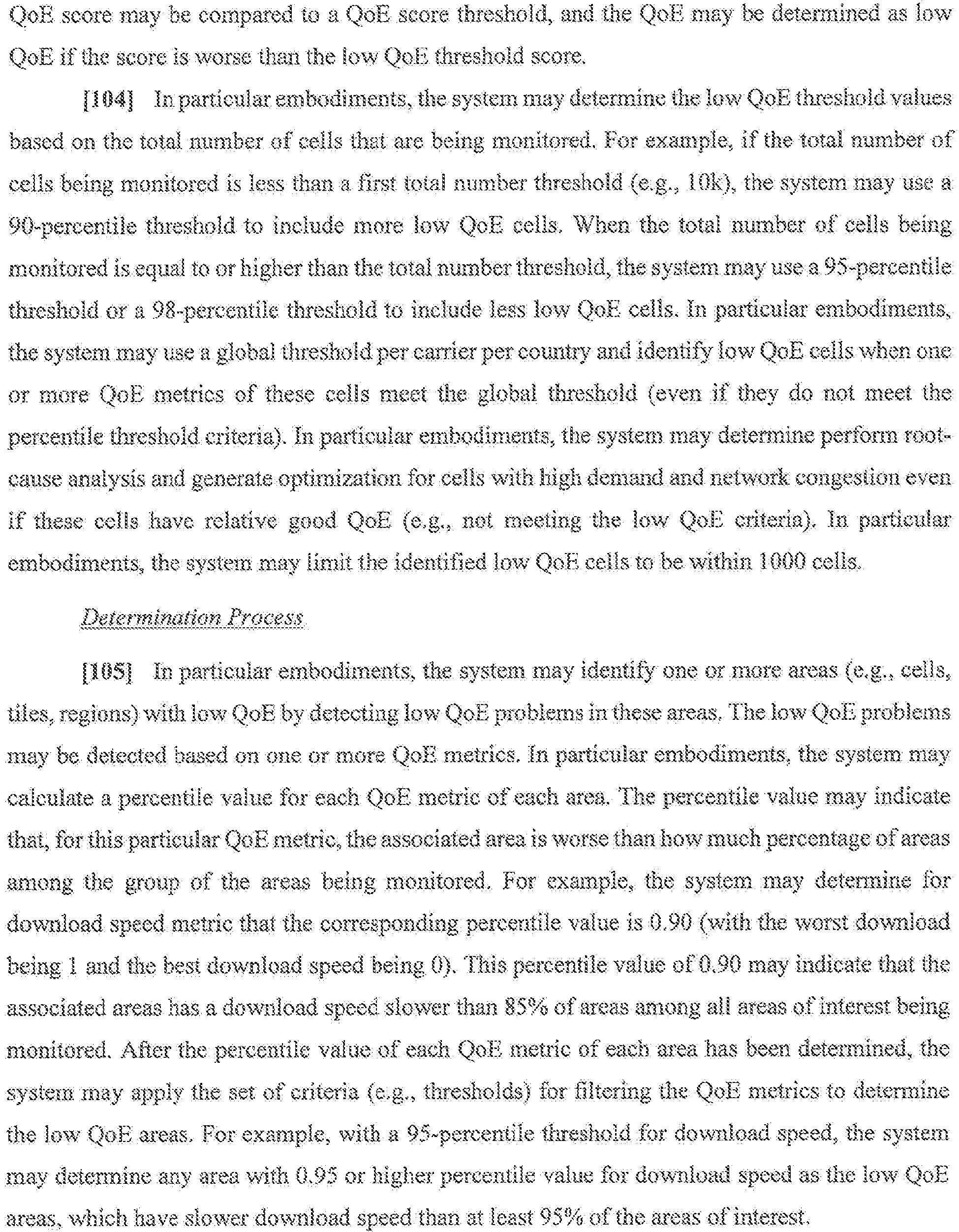

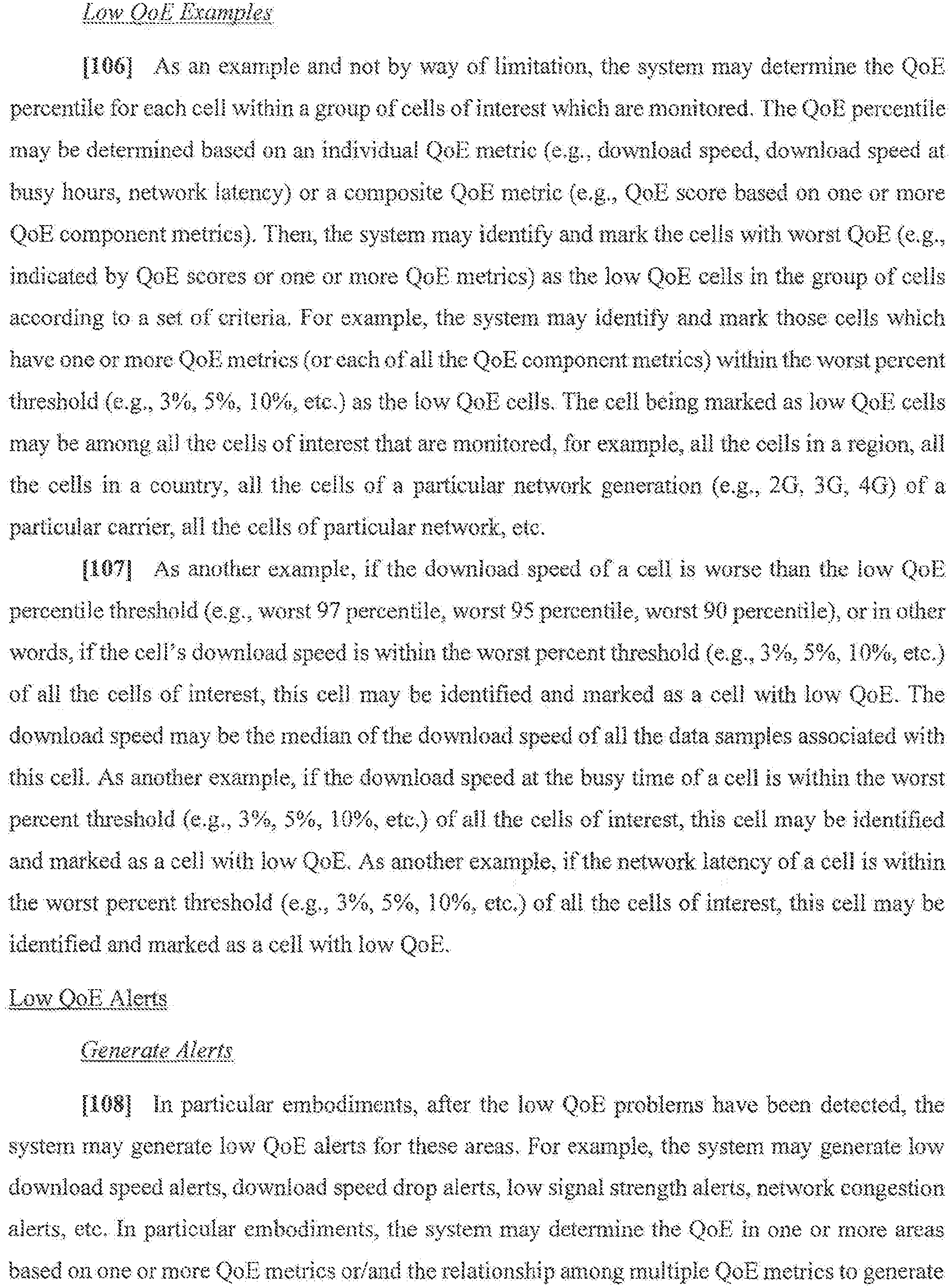

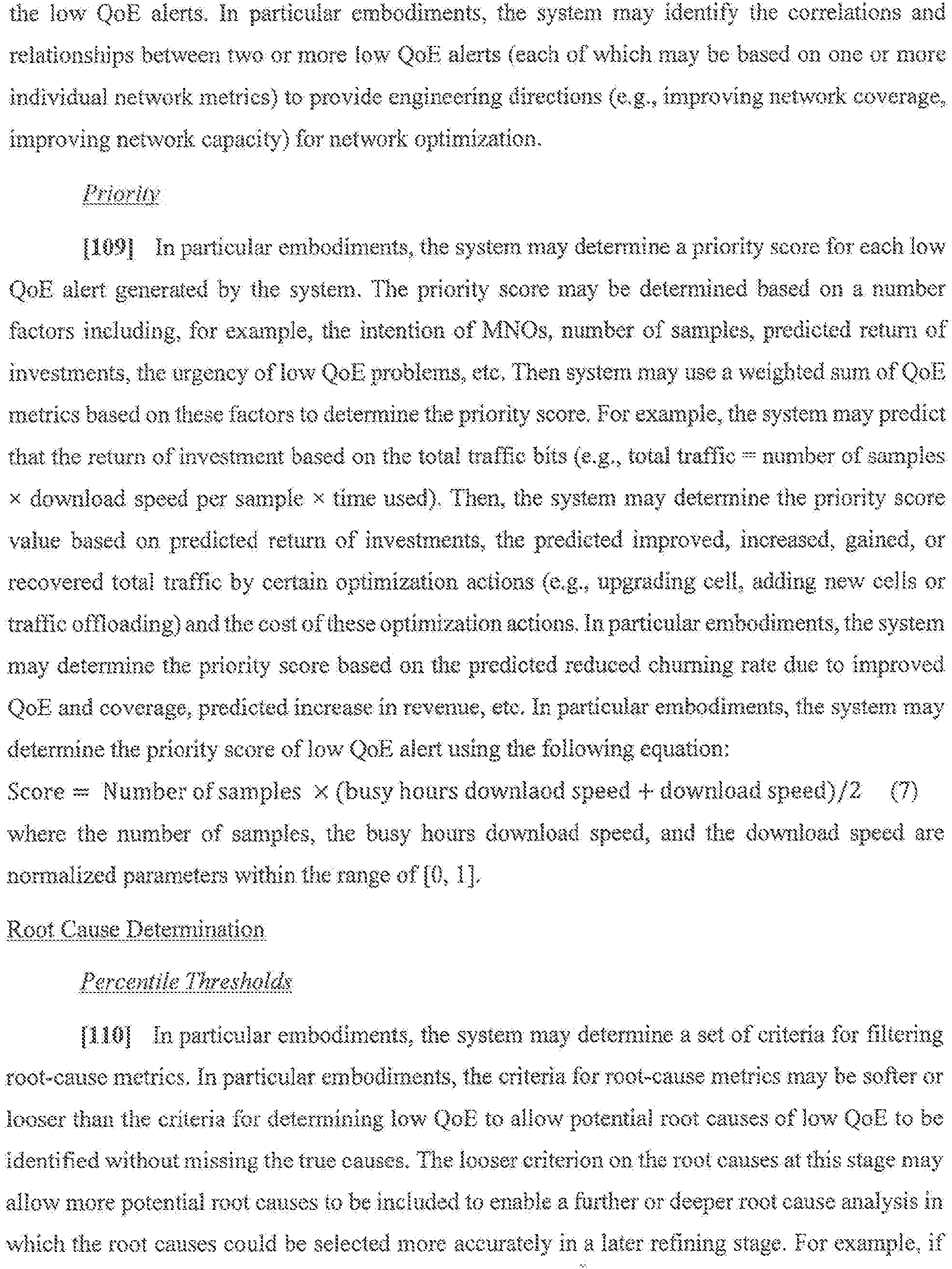

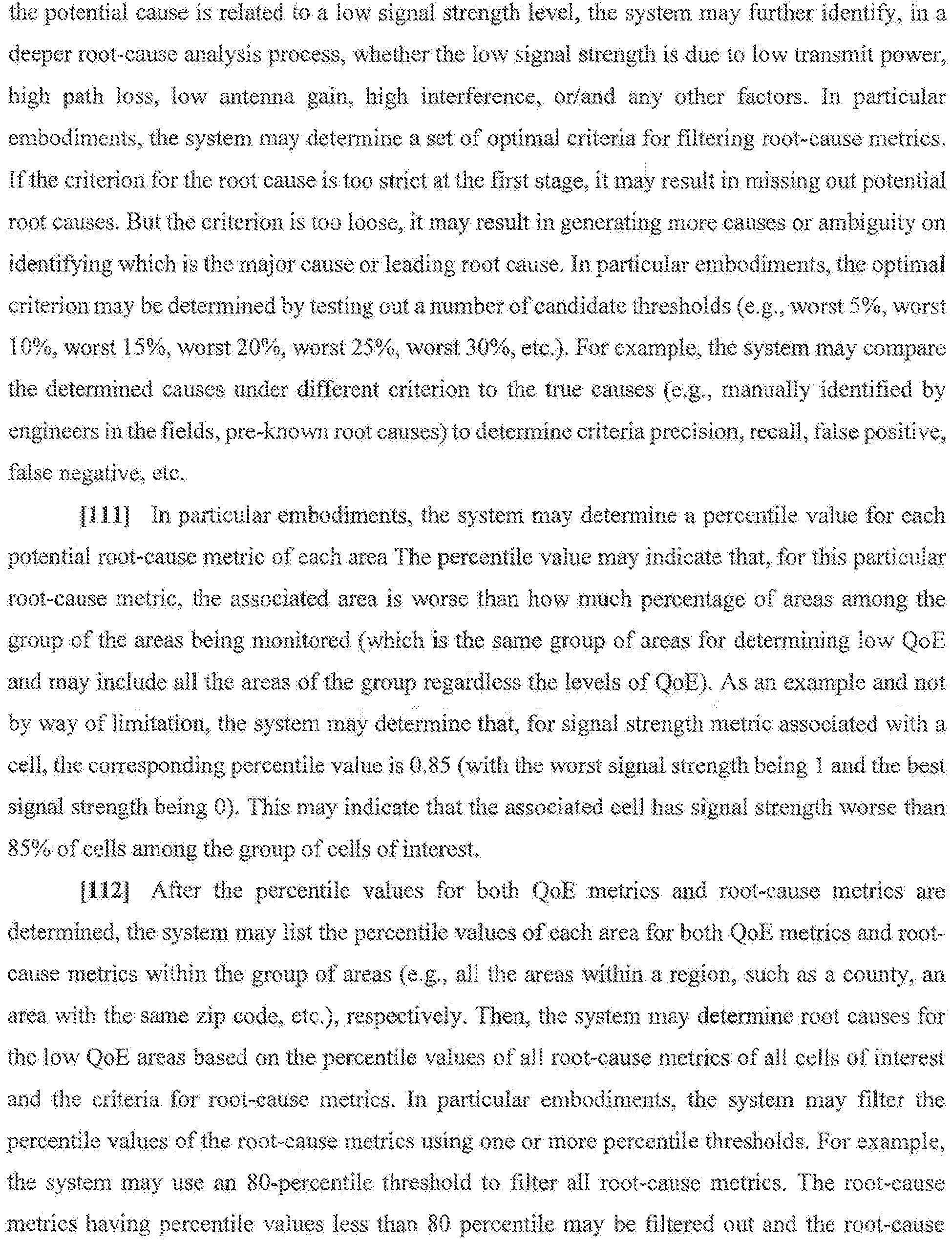

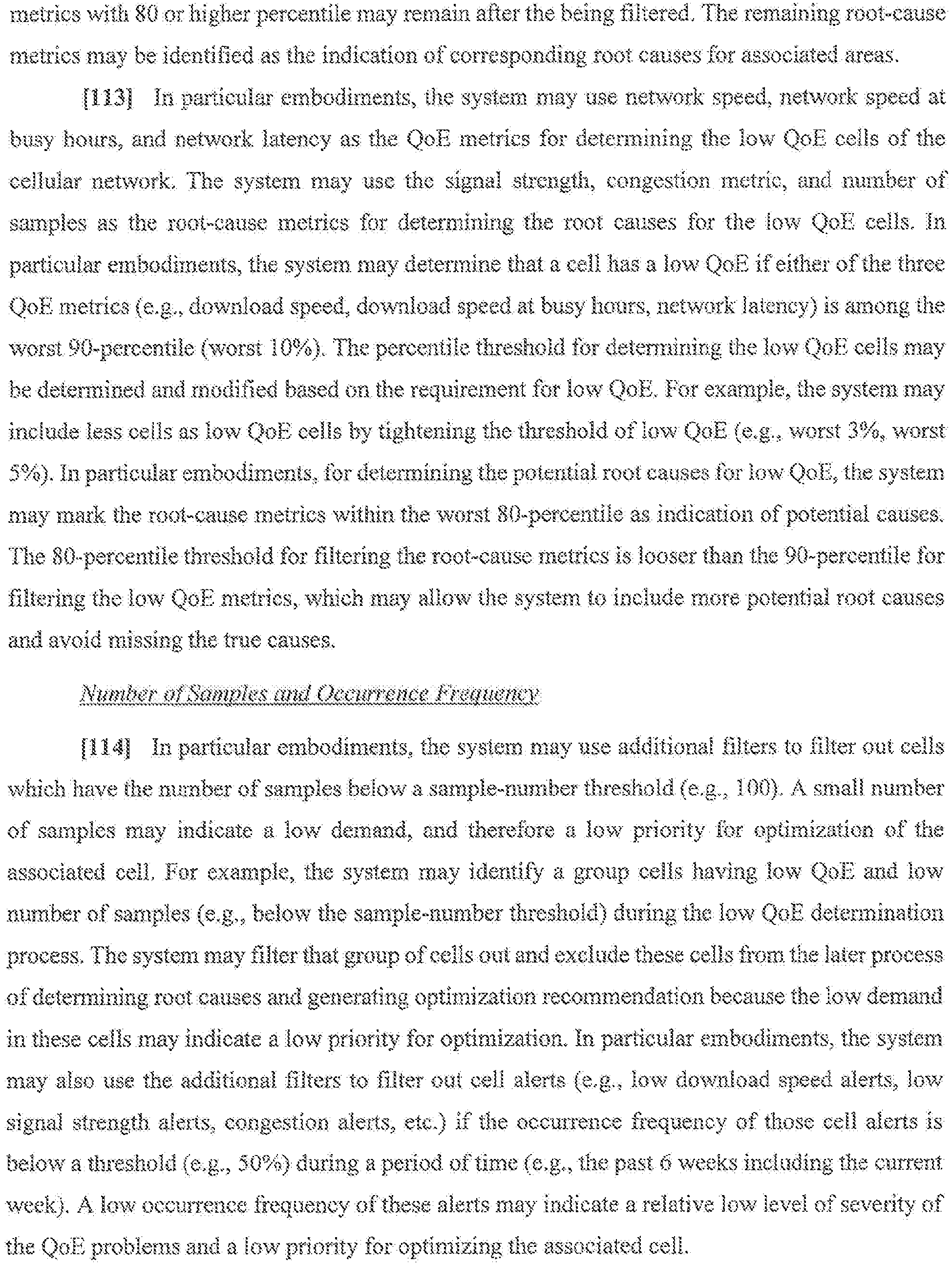

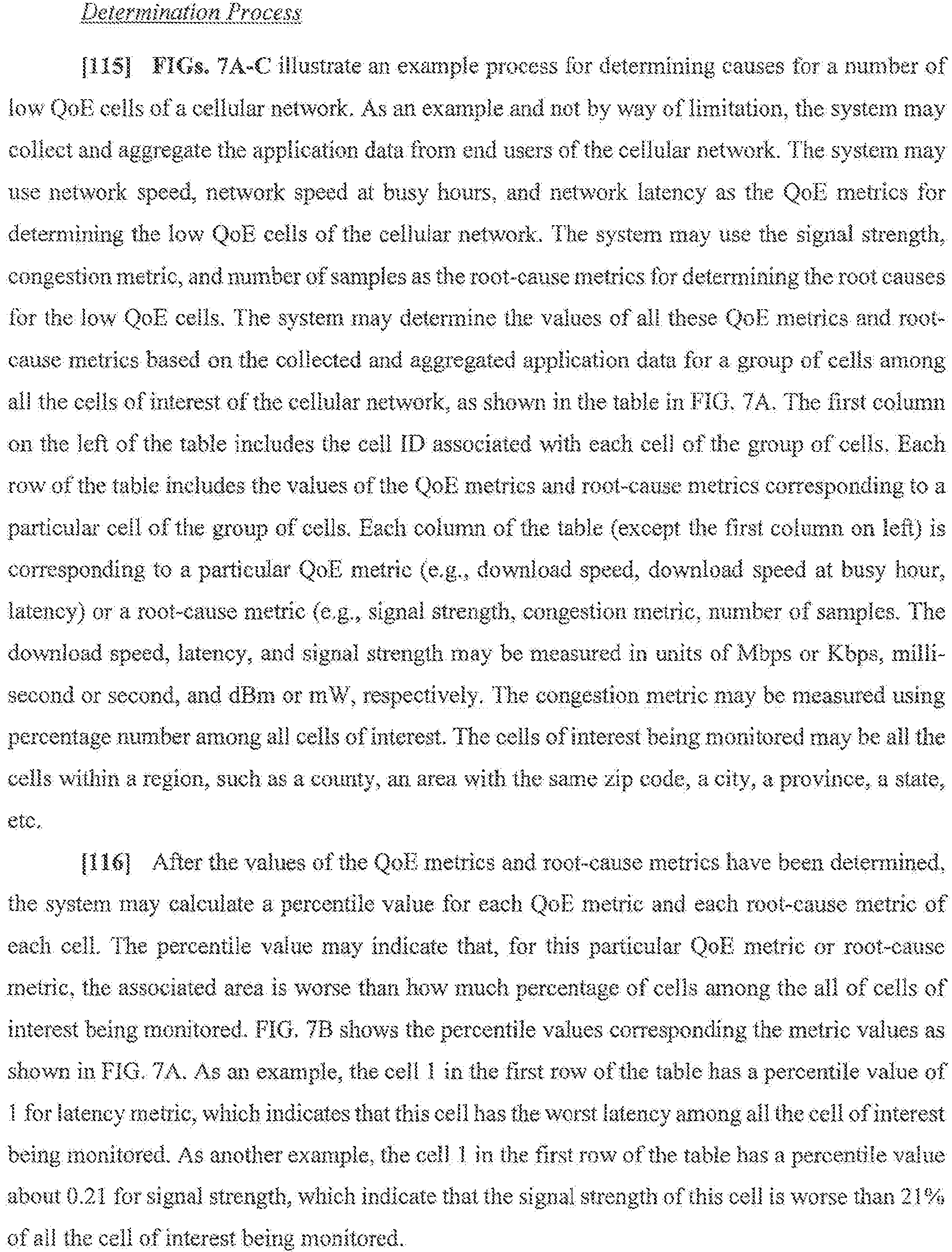

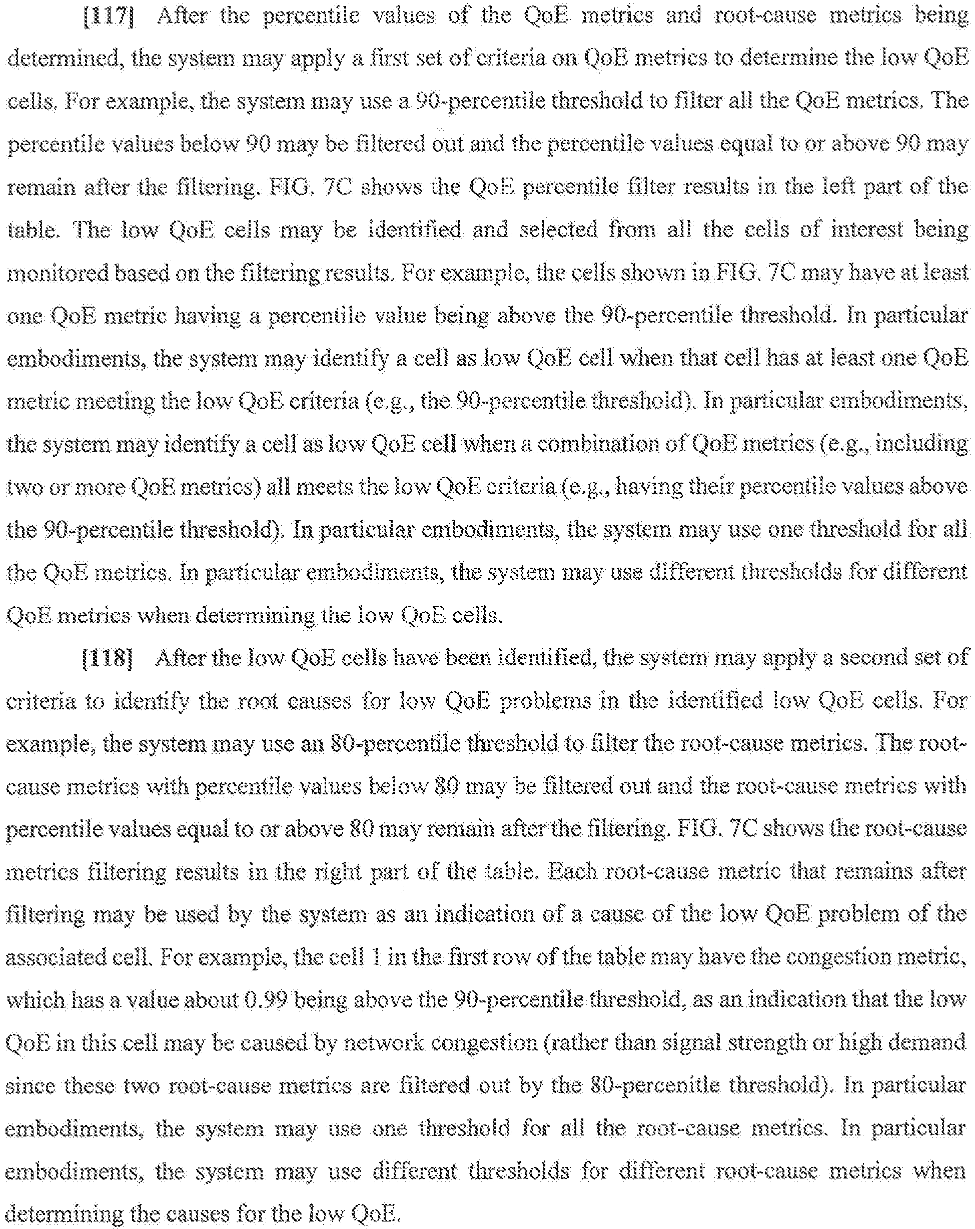

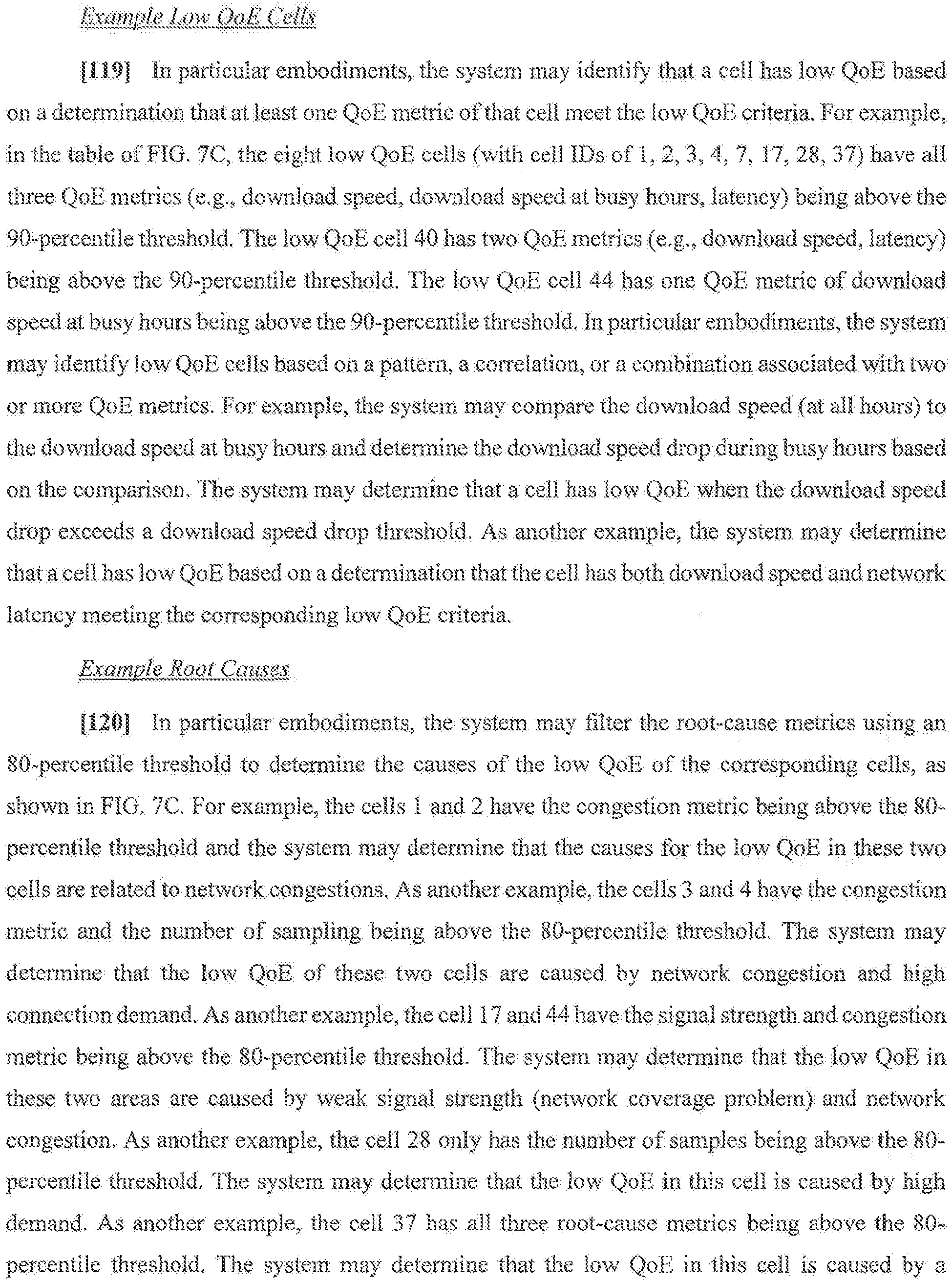

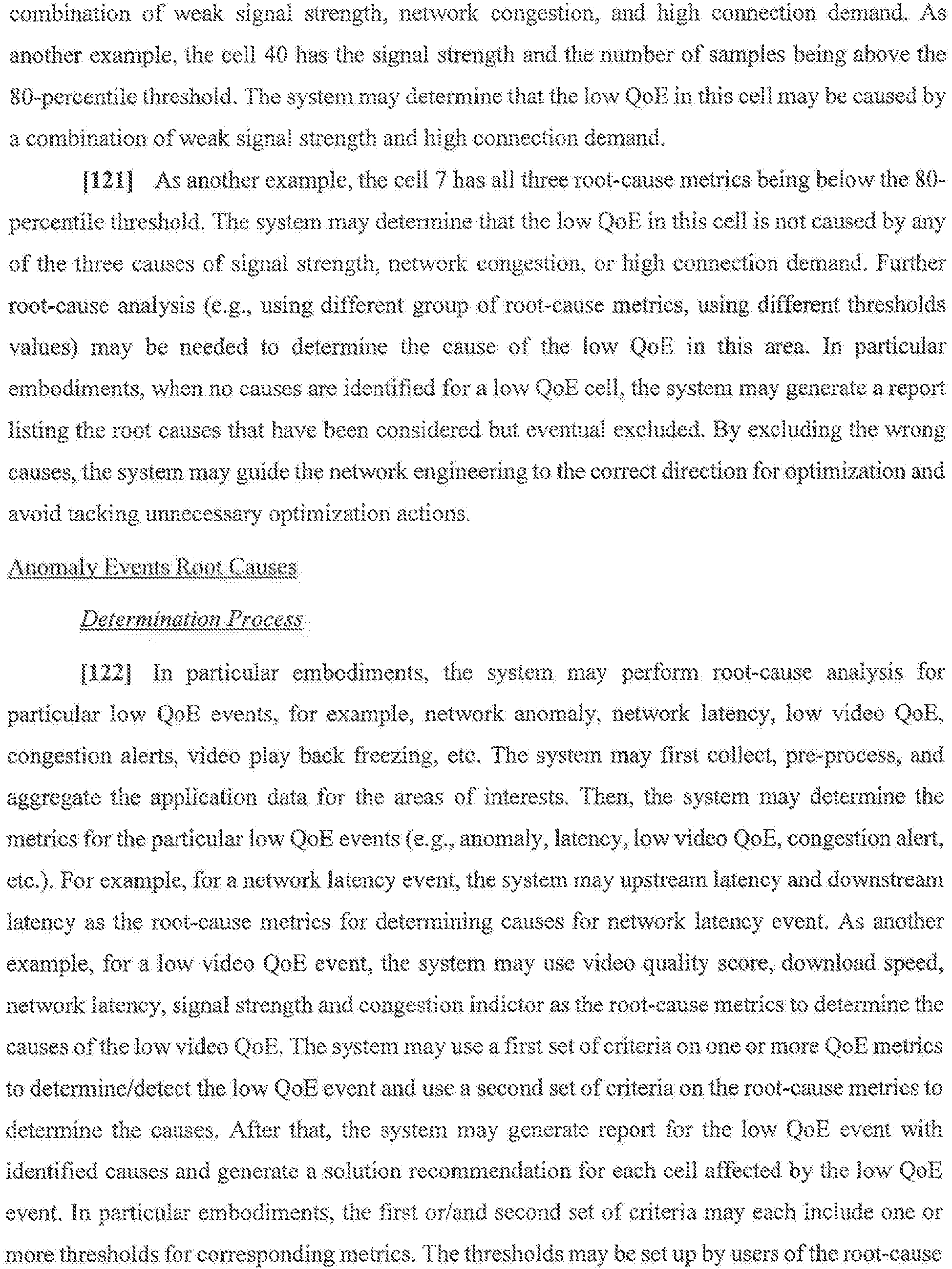

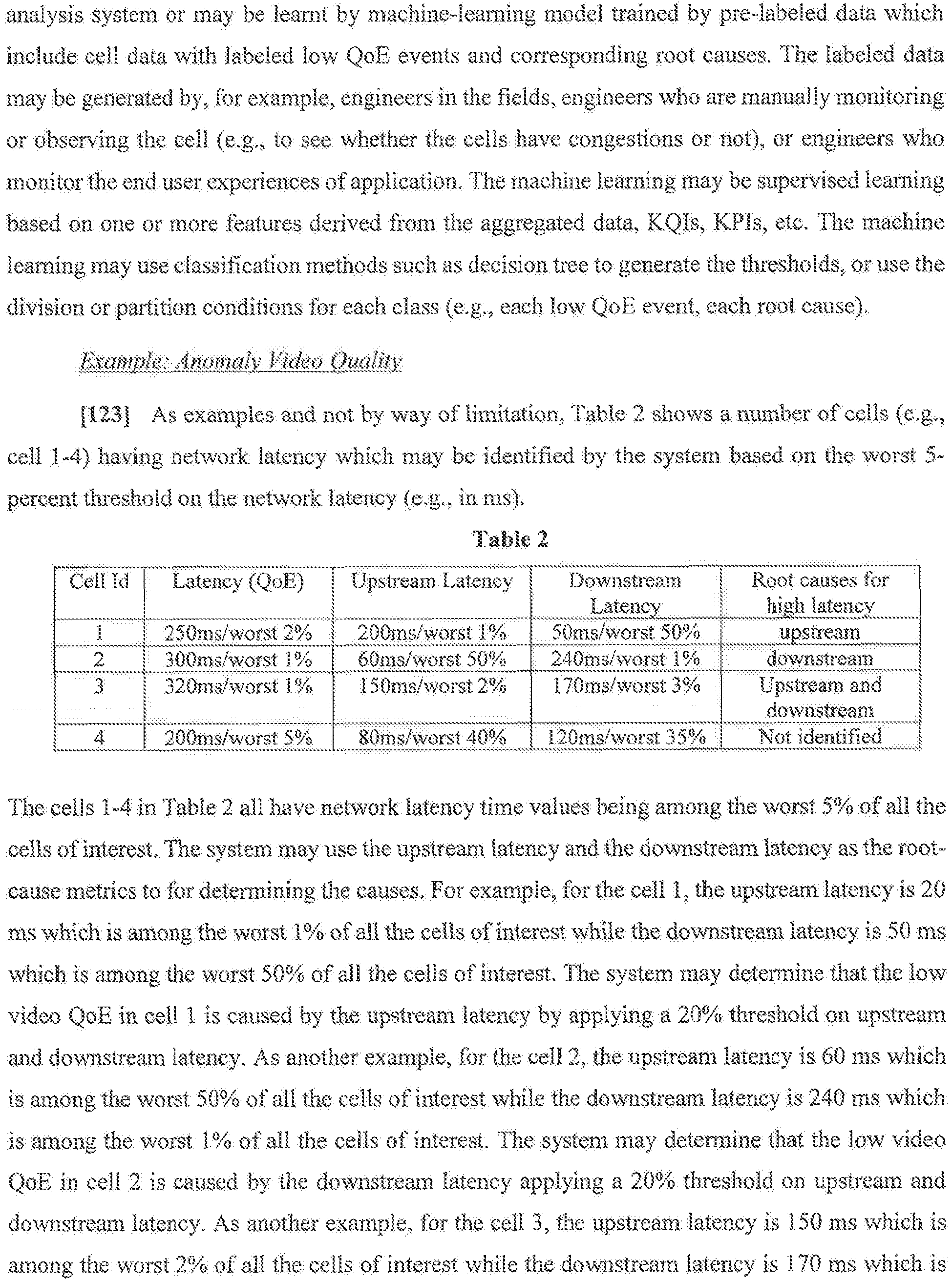

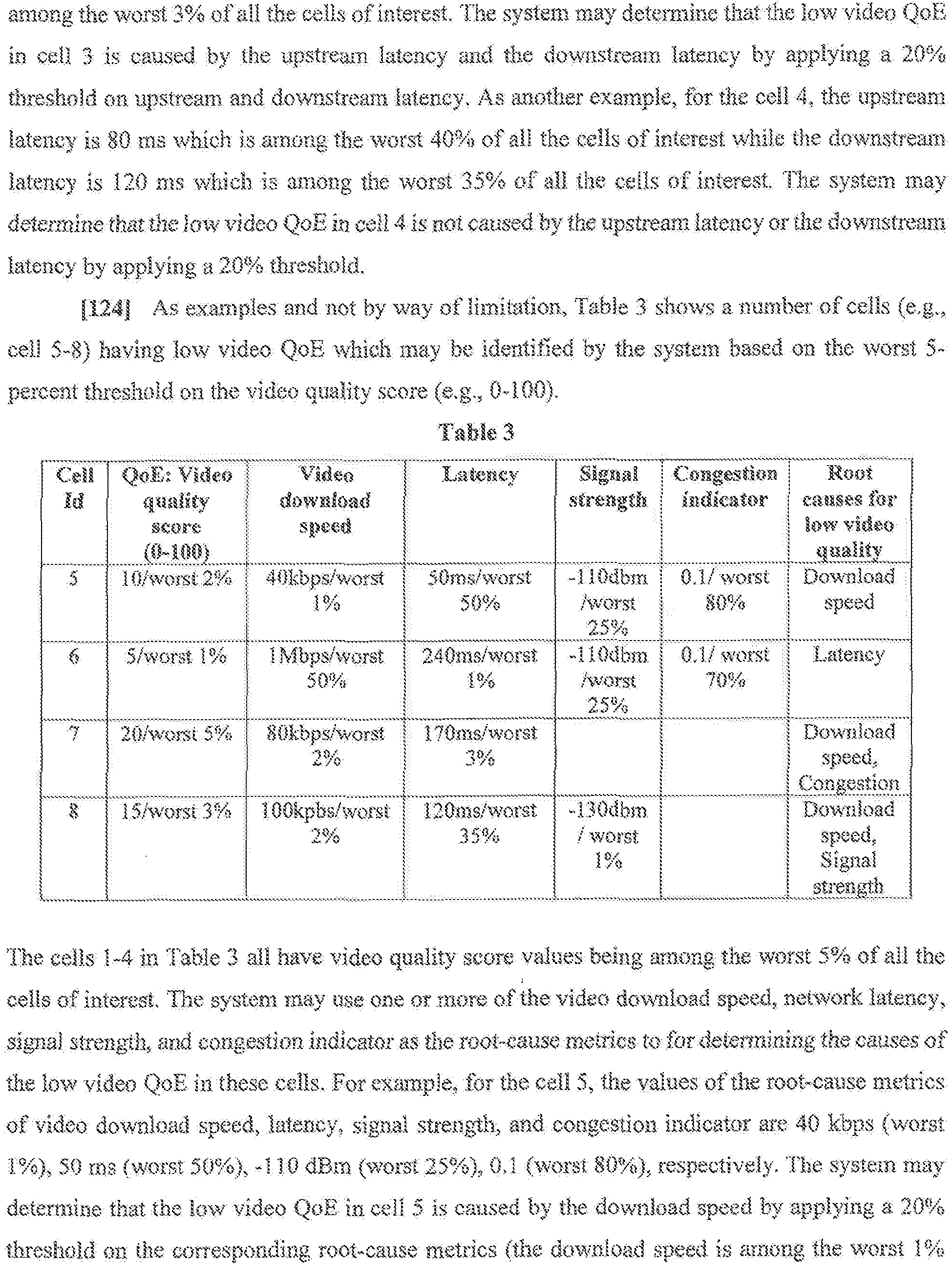

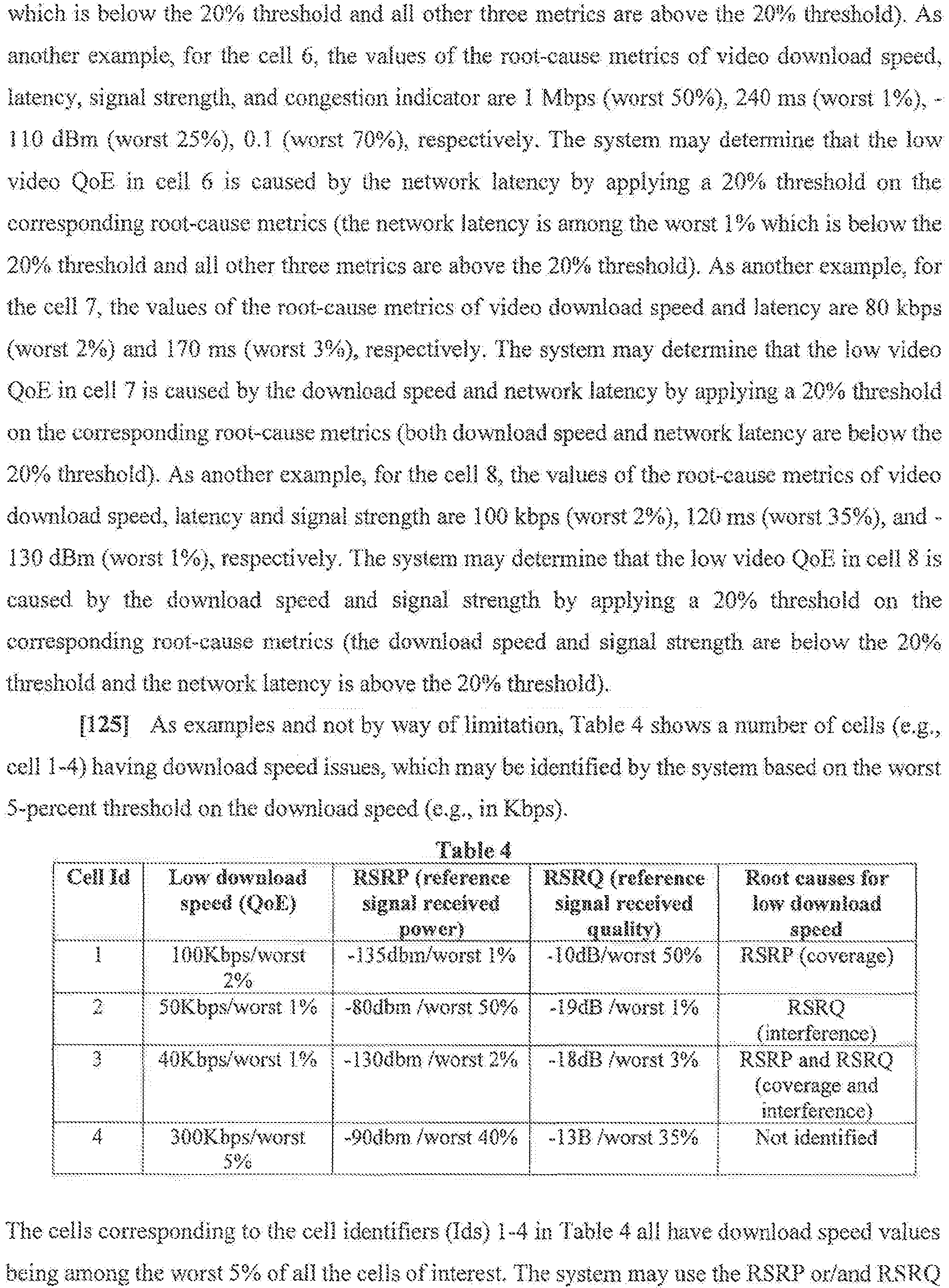

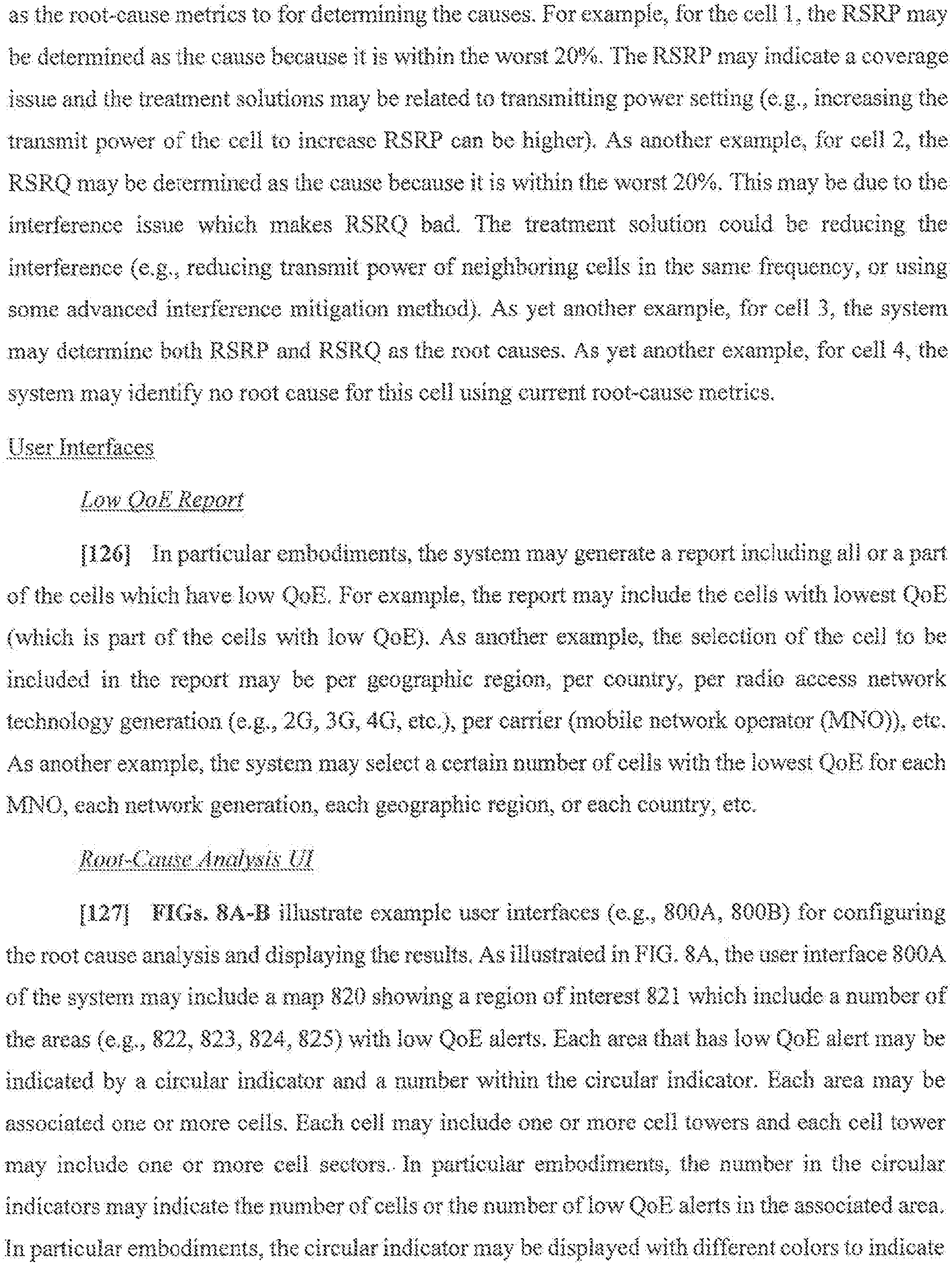

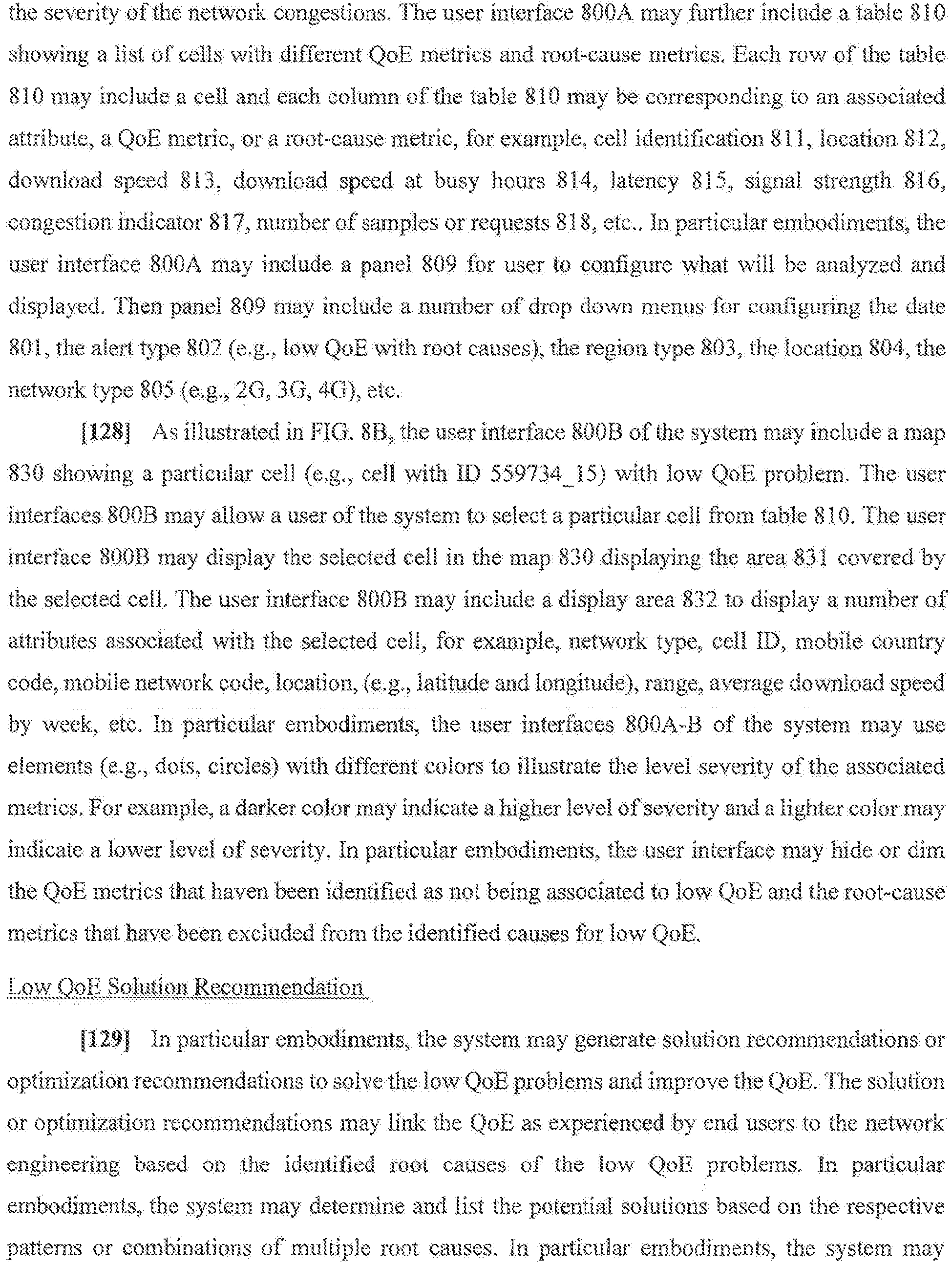

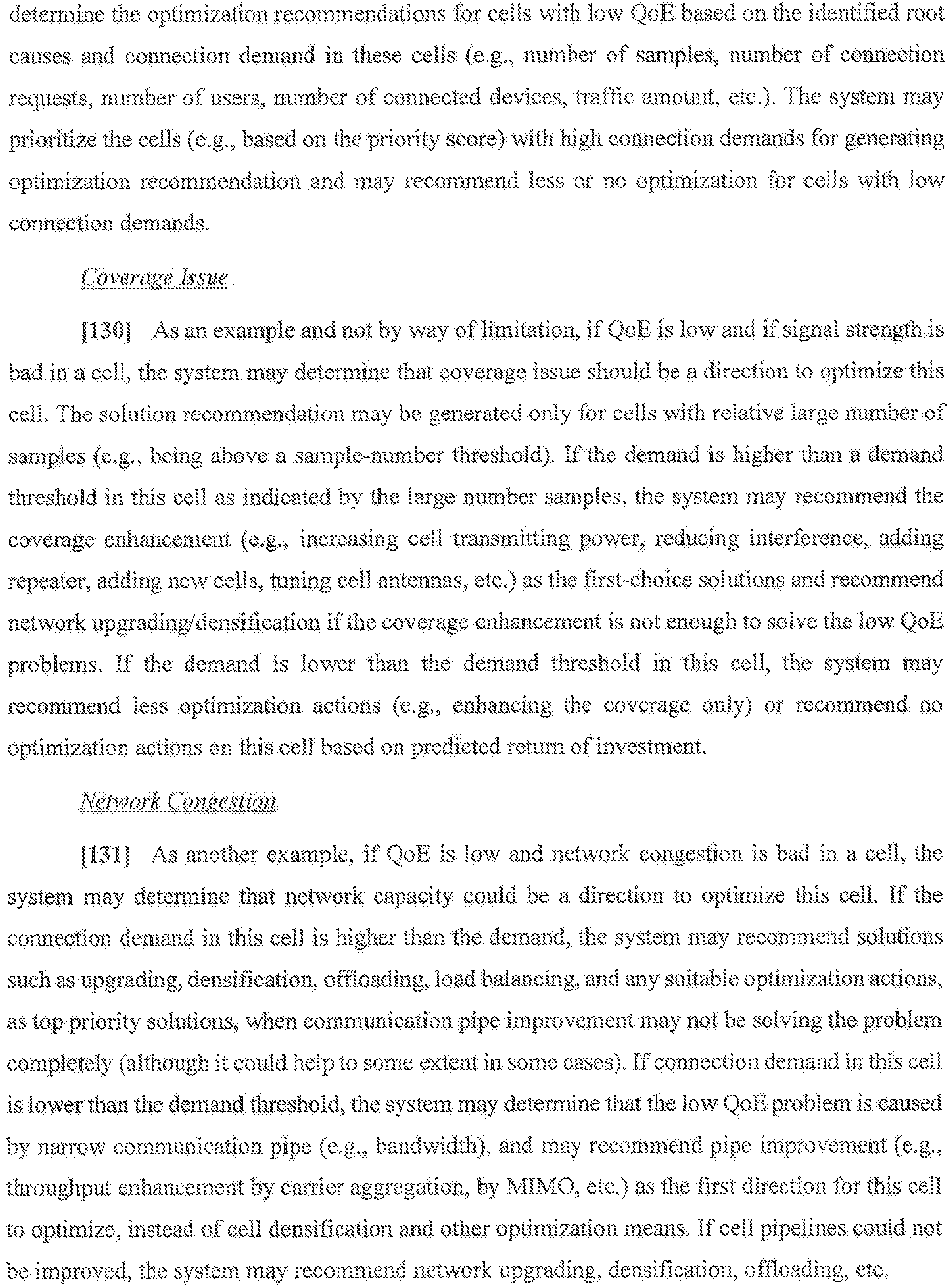

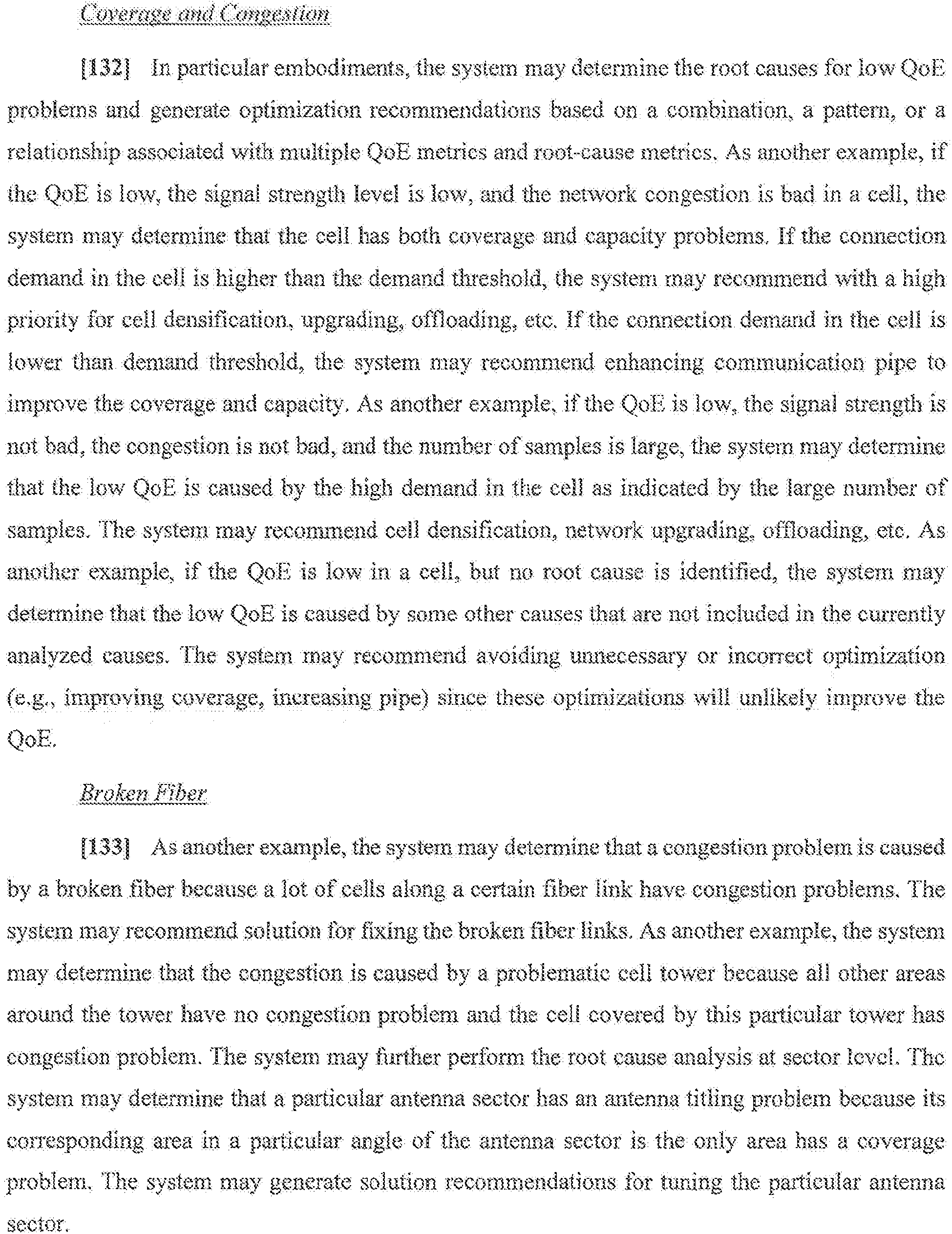

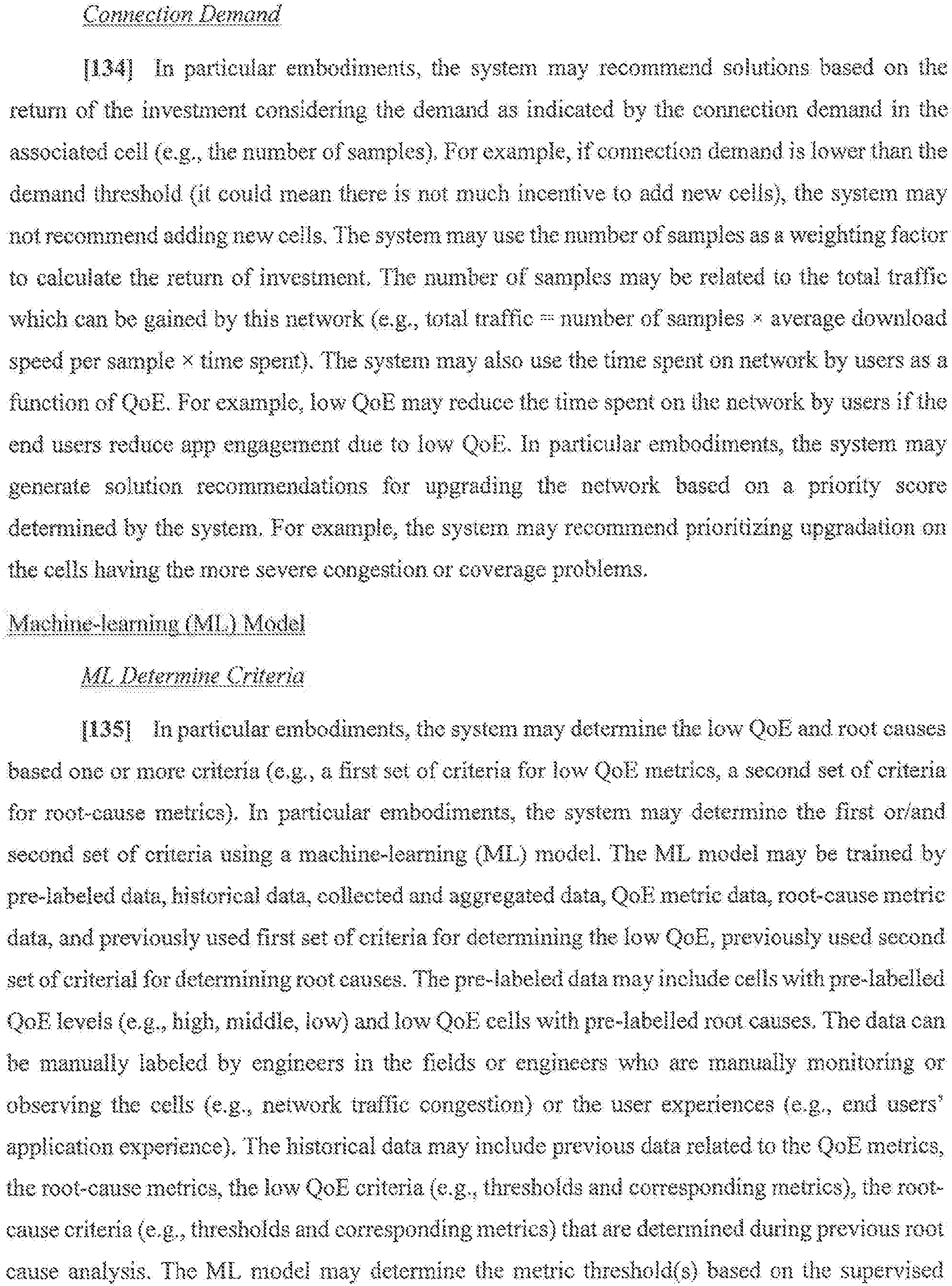

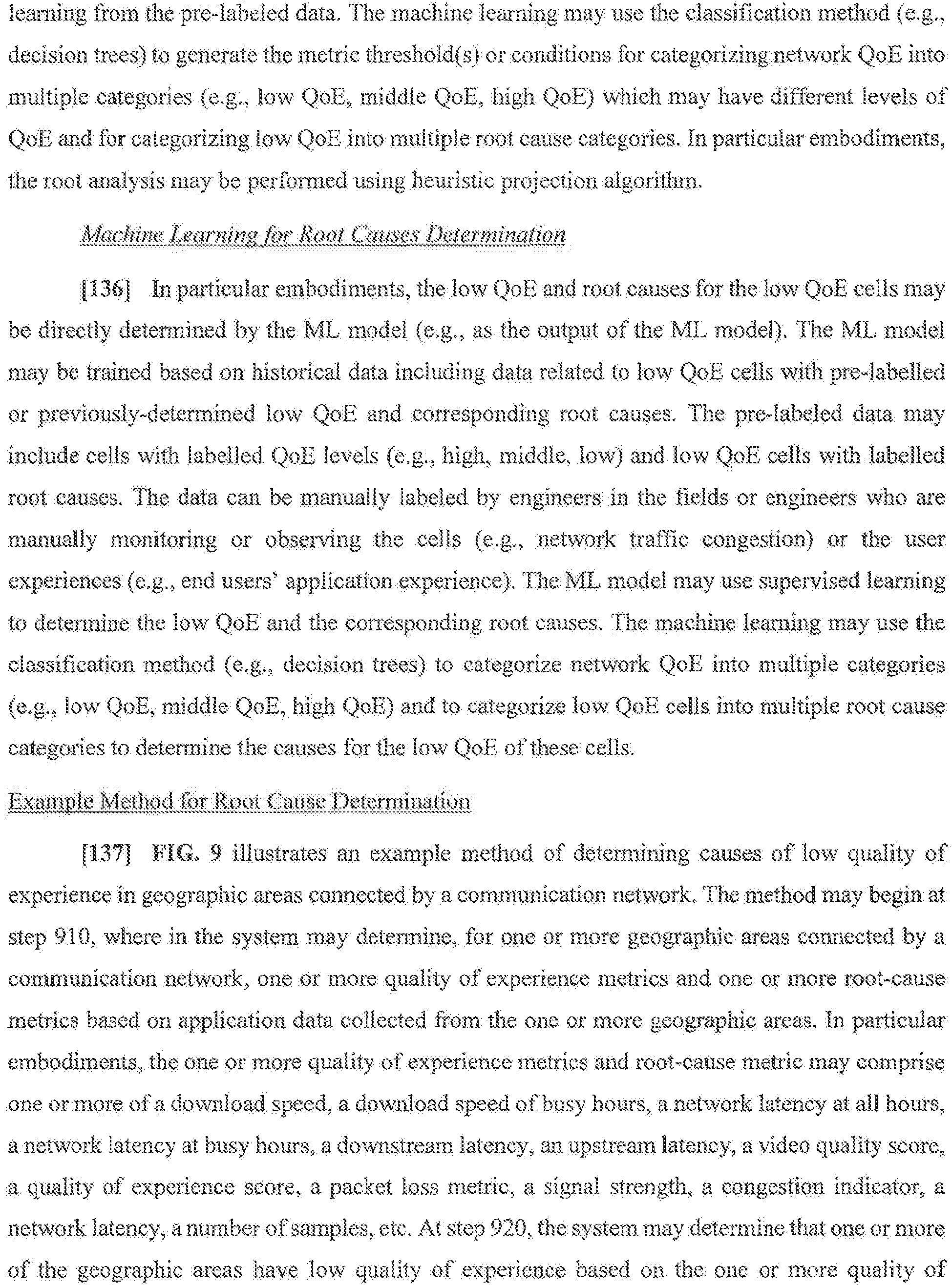

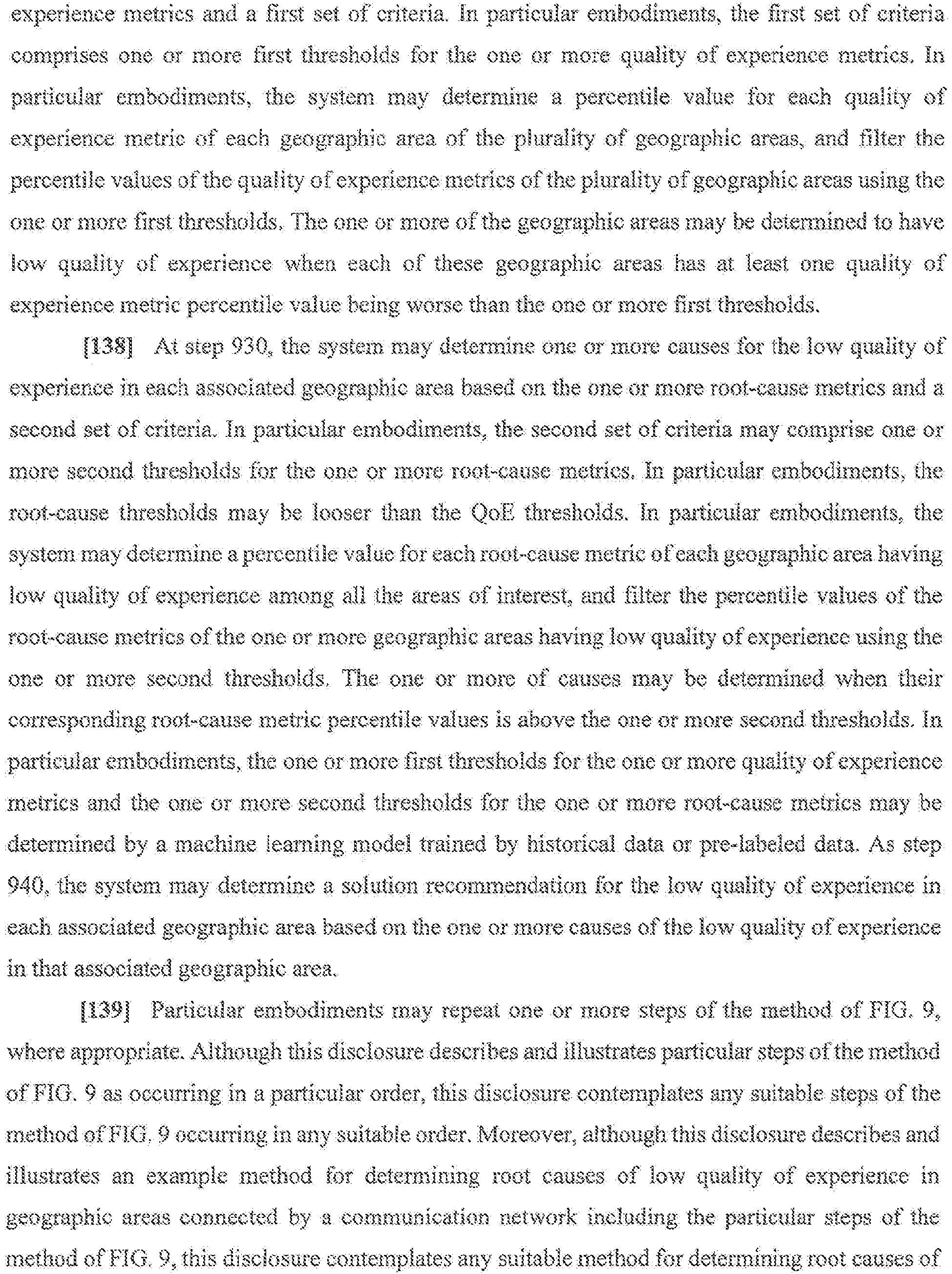

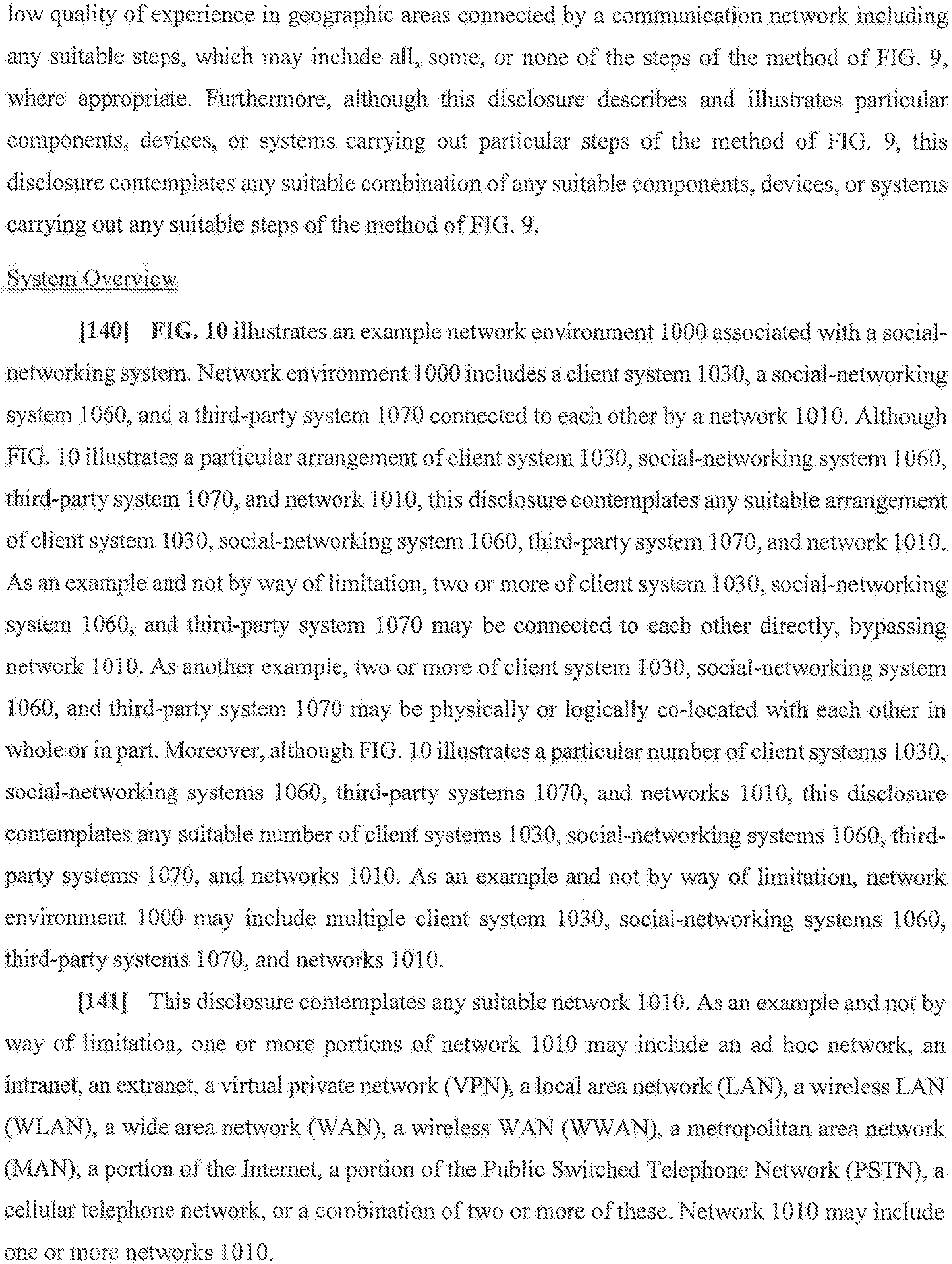

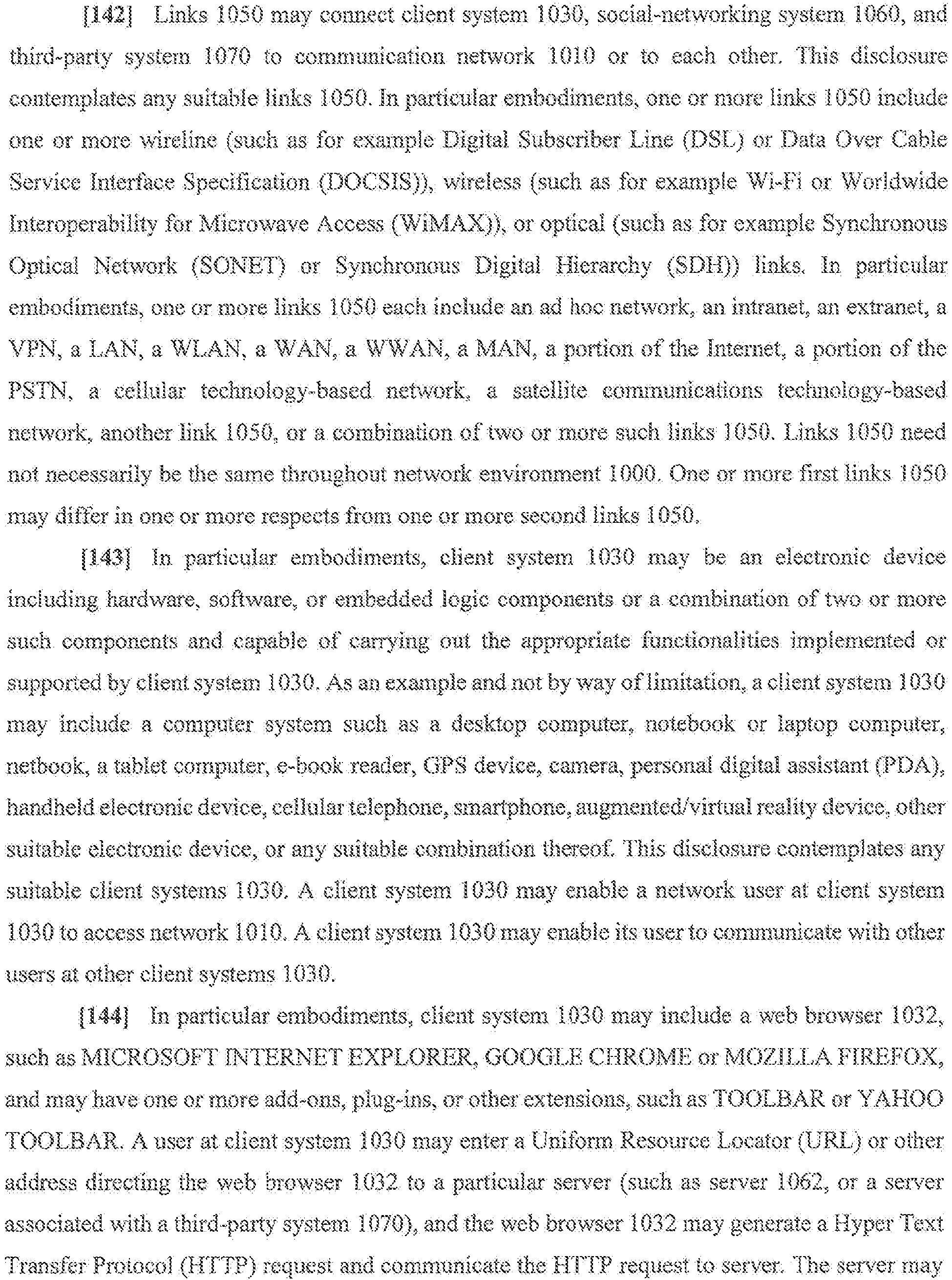

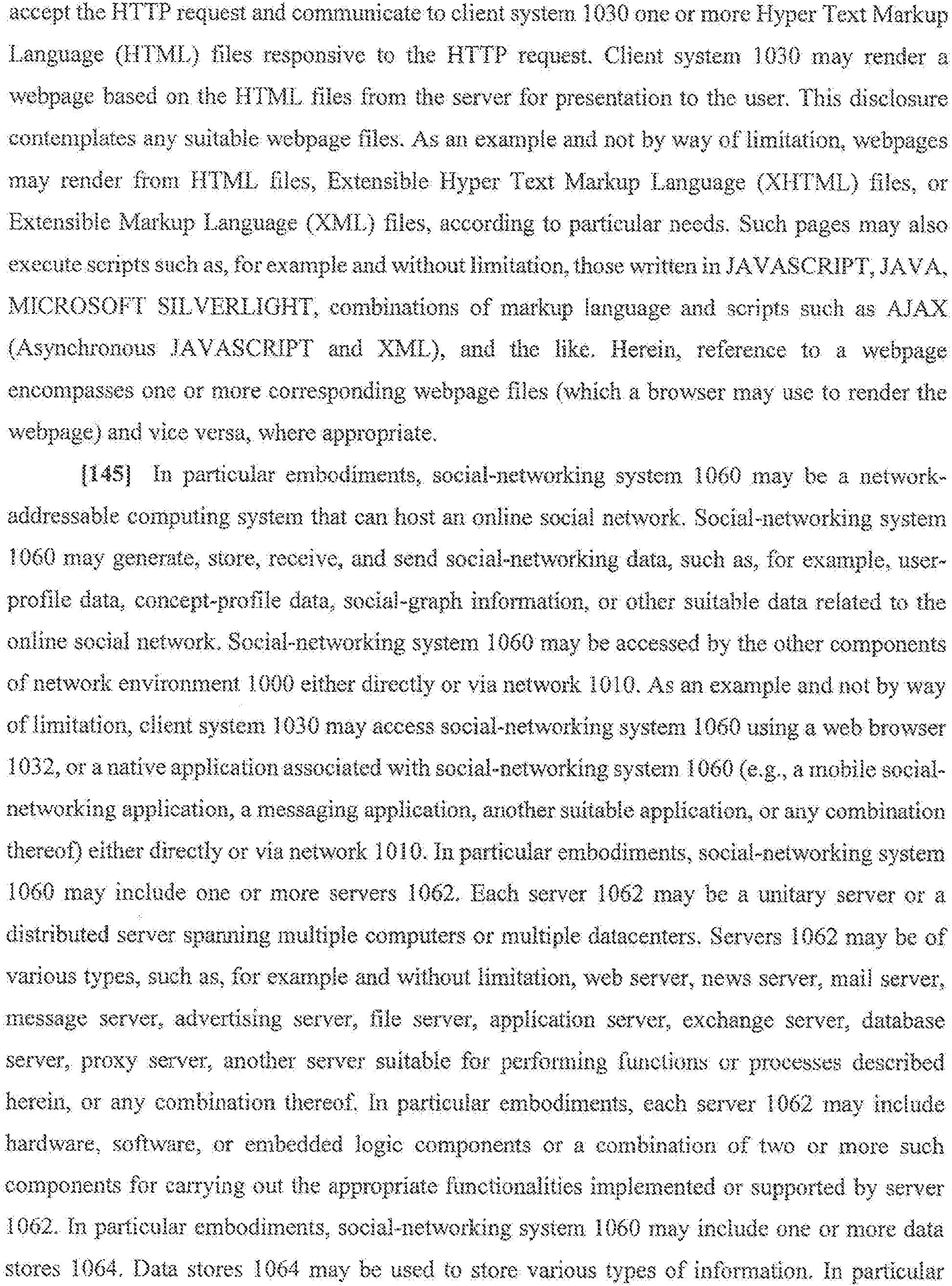

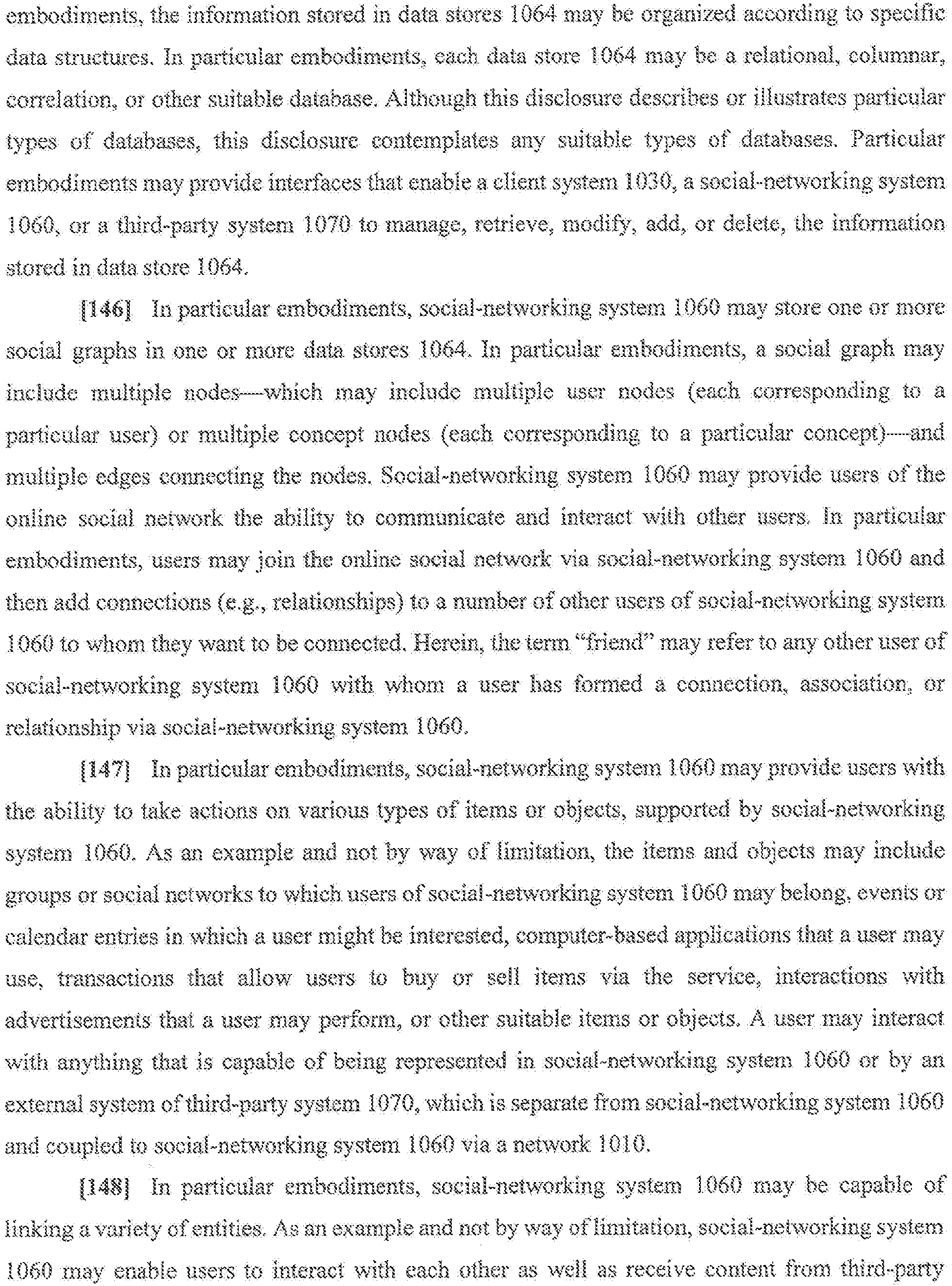

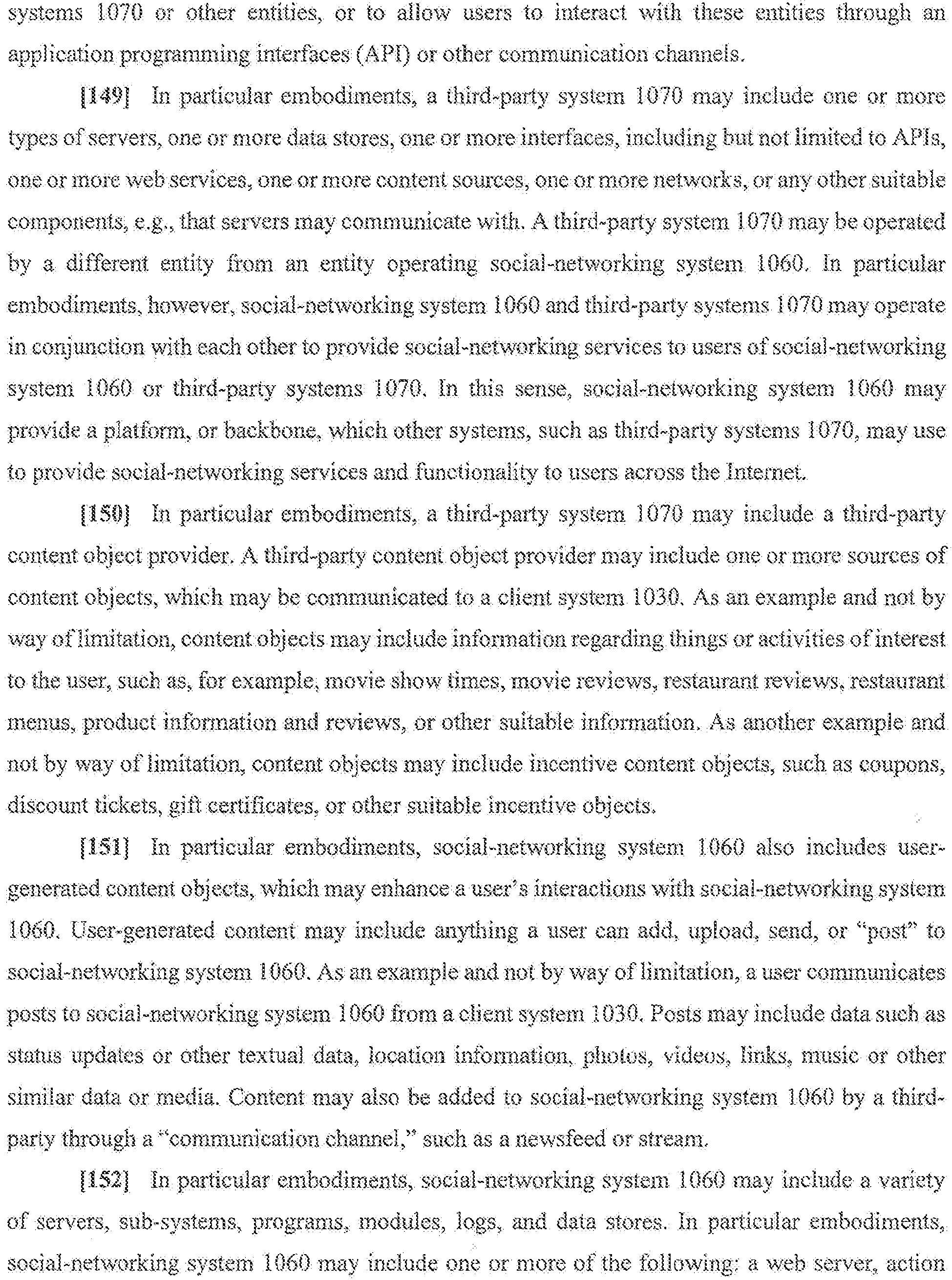

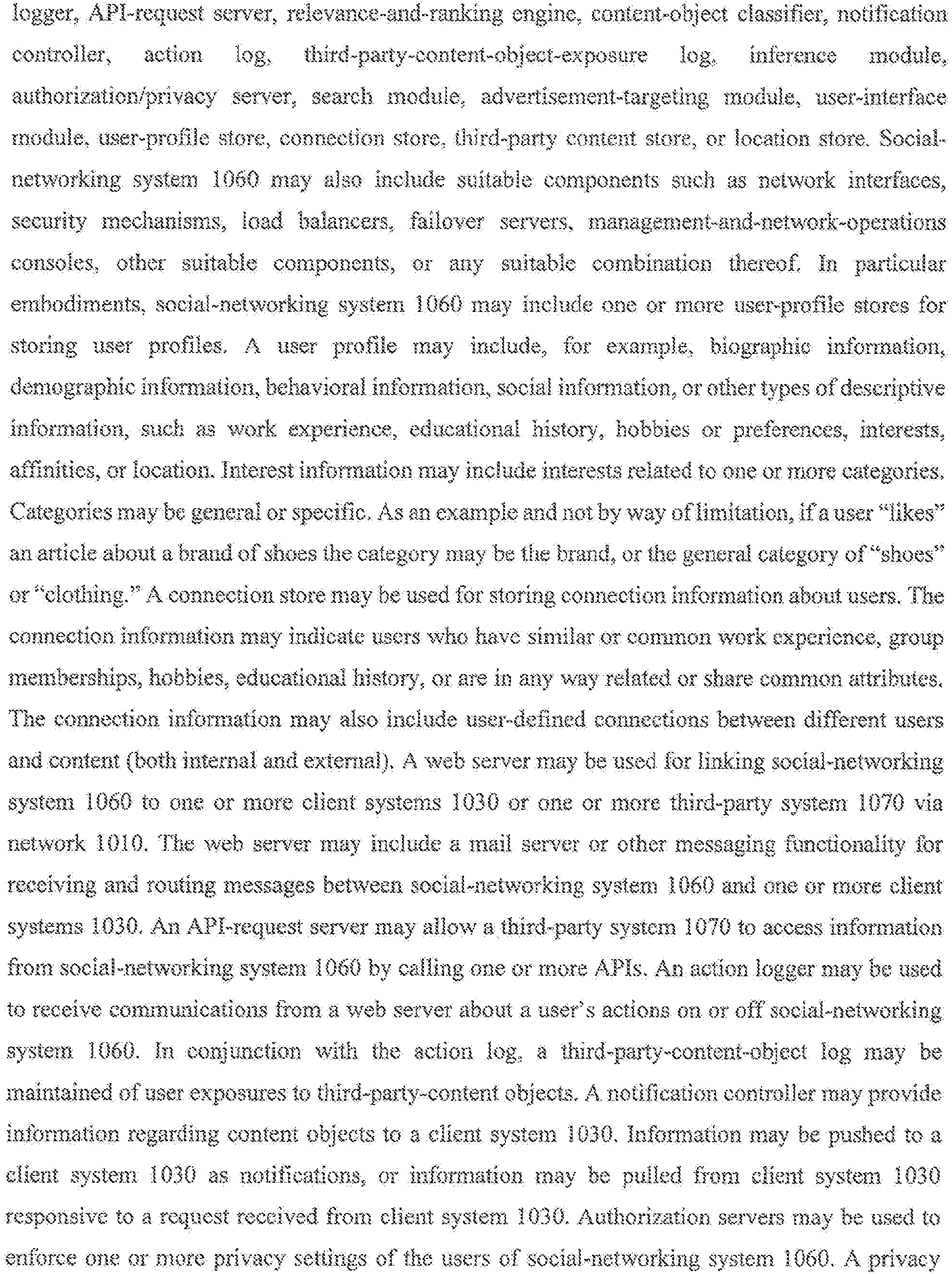

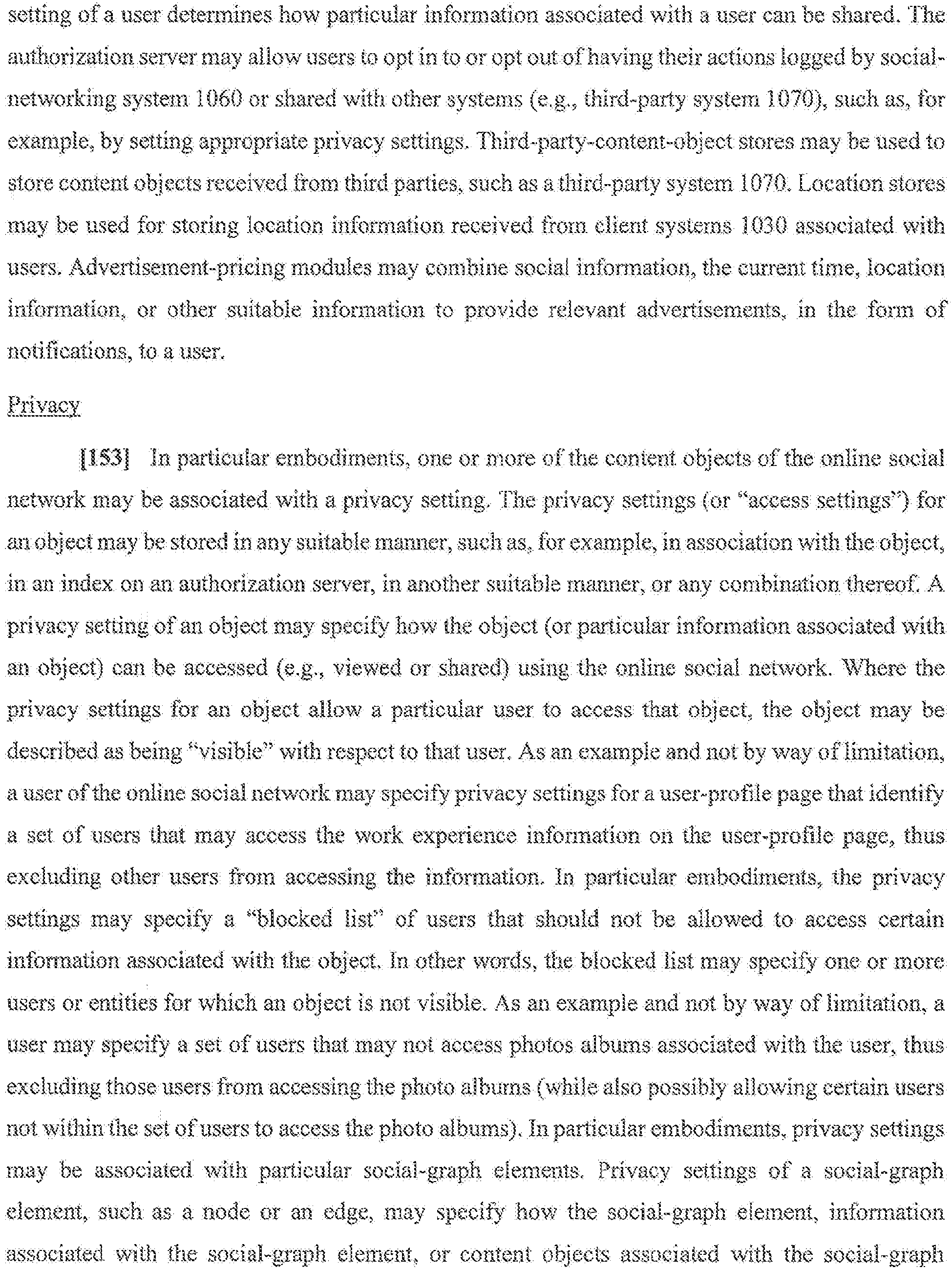

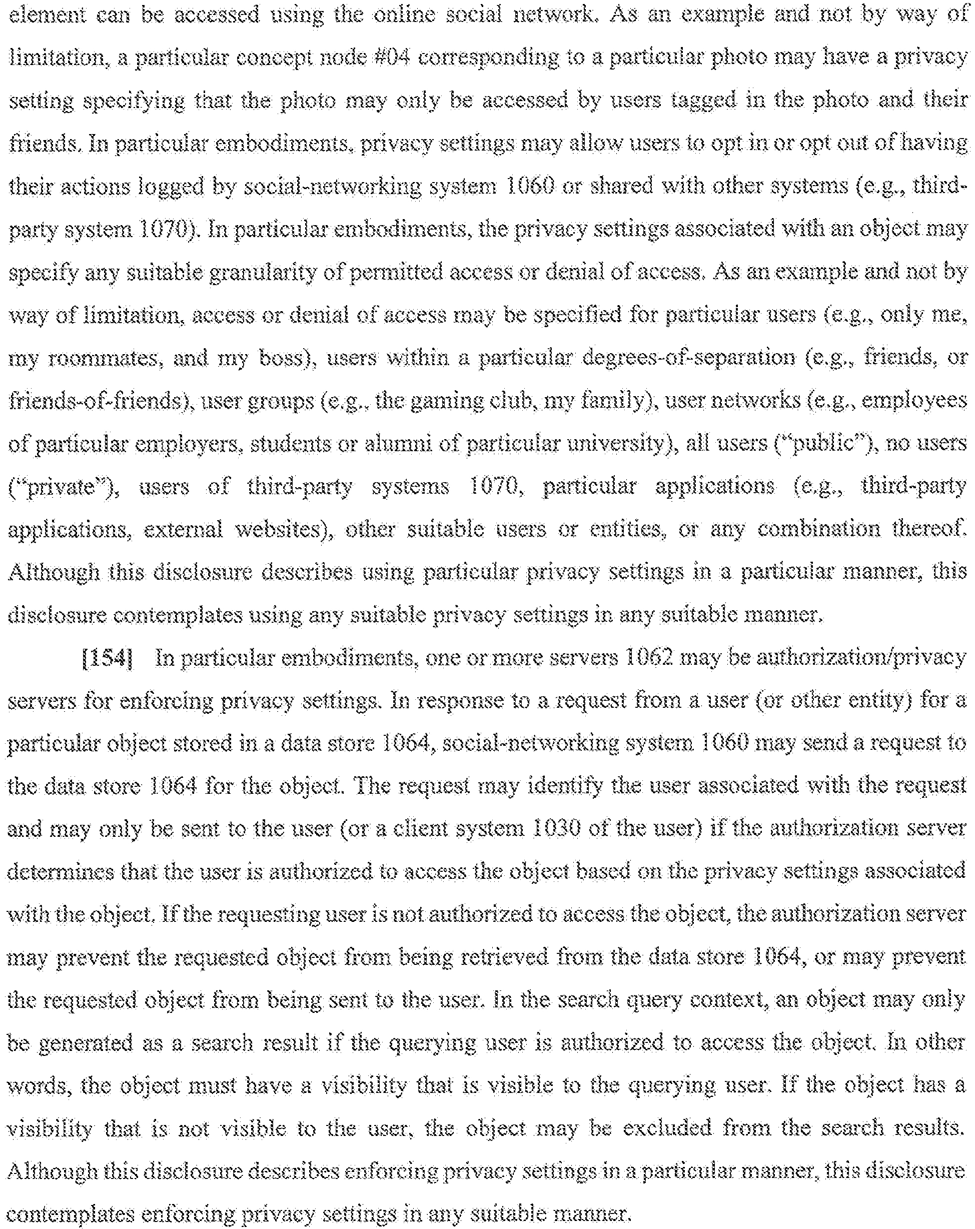

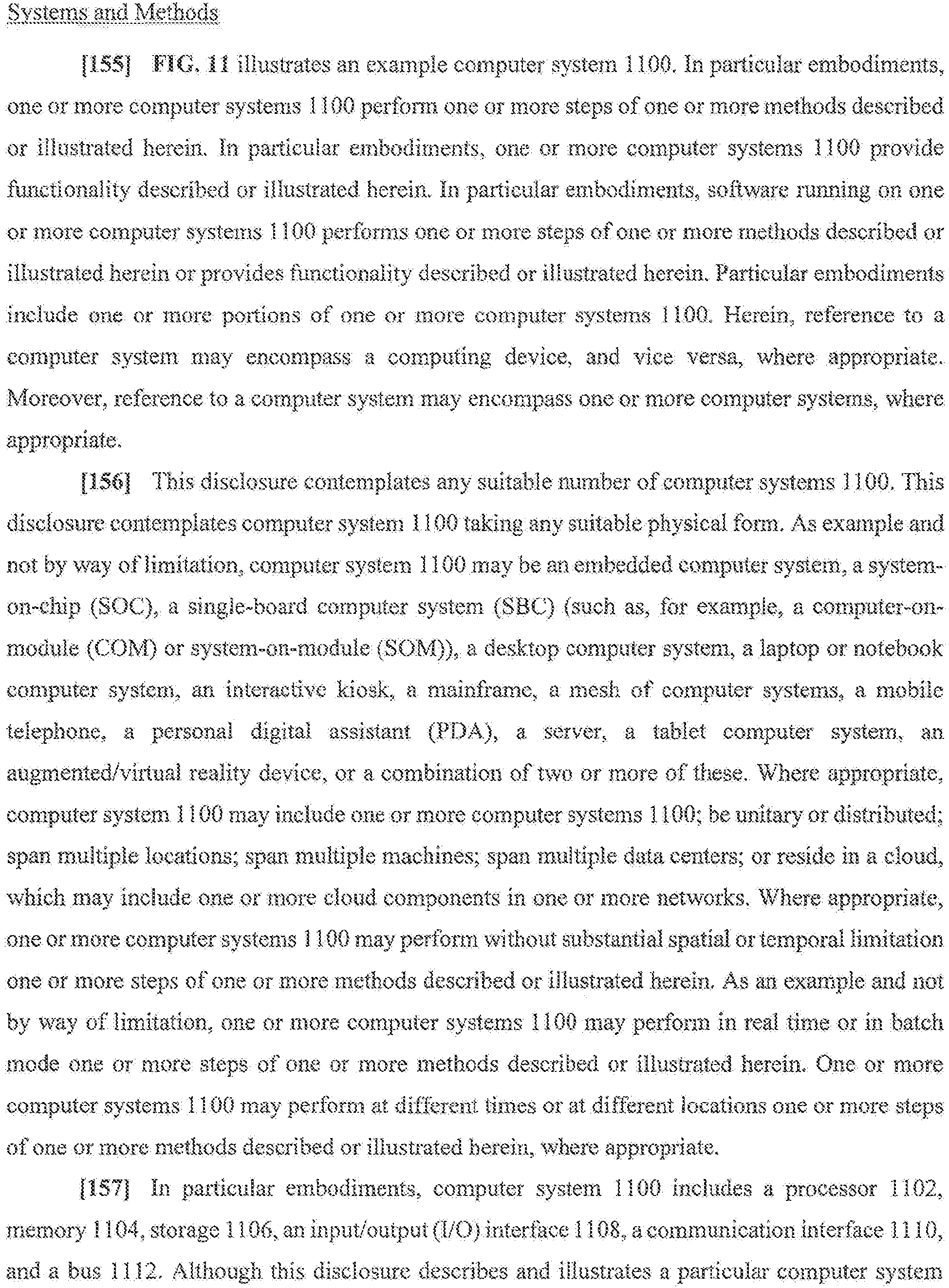

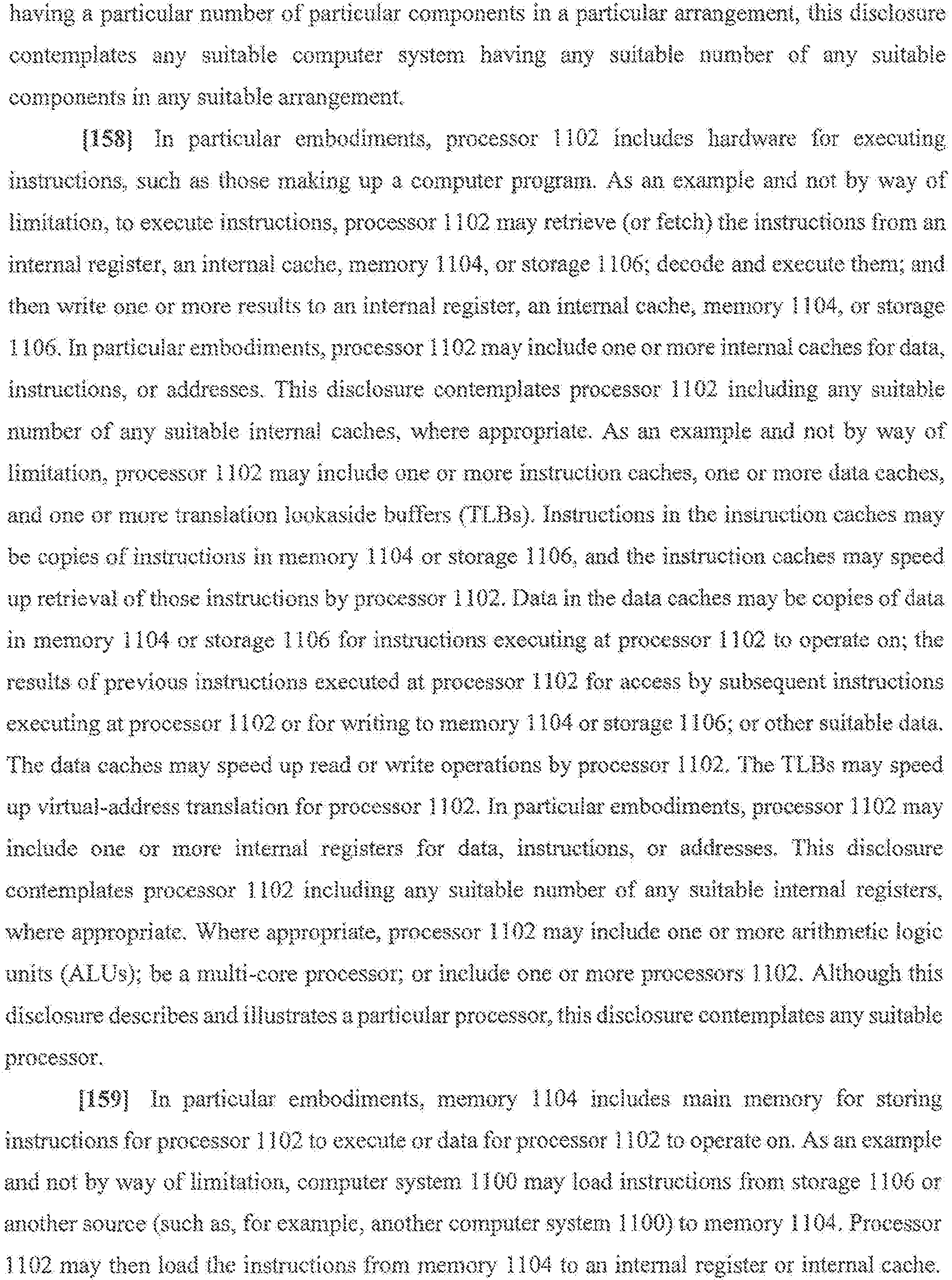

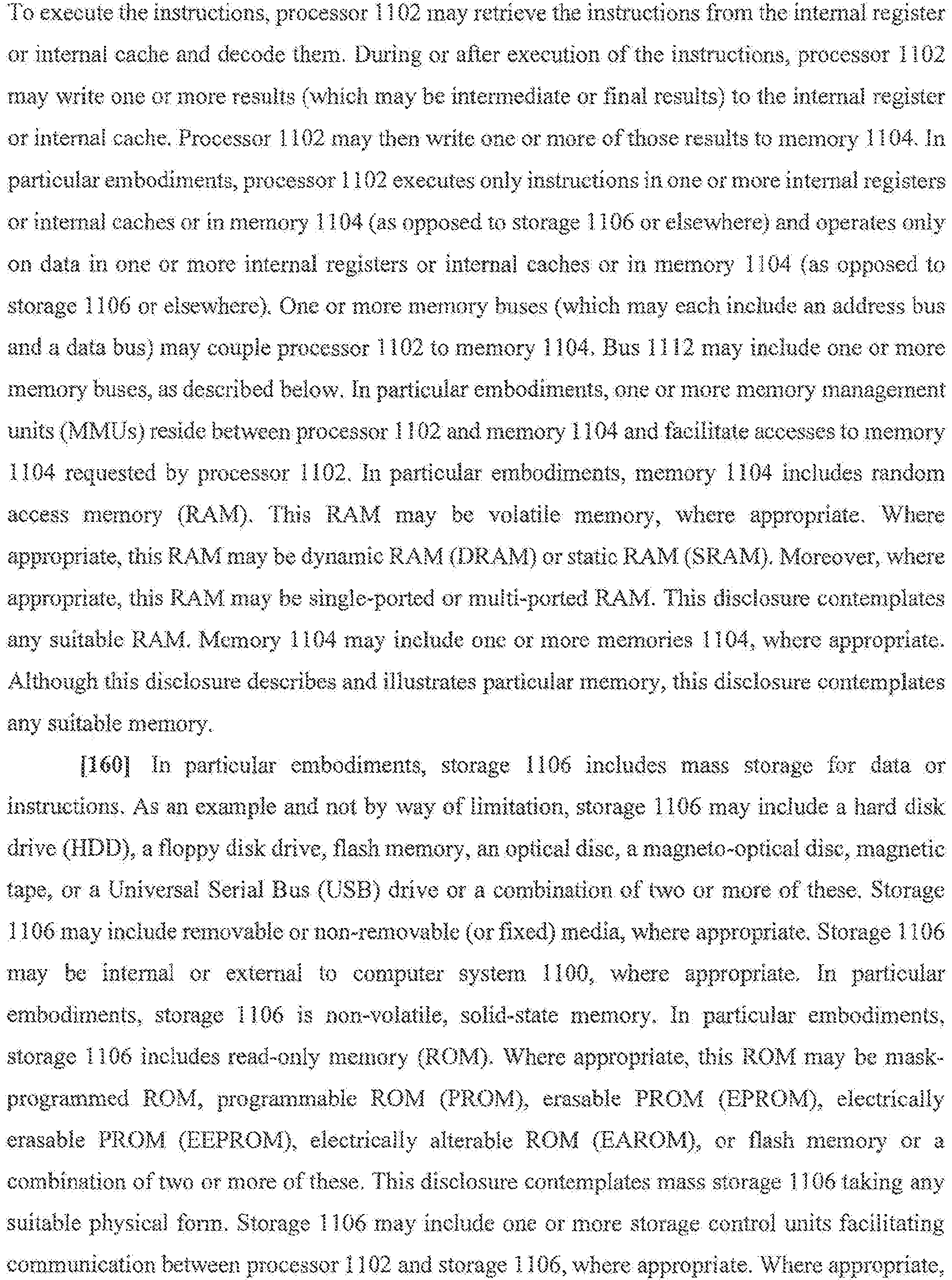

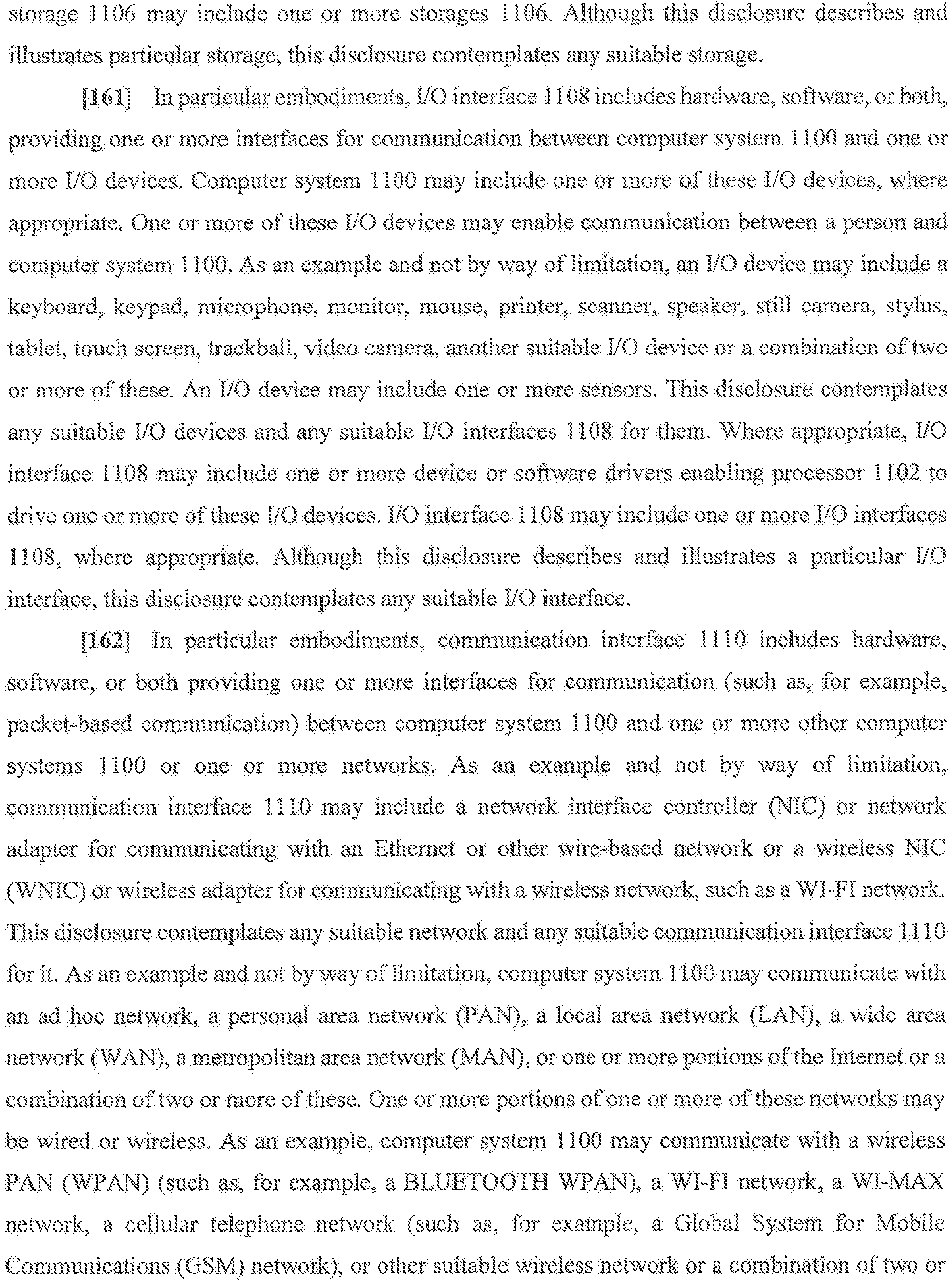

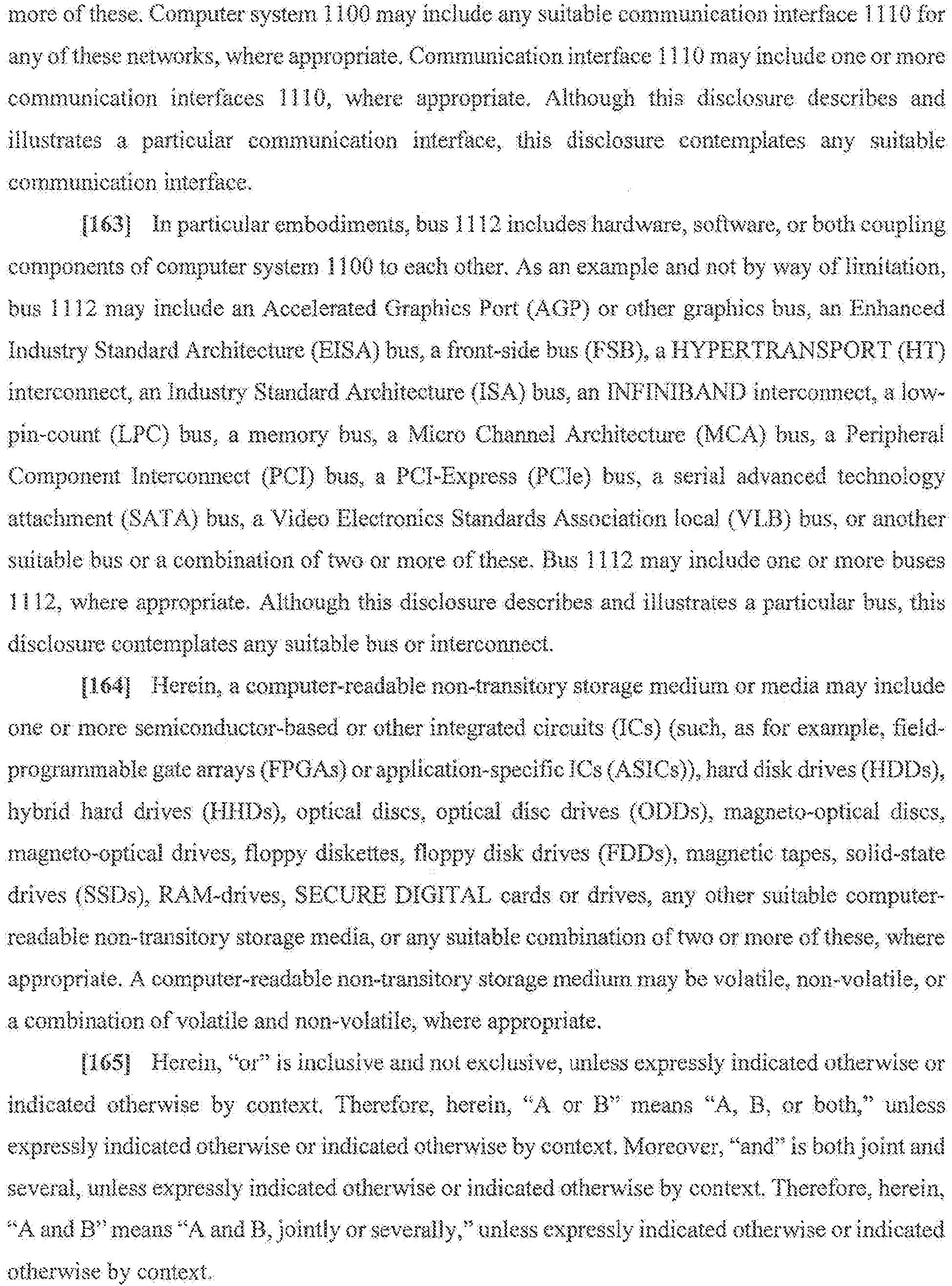

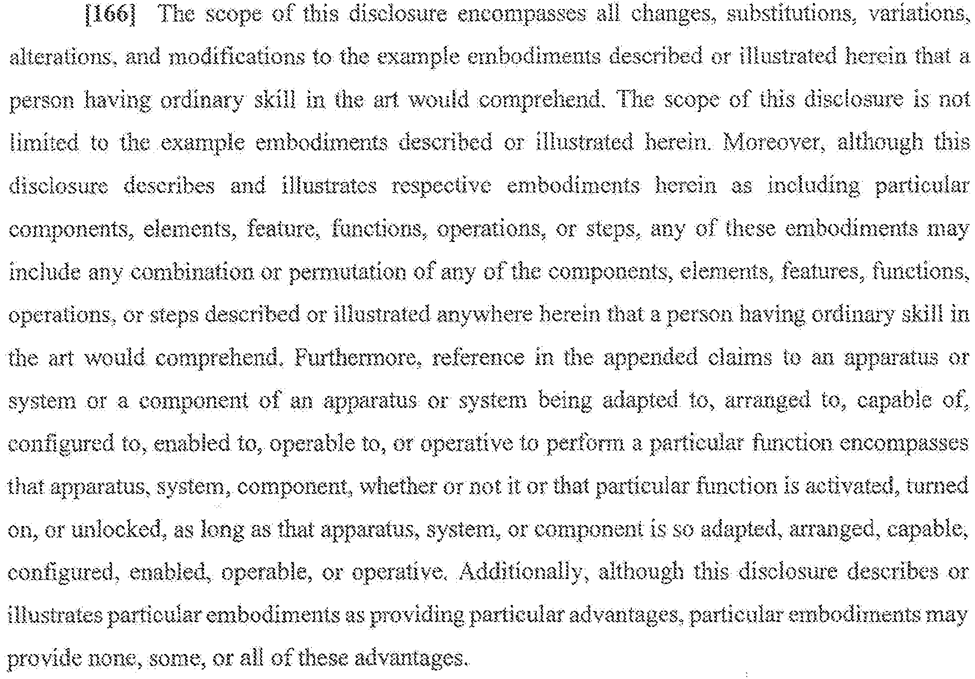

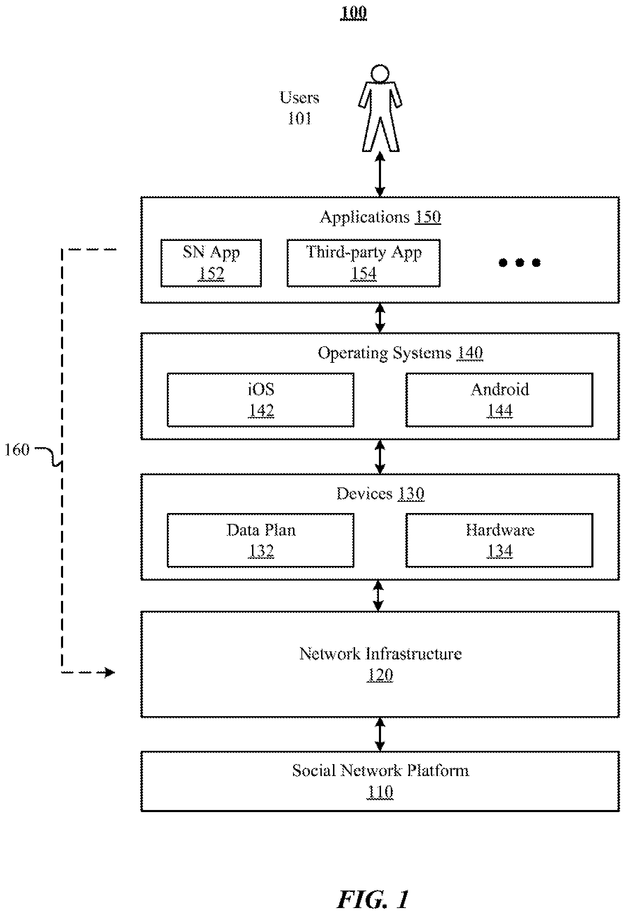

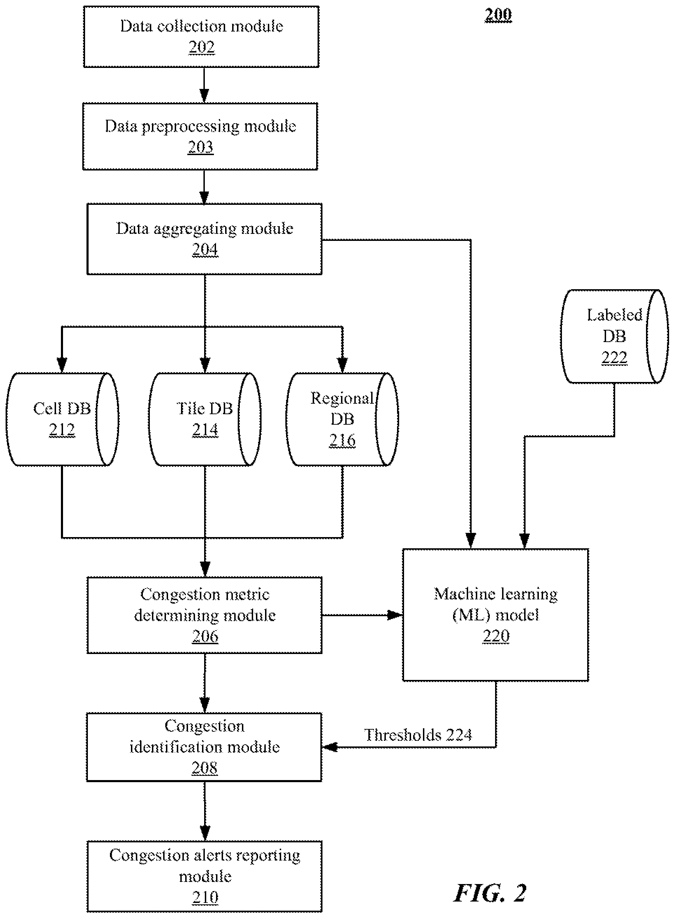

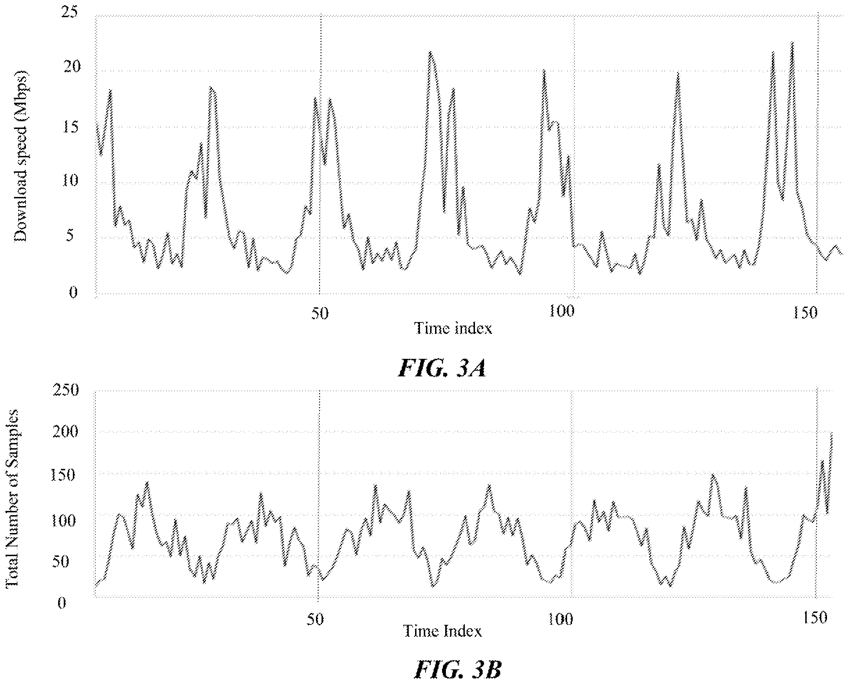

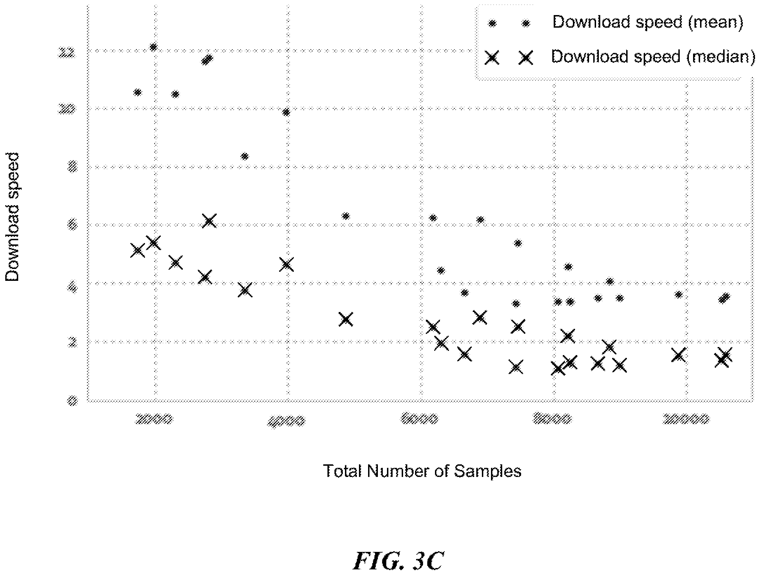

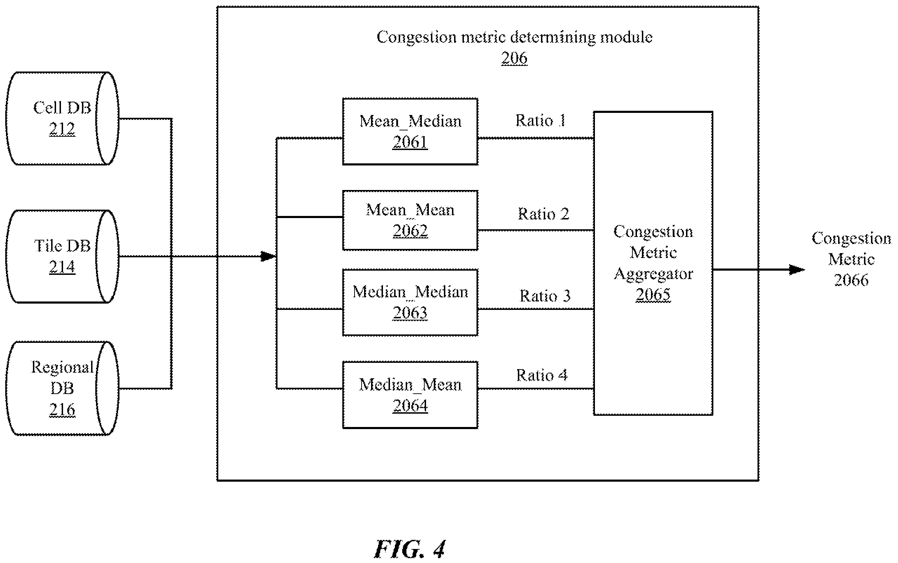

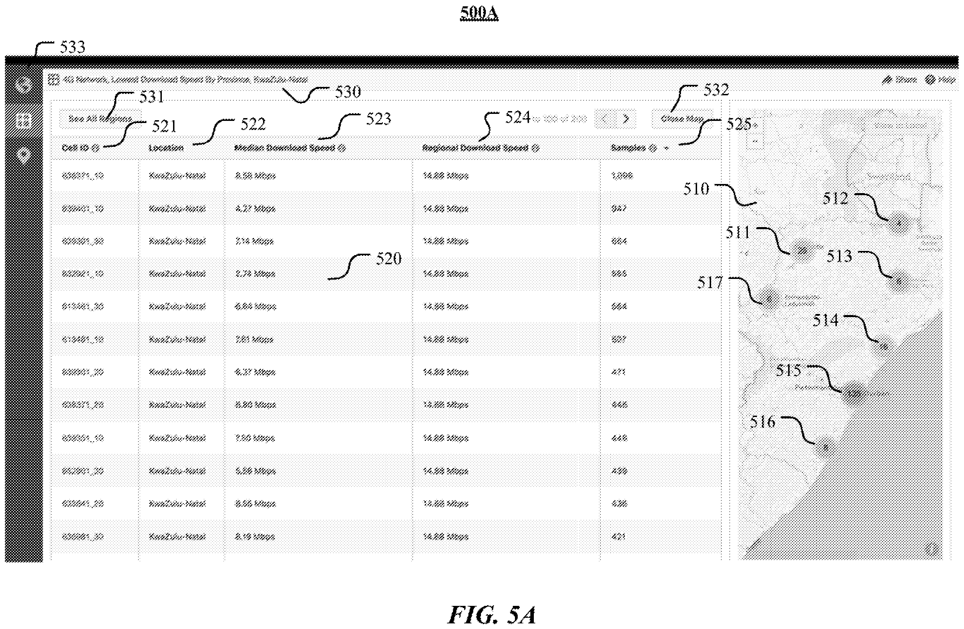

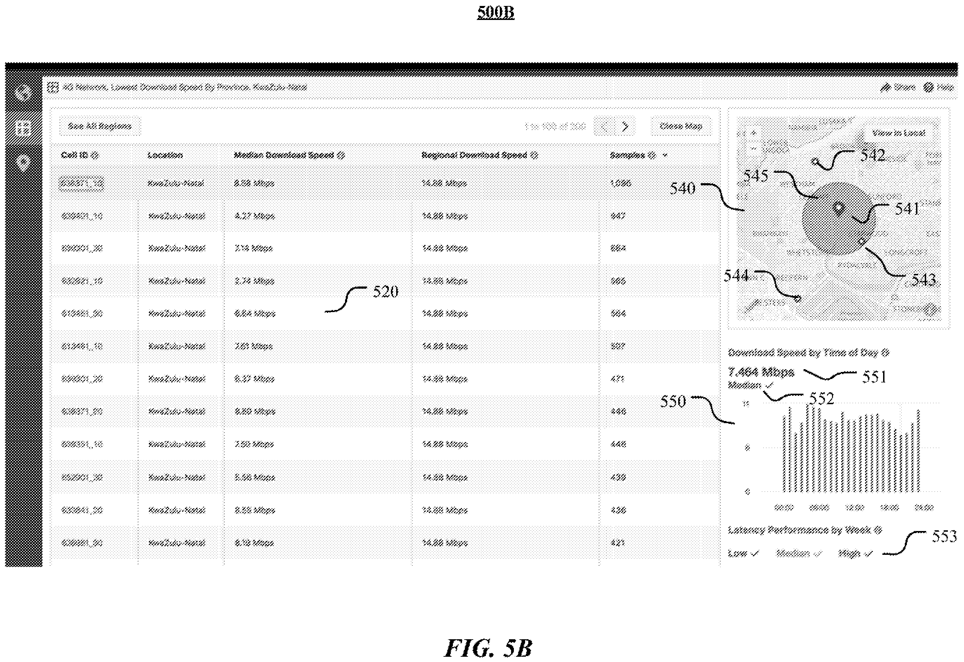

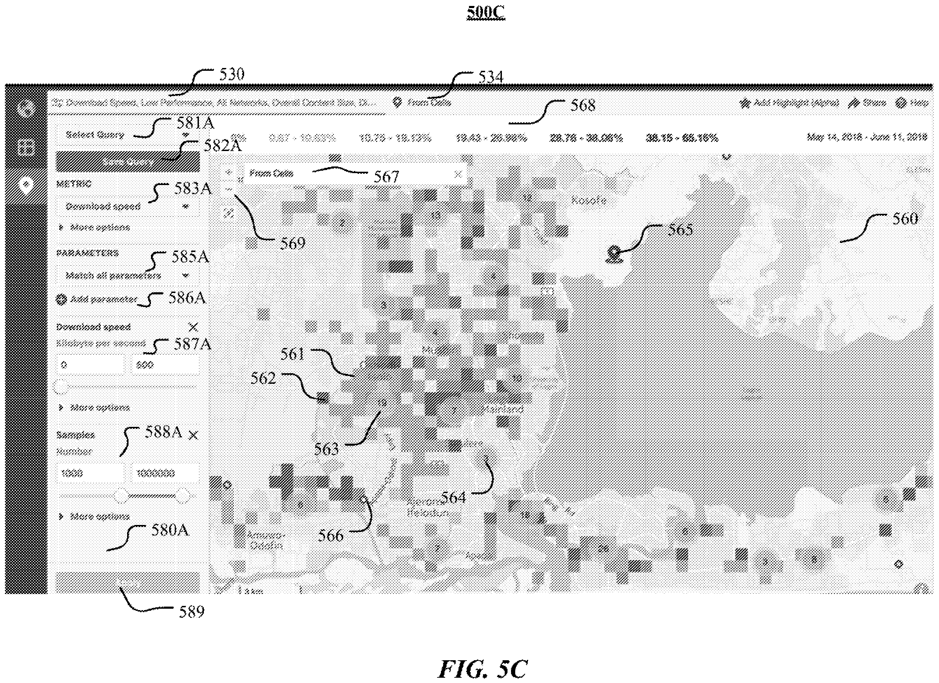

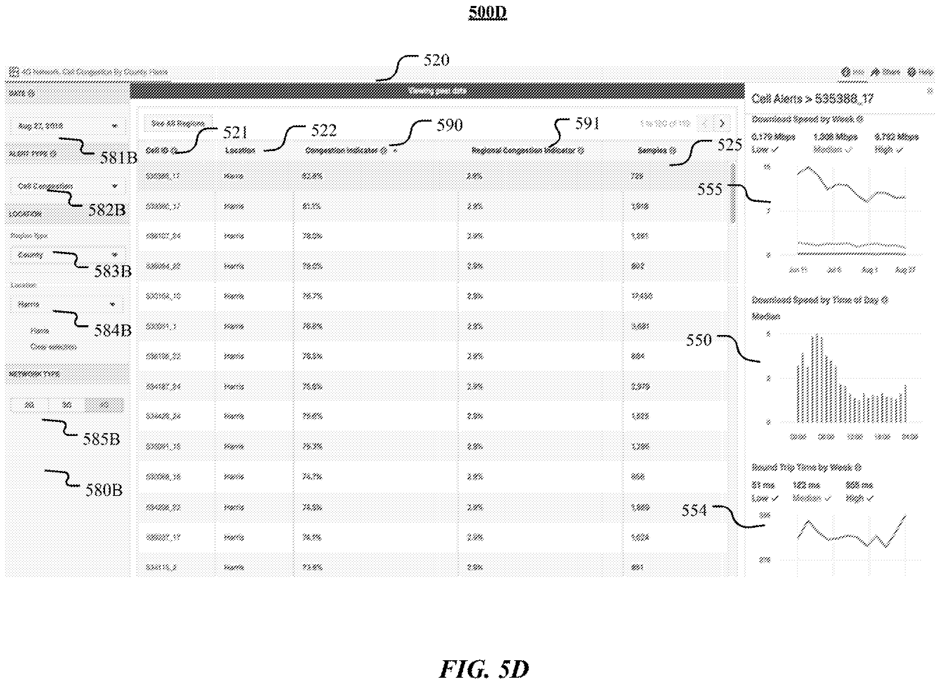

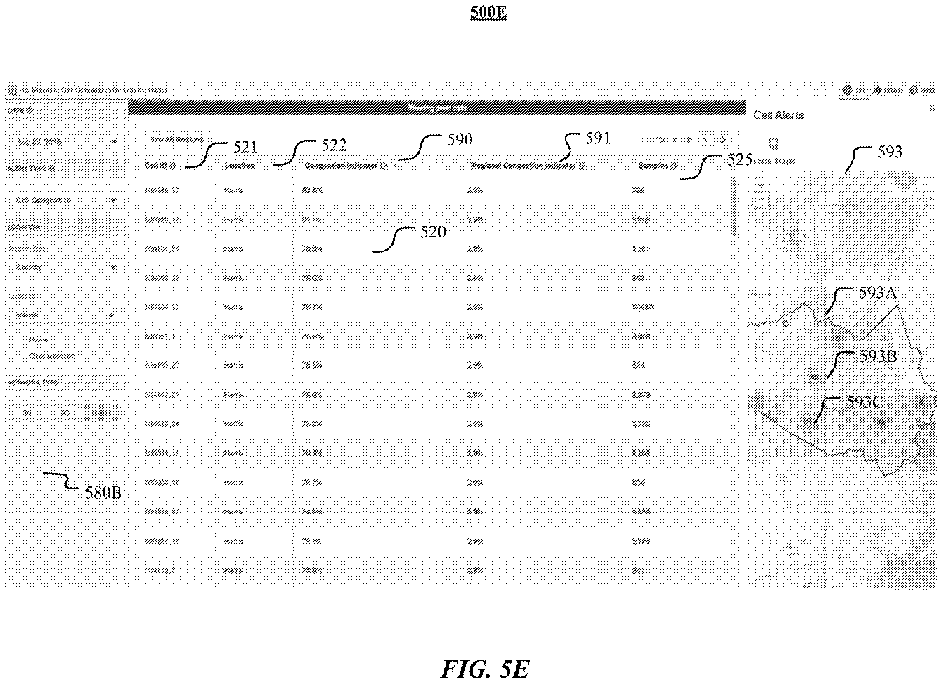

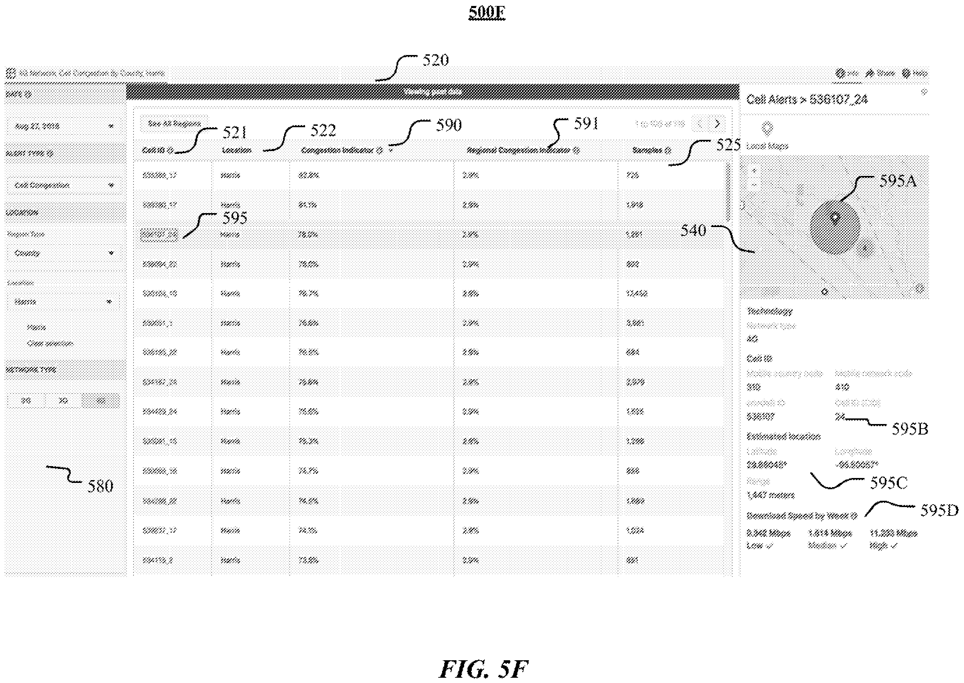

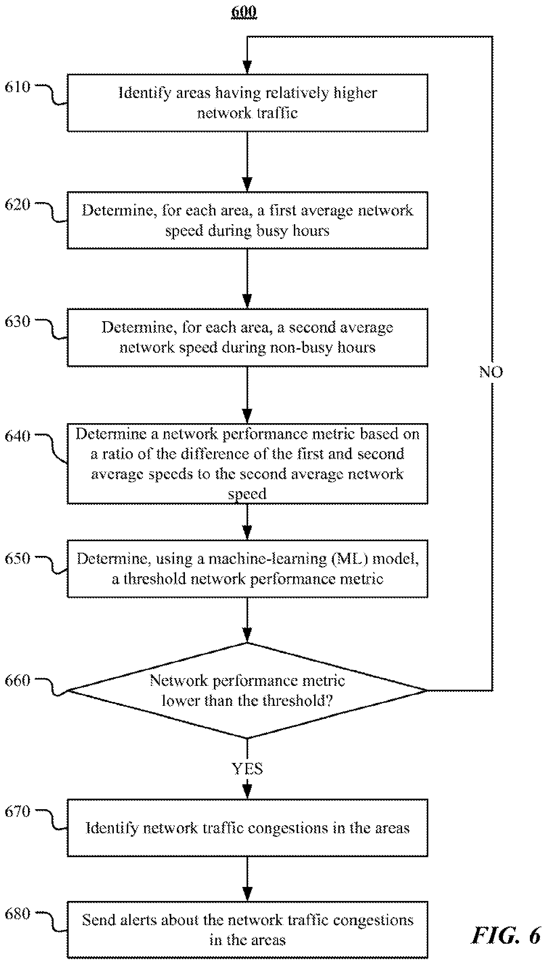

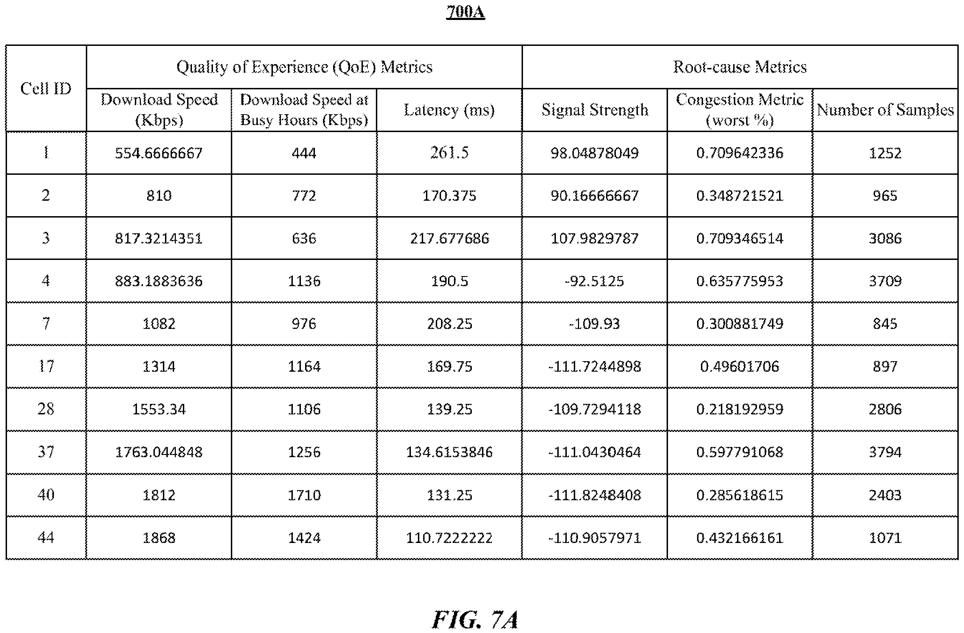

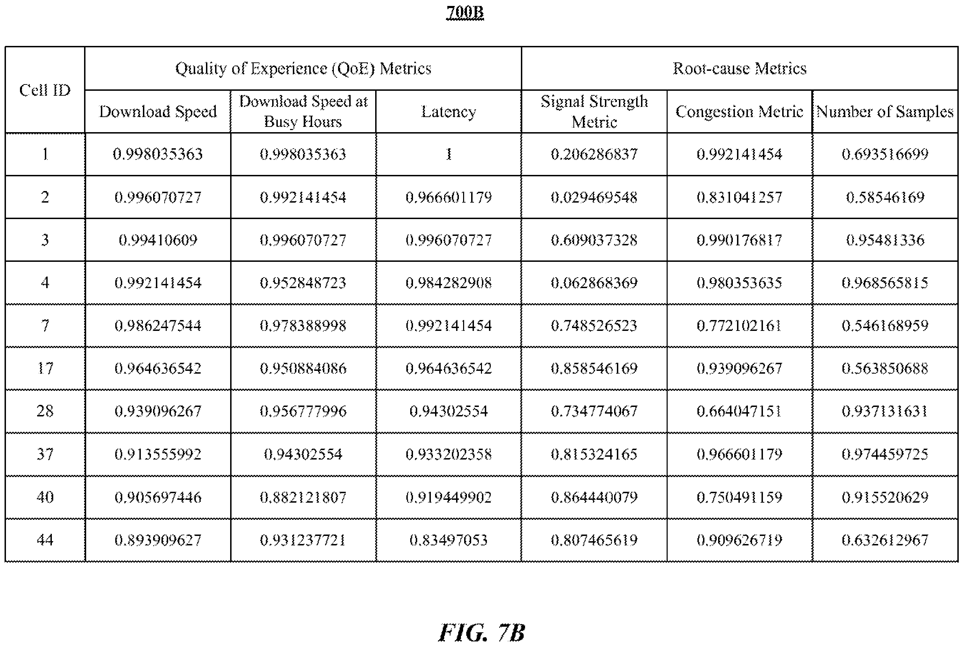

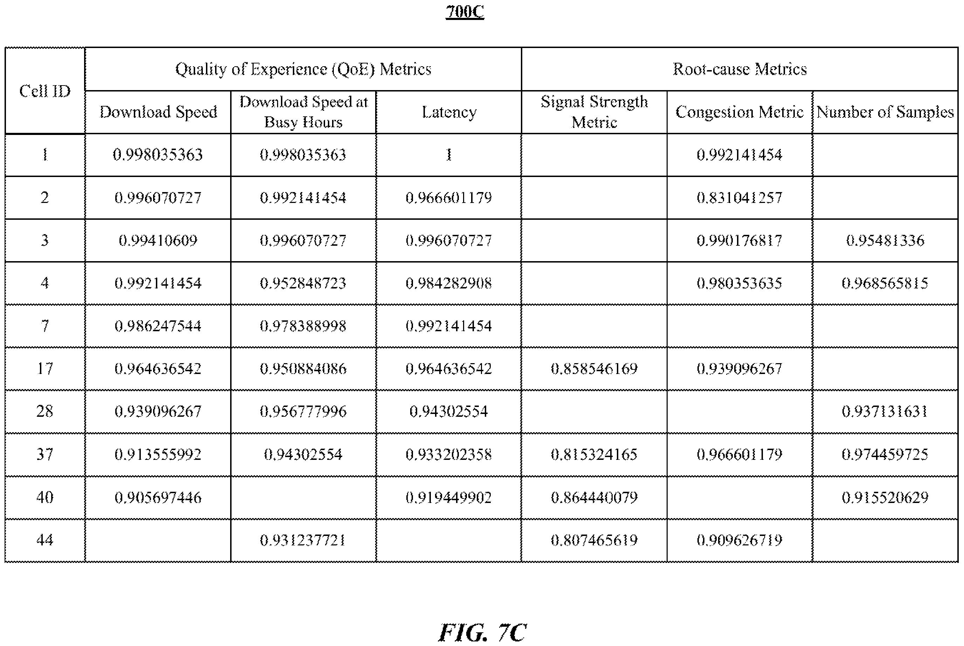

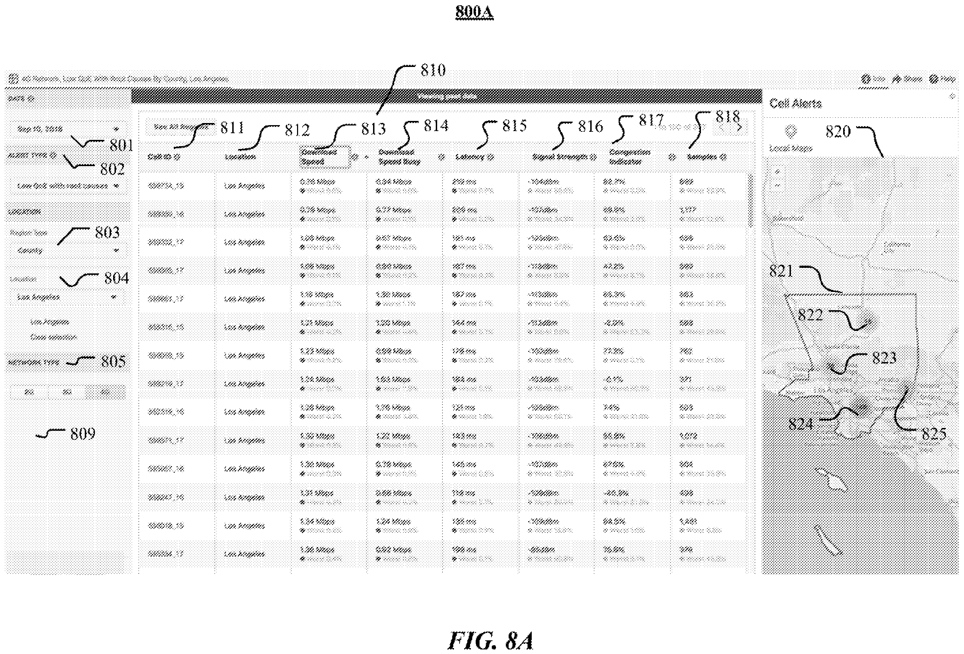

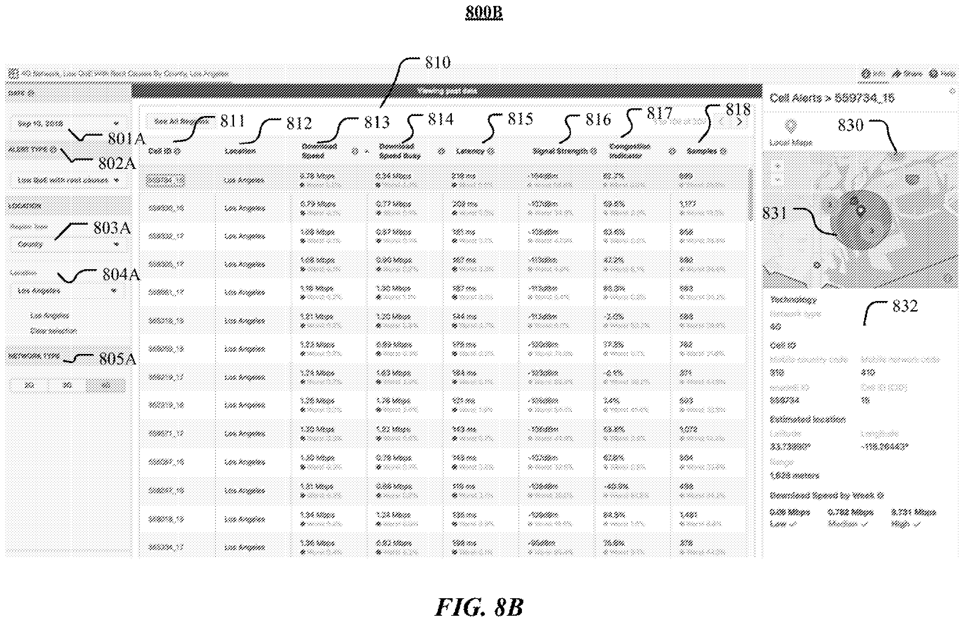

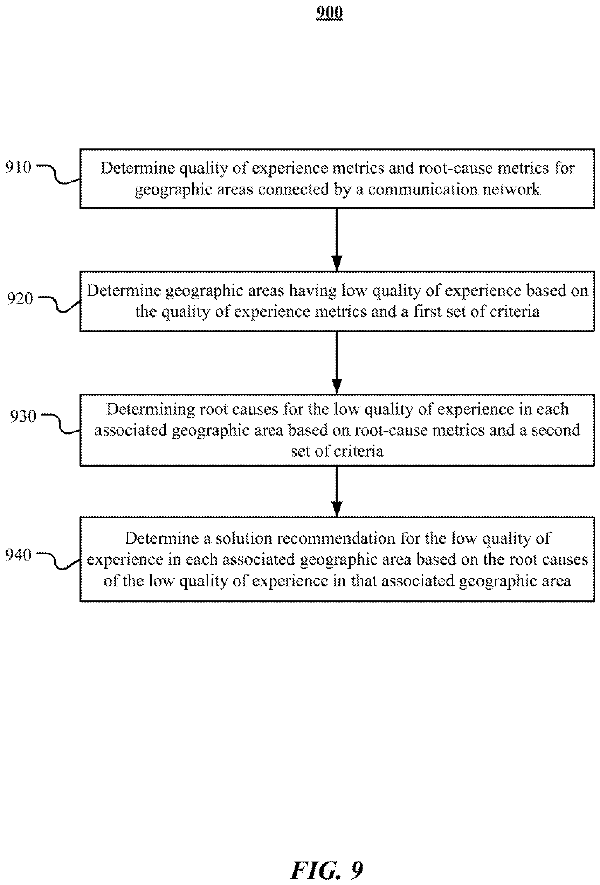

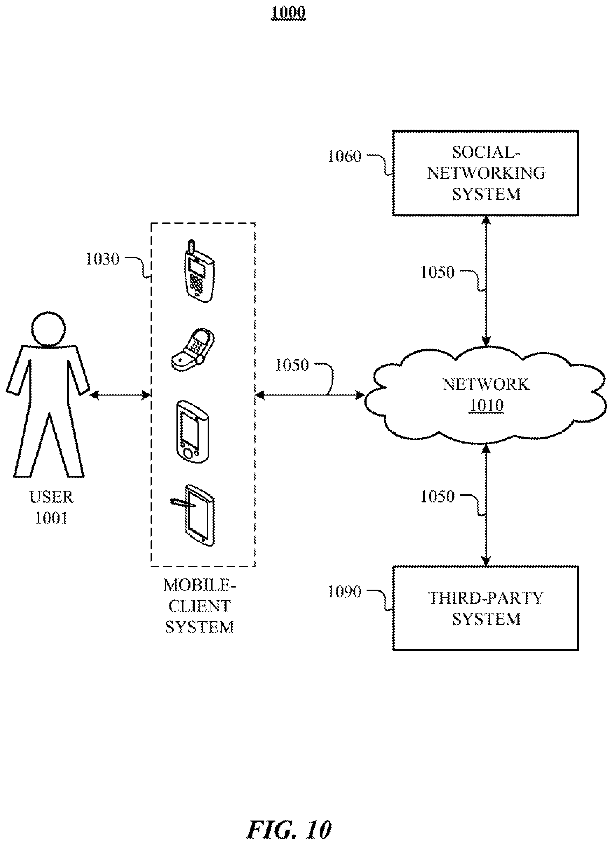

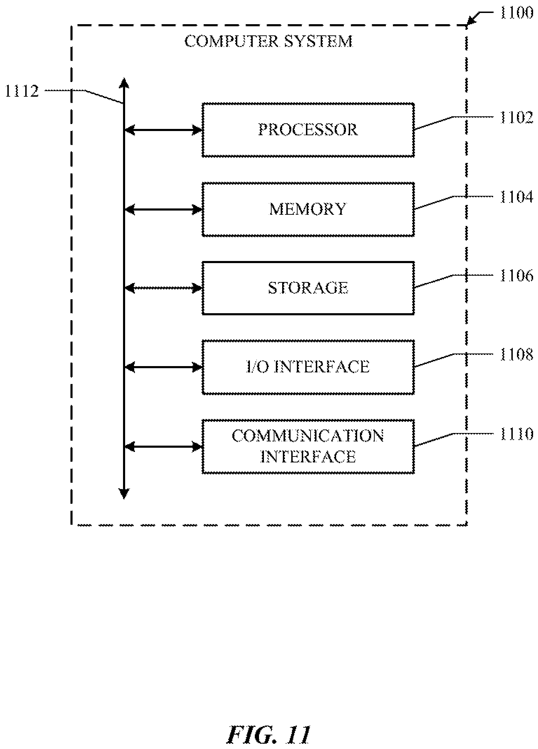

## Claims

1. A method comprising, by one or more computing systems:
determining (910) for a plurality of geographic areas connected by a communication network, based on application data collected from the one or more geographic areas, one or more quality of experience metrics and one or more root-cause metrics;
determining a percentile value for each quality of experience metric of each geographic area of the plurality of geographic areas;
determining (920) that one or more of the plurality of geographic areas have low quality of experience based on the one or more quality of experience metrics and a first set of criteria, wherein the first set of criteria comprises one or more first percentile thresholds for each of the one or more quality of experience metric percentile values;
determining a percentile value for each root-cause metric of each geographic area having low quality of experience;
determining (930) one or more causes for the low quality of experience in each associated geographic area based on the one or more root-cause metrics and a second set of criteria, wherein the second set of criteria comprises one or more second percentile thresholds for each of the one or more root-cause metric percentile values, and wherein the one or more second percentile thresholds are looser than the one or more first percentile thresholds; and
determining (940) a solution recommendation for the low quality of experience of each associated geographic area based on the one or more causes of the low quality of experience of that geographic area.

2. The method of claim 1, wherein determining that the one or more of the geographic areas have low quality of experience comprises:
filtering the percentile values of the quality of experience metrics of the plurality of geographic areas using the one or more first percentile thresholds, wherein the one or more of the geographic areas are determined to have low quality of experience when each of these geographic areas has at least one quality of experience metric percentile value being above the one or more first percentile thresholds.

3. The method of claim 1 or claim 2, wherein determining the one or more causes for each geographic area with low quality of experience comprises:
filtering the percentile values of the root-cause metrics of the one or more geographic areas having low quality of experience using the one or more second percentile thresholds, wherein the one or more of causes are determined when their corresponding root-cause metric percentile values is above the one or more second percentile thresholds.

4. The method of claim 1, claim 2 or claim 3, further comprising:
determining a quality of experience score based on the one or more quality of experience metrics and a mapping function, wherein one or more of the plurality of geographic areas have low quality of experience are determined based on the quality of experience score and a third threshold.

5. The method of any one of claims 1 to 4, further comprising:
generating a report comprising the one or more of the geographic areas having the low quality of experience and the one or more causes for the low quality of experience in respective geographic areas.

6. The method of any one of the preceding claims, further comprising:
determining a priority score for each geographic area having low quality of experiences based on a connection demand metric associated with that geographic areas, wherein the solution recommendation for that geographic area is determined based on the priority score; and preferably wherein the connection demand metric comprises one or more of:
a number of samples;
a number of connected devices;
a number of connected users;
an amount of transmitted data;
a network traffic metric; or
a revenue metric.

7. The method of any one of the preceding claims, wherein the one or more causes for the low quality of experience in an associated geographic area comprise a signal strength, wherein the solution recommendation for that associated geographic area comprises one or more recommendation actions comprising one or more of:
increasing cell transmitting power;
reducing interference;
adding repeaters;
adding new cells; or
tuning cell antenna.

8. The method of any one of the preceding claims, wherein the one or more causes for the low quality of experience in an associated geographic area comprise a congestion indicator, wherein the solution recommendation for that associated geographic area comprises one or more recommendation actions comprising one or more of:
upgrading network;
network densification;
network traffic offloading; or
network load balancing.

9. The method of any one of the preceding claims, wherein the one or more quality of experience metrics and the one or more root-cause metrics comprise one or more of:
a download speed;
a download speed of busy hours;
a network latency at all hours;
a network latency at busy hours;
a downstream latency;
an upstream latency;
a video quality score;
a quality of experience score;
a packet loss metric;
a signal strength;
a congestion indicator;
a network latency; or
a number of samples.

10. The method of any one of the preceding claims, wherein the one or more first percentile thresholds for the one or more quality of experience metrics and the one or more second percentile thresholds for the one or more root-cause metrics are determined by a machine learning model.

11. The method of any one of the preceding claims, wherein the one or more geographic areas having low quality of experience and the one or more causes for the low quality experience in each associated geographic areas are determined by a machine learning model.

12. One or more computer-readable non-transitory storage media embodying software that is operable when executed by a computer to:
determine, for one or more geographic areas connected by a communication network, based on application data collected from the one or more geographic areas, one or more quality of experience metrics and one or more root-cause metrics;
determine a percentile value for each quality of experience metric of each geographic area of the plurality of geographic areas;
determine that one or more of the geographic areas have low quality of experience based on the one or more quality of experience metrics and a first set of criteria, wherein the first set of criteria comprises one or more first percentile thresholds for each of the one or more quality of experience metric percentile values;
determine a percentile value for each root-cause metric of each geographic area having low quality of experience;
determine one or more causes for the low quality of experience in each associated geographic area based on the one or more root-cause metrics and a second set of criteria, wherein the second set of criteria comprises one or more second percentile thresholds for each of the one or more root-cause metric percentile values, and wherein the one or more second percentile thresholds are looser than the one or more first percentile thresholds; and
determine a solution recommendation for the low quality of experience of each associated geographic area based on the one or more causes of the low quality of experience of that geographic area.

13. The computer-readable non-transitory storage media of Claim 12, wherein determining that the one or more of the geographic areas have low quality of experience comprises:
determining a percentile value for each quality of experience metric of each geographic area of the plurality of geographic areas; and
filtering the percentile values of the quality of experience metrics of the plurality of geographic areas using the one or more first percentile thresholds, wherein the one or more of the geographic areas are determined to have low quality of experience when each of these geographic areas has at least one quality of experience metric percentile value being above the one or more first percentile thresholds; or preferably wherein determining the one or more causes for each geographic area with low quality of experience comprises:
determining a percentile value for each root-cause metric of each geographic area having low quality of experience; and
filtering the percentile values of the root-cause metrics of the one or more geographic areas having low quality of experience using the one or more second percentile thresholds, wherein the one or more of causes are determined when their corresponding root-cause metric percentile values is above the one or more second percentile thresholds; or preferably further embodying software that is operable when executed to:
determine a priority score for each geographic area having low quality of experiences based on a connection demand metric associated with that geographic areas, wherein the solution recommendation for that geographic area is determined based on the priority score.

14. A system comprising: one or more non-transitory computer-readable storage media embodying instructions; and one or more processors coupled to the storage media and operable to execute the instructions to:
determine, for one or more geographic areas connected by a communication network, based on application data collected from the one or more geographic areas, one or more quality of experience metrics and one or more root-cause metrics;
determine a percentile value for each quality of experience metric of each geographic area of the plurality of geographic areas;
determine that one or more of the geographic areas have low quality of experience based on the one or more quality of experience metrics and a first set of criteria, wherein the first set of criteria comprises one or more first percentile thresholds for each of the one or more quality of experience metric percentile values;
determine a percentile value for each root-cause metric of each geographic area having low quality of experience;
determine one or more causes for the low quality of experience in each associated geographic area based on the one or more root-cause metrics and a second set of criteria, wherein the second set of criteria comprises one or more second percentile thresholds for each of the one or more root-cause metric percentile values, and wherein the one or more second percentile thresholds is looser than the one or more first percentile thresholds; and
determine a solution recommendation for the low quality of experience of each associated geographic area based on the one or more causes of the low quality of experience of that geographic area.

15. The system of Claim 14, wherein determining that the one or more of the geographic areas have low quality of experience comprises:
filtering the percentile values of the quality of experience metrics of the plurality of geographic areas using the one or more first percentile thresholds, wherein the one or more of the geographic areas are determined to have low quality of experience when each of these geographic areas has at least one quality of experience metric percentile value being above the one or more first percentile thresholds; or preferably wherein determining the one or more causes for each geographic area with low quality of experience comprises:
filtering the percentile values of the root-cause metrics of the one or more geographic areas having low quality of experience using the one or more second percentile thresholds, wherein
the one or more of causes are determined when their corresponding root-cause metric percentile values is above the one or more second percentile thresholds; or preferably wherein
the one or more processors coupled to the storage media are operable to further execute the instructions to:
determine a priority score for each geographic area having low quality of experiences based on a connection demand metric associated with that geographic areas, wherein the solution recommendation for that geographic area is determined based on the priority score.

## Patentansprüche

1. Ein Verfahren, beinhaltend, durch ein oder mehrere Computersysteme:
Bestimmen (910), für eine Vielzahl von geographischen Gebieten, die durch ein Kommunikationsnetz verbunden sind, basierend auf Anwendungsdaten, die von dem einen oder den mehreren geographischen Gebieten gesammelt wurden, einer oder mehrerer Erfahrungsqualitätsmetriken und einer oder mehrerer Grundursachenmetriken;
Bestimmen eines Perzentilwerts für jede Erfahrungsqualitätsmetrikjedes geographischen Gebiets der Vielzahl von geographischen Gebieten;
Bestimmen (920), dass eines oder mehrere der Vielzahl von geographischen Gebieten eine niedrige Erfahrungsqualität aufweisen, basierend auf der einen oder den mehreren Erfahrungsqualitätsmetriken und einem ersten Satz von Kriterien, wobei der erste Satz von Kriterien einen oder mehrere erste Perzentilschwellenwerte für jeden des einen oder der mehreren Erfahrungsqualitätsmetrik-Perzentilwerte beinhaltet;
Bestimmen eines Perzentilwerts für jede Grundursachenmetrik jedes geographischen Gebiets mit niedriger Erfahrungsqualität;
Bestimmen (930) einer oder mehrerer Ursachen für die niedrige Erfahrungsqualität in jedem assoziierten geographischen Gebiet basierend auf der einen oder den mehreren Grundursachenmetriken und einem zweiten Satz von Kriterien, wobei der zweite Satz von Kriterien einen oder mehrere zweite Perzentilschwellenwerte für jeden des einen oder der mehreren Grundursachenmetriken-Perzentilwerte beinhaltet und wobei der eine oder die mehreren zweiten Perzentilschwellenwerte lockerer sind als der eine oder die mehreren ersten Perzentilschwellenwerte; und
Bestimmen (940) einer Lösungsempfehlung für die niedrige Erfahrungsqualität jedes assoziierten geographischen Gebiets basierend auf der einen oder den mehreren Ursachen der niedrigen Erfahrungsqualität dieses geographischen Gebiets.

2. Verfahren gemäß Anspruch 1, wobei das Bestimmen, dass das eine oder die mehreren der geographischen Gebiete eine niedrige Erfahrungsqualität aufweisen, Folgendes beinhaltet:
Filtern der Perzentilwerte der Erfahrungsqualitätsmetriken der Vielzahl von geographischen Gebieten unter Verwendung des einen oder der mehreren ersten Perzentilschwellenwerte, wobei das eine oder die mehreren von den geographischen Gebieten als eine niedrige Erfahrungsqualität aufweisend bestimmt werden, wenn jedes dieser geographischen Gebiete mindestens einen Erfahrungsqualitätsmetrik-Perzentilwert aufweist, der oberhalb des einen oder der mehreren ersten Perzentilschwellenwerte liegt.

3. Verfahren gemäß Anspruch 1 oder Anspruch 2, wobei das Bestimmen der einen oder der mehreren Ursachen für jedes geographische Gebiet mit niedriger Erfahrungsqualität Folgendes beinhaltet:
Filtern der Perzentilwerte der Grundursachenmetriken des einen oder der mehreren geographischen Gebiete mit niedriger Erfahrungsqualität unter Verwendung des einen oder der mehreren zweiten Perzentilschwellenwerte, wobei die eine oder die mehreren von Ursachen bestimmt werden, wenn ihre entsprechenden Grundursachenmetrik-Perzentilwerte oberhalb des einen oder der mehreren zweiten Perzentilschwellenwerte liegen.

4. Verfahren gemäß Anspruch 1, Anspruch 2 oder Anspruch 3, das ferner Folgendes beinhaltet:
Bestimmen einer Erfahrungsqualitätsbewertung basierend auf der einen oder den mehreren Erfahrungsqualitätsmetriken und einer Abbildungsfunktion, wobei eines oder mehrere der Vielzahl von geographischen Gebieten mit niedriger Erfahrungsqualität basierend auf der Erfahrungsqualitätsbewertung und einem dritten Schwellenwert bestimmt werden.

5. Verfahren gemäß einem der Ansprüche 1 bis 4, das ferner Folgendes beinhaltet: Erzeugen eines Berichts, der das eine oder die mehreren geographischen Gebiete mit der niedrigen Erfahrungsqualität und die eine oder die mehreren Ursachen für die niedrige Erfahrungsqualität in jeweiligen geographischen Gebieten beinhaltet.

6. Verfahren gemäß einem der vorhergehenden Ansprüche, das ferner Folgendes beinhaltet:
Bestimmen einer Prioritätsbewertung für jedes geographische Gebiet mit niedriger Erfahrungsqualität basierend auf einer mit diesem geographischen Gebiet assoziierten Verbindungsbedarfsmetrik, wobei die Lösungsempfehlung für dieses geographische Gebiet basierend auf der Prioritätsbewertung bestimmt wird; und
wobei die Verbindungsbedarfsmetrik vorzugsweise eines oder mehrere von Folgendem beinhaltet:
eine Anzahl von Stichproben;
eine Anzahl von verbundenen Vorrichtungen;
eine Anzahl von verbunden Benutzern;
eine Menge von übertragenen Daten;
eine Netzverkehrsmetrik; oder
eine Umsatzmetrik.

7. Verfahren gemäß einem der vorhergehenden Ansprüche, wobei die eine oder die mehreren Ursachen für die niedrige Erfahrungsqualität in einem assoziierten geographischen Gebiet eine Signalstärke beinhalten, wobei die Lösungsempfehlung für dieses assoziierte geographische Gebiet eine oder mehrere Empfehlungsaktionen beinhaltet, die eines oder mehrere von Folgendem beinhalten:
Erhöhen einer Zellensendeleistung;
Reduzieren von Interferenzen;
Hinzufügen von Repeatern;
Hinzufügen von neuen Zellen; oder
Abstimmen einer Zellenantenne.

8. Verfahren gemäß einem der vorhergehenden Ansprüche, wobei die eine oder die mehreren Ursachen für die niedrige Erfahrungsqualität in einem assoziierten geographischen Gebiet einen Überlastungsindikator beinhalten, wobei die Lösungsempfehlung für dieses assoziierte geographische Gebiet eine oder mehrere Empfehlungsaktionen beinhaltet, die eines oder mehrere von Folgendem beinhalten:
Aufrüsten des Netzes;
Netzverdichtung;
Verlagern des Netzverkehrs; oder
Netzlastausgleich.

9. Verfahren gemäß einem der vorhergehenden Ansprüche, wobei die eine oder die mehreren Erfahrungsqualitätsmetriken und die eine oder die mehreren Grundursachenmetriken eines oder mehrere von Folgendem beinhalten:
eine Download-Geschwindigkeit;
eine Download-Geschwindigkeit zu verkehrsreichen Zeiten;
eine Netzwerklatenz zu allen Zeiten;
eine Netzwerklatenz zu verkehrsreichen Zeiten;
eine Downstream-Latenz;
eine Upstream-Latenz;
eine Bewertung der Videoqualität;
eine Bewertung der Erfahrungsqualität;
eine Paketverlustmetrik;
eine Signalstärke;
einen Überlastungsindikator;
eine Netzwerklatenz; oder
eine Anzahl von Stichproben.

10. Verfahren gemäß einem der vorhergehenden Ansprüche, wobei der eine oder die mehreren ersten Perzentilschwellenwerte für die eine oder die mehreren Erfahrungsqualitätsmetriken und der eine oder die mehreren zweiten Perzentilschwellenwerte für die eine oder die mehreren Grundursachenmetriken durch ein maschinelles Lernmodell bestimmt werden.

11. Verfahren gemäß einem der vorhergehenden Ansprüche, wobei das eine oder die mehreren geographischen Gebiete mit niedriger Erfahrungsqualität und die eine oder die mehreren Ursachen für die niedrige Erfahrungsqualität in jedem assoziierten geographischen Gebiet durch ein maschinelles Lernmodell bestimmt werden.

12. Ein oder mehrere computerlesbare nicht transitorische Speichermedien, die Software enthalten, die bei Ausführung durch einen Computer für Folgendes betriebsbereit ist:
Bestimmen, für ein oder mehrere geographische Gebiete, die durch ein Kommunikationsnetz verbunden sind, basierend auf Anwendungsdaten, die von dem einen oder den mehreren geographischen Gebieten gesammelt wurden, einer oder mehrerer Erfahrungsqualitätsmetriken und einer oder mehrerer Grundursachenmetriken;
Bestimmen eines Perzentilwerts für jede Erfahrungsqualitätsmetrikjedes geographischen Gebiets der Vielzahl von geographischen Gebieten;
Bestimmen, dass eines oder mehrere der geographischen Gebiete eine niedrige Erfahrungsqualität aufweisen, basierend auf der einen oder den mehreren Erfahrungsqualitätsmetriken und einem ersten Satz von Kriterien, wobei der erste Satz von Kriterien einen oder mehrere erste Perzentilschwellenwerte für jeden des einen oder der mehreren Erfahrungsqualitätsmetrik-Perzentilwerte beinhaltet;
Bestimmen eines Perzentilwerts für jede Grundursachenmetrik jedes geographischen Gebiets mit niedriger Erfahrungsqualität;
Bestimmen einer oder mehrerer Ursachen für die niedrige Erfahrungsqualität in jedem assoziierten geographischen Gebiet basierend auf der einen oder den mehreren Grundursachenmetriken und einem zweiten Satz von Kriterien, wobei der zweite Satz von Kriterien einen oder mehrere zweite Perzentilschwellenwerte für jeden des einen oder der mehreren Grundursachenmetriken-Perzentilwerte beinhaltet und wobei der eine oder die mehreren zweiten Perzentilschwellenwerte lockerer sind als der eine oder die mehreren ersten Perzentilschwellenwerte; und
Bestimmen einer Lösungsempfehlung für die niedrige Erfahrungsqualität jedes assoziierten geographischen Gebiets basierend auf der einen oder den mehreren Ursachen der niedrigen Erfahrungsqualität dieses geographischen Gebiets.

13. Computerlesbare nicht transitorische Speichermedien gemäß Anspruch 12, wobei das Bestimmen, dass das eine oder die mehreren der geographischen Gebiete eine niedrige Erfahrungsqualität aufweisen, Folgendes beinhaltet:
Bestimmen eines Perzentilwerts für jede Erfahrungsqualitätsmetrik jedes geographischen Gebiets der Vielzahl von geographischen Gebieten; und
Filtern der Perzentilwerte der Erfahrungsqualitätsmetriken der Vielzahl von geographischen Gebieten unter Verwendung des einen oder der mehreren ersten Perzentilschwellenwerte, wobei das eine oder die mehreren geographischen Gebiete als eine niedrige Erfahrungsqualität aufweisende Gebiete bestimmt werden, wenn jedes dieser geographischen Gebiete mindestens einen Erfahrungsqualitätsmetrik-Perzentilwert aufweist, der oberhalb des einen oder der mehreren ersten Perzentilschwellenwerte liegt; oder vorzugsweise, wobei das Bestimmen der einen oder der mehreren Ursachen für jedes geographische Gebiet mit niedriger Erfahrungsqualität Folgendes beinhaltet:
Bestimmen eines Perzentilwerts für jede Grundursachenmetrik jedes geographischen Gebiets mit niedriger Erfahrungsqualität; und
Filtern der Perzentilwerte der Grundursachenmetriken des einen oder der mehreren geographischen Gebiete mit niedriger Erfahrungsqualität unter Verwendung des einen oder der mehreren zweiten Perzentilschwellenwerte, wobei die eine oder die mehreren Ursachen bestimmt werden, wenn ihre entsprechenden Grundursachenmetrik-Perzentilwerte oberhalb des einen oder der mehreren zweiten Perzentilschwellenwerte liegen; oder vorzugsweise ferner Software enthaltend, die bei Ausführung für Folgendes betriebsbereit ist:
Bestimmen einer Prioritätsbewertung für jedes geographische Gebiet mit niedriger Erfahrungsqualität basierend auf einer mit diesem geographischen Gebiet assoziierten Verbindungsbedarfsmetrik, wobei die Lösungsempfehlung für dieses geographische Gebiet basierend auf der Prioritätsbewertung bestimmt wird.

14. Ein System, das Folgendes beinhaltet: ein oder mehrere nicht transitorische computerlesbare Speichermedien, die Anweisungen enthalten; und einen oder mehrere Prozessoren, die mit den Speichermedien gekoppelt sind und betriebsbereit sind, um die Anweisungen für Folgendes auszuführen:
Bestimmen, für ein oder mehrere geographische Gebiete, die durch ein Kommunikationsnetz verbunden sind, basierend auf Anwendungsdaten, die von dem einen oder den mehreren geographischen Gebieten gesammelt wurden, einer oder mehrerer Erfahrungsqualitätsmetriken und einer oder mehrerer Grundursachenmetriken;
Bestimmen eines Perzentilwerts für jede Erfahrungsqualitätsmetrikjedes geographischen Gebiets der Vielzahl von geographischen Gebieten;
Bestimmen, dass eines oder mehrere der geographischen Gebiete eine niedrige Erfahrungsqualität aufweisen, basierend auf der einen oder den mehreren Erfahrungsqualitätsmetriken und einem ersten Satz von Kriterien, wobei der erste Satz von Kriterien einen oder mehrere erste Perzentilschwellenwerte für jeden des einen oder der mehreren Erfahrungsqualitätsmetrik-Perzentilwerte beinhaltet;
Bestimmen eines Perzentilwerts für jede Grundursachenmetrik jedes geographischen Gebiets mit niedriger Erfahrungsqualität;
Bestimmen einer oder mehrerer Ursachen für die niedrige Erfahrungsqualität in jedem assoziierten geographischen Gebiet basierend auf der einen oder den mehreren Grundursachenmetriken und einem zweiten Satz von Kriterien, wobei der zweite Satz von Kriterien einen oder mehrere zweite Perzentilschwellenwerte für jeden des einen oder der mehreren Grundursachenmetriken-Perzentilwerte beinhaltet und wobei der eine oder die mehreren zweiten Perzentilschwellenwerte lockerer sind als der eine oder die mehreren ersten Perzentilschwellenwerte; und
Bestimmen einer Lösungsempfehlung für die niedrige Erfahrungsqualität jedes assoziierten geographischen Gebiets basierend auf der einen oder den mehreren Ursachen der niedrigen Erfahrungsqualität dieses geographischen Gebiets.

15. System gemäß Anspruch 14, wobei das Bestimmen, dass das eine oder die mehreren der geographischen Gebiete eine niedrige Erfahrungsqualität aufweisen, Folgendes beinhaltet:
Filtern der Perzentilwerte der Erfahrungsqualitätsmetriken der Vielzahl von geographischen Gebieten unter Verwendung des einen oder der mehreren ersten Perzentilschwellenwerte, wobei das eine oder die mehreren geographischen Gebiete als eine niedrige Erfahrungsqualität aufweisende Gebiete bestimmt werden, wenn jedes dieser geographischen Gebiete mindestens einen Erfahrungsqualitätsmetrik-Perzentilwert aufweist, der oberhalb des einen oder der mehreren ersten Perzentilschwellenwerte liegt; oder vorzugsweise, wobei das Bestimmen der einen oder der mehreren Ursachen für jedes geographische Gebiet mit niedriger Erfahrungsqualität Folgendes beinhaltet:
Filtern der Perzentilwerte der Grundursachenmetriken des einen oder der mehreren geographischen Gebiete mit niedriger Erfahrungsqualität unter Verwendung des einen oder der mehreren zweiten Perzentilschwellenwerte, wobei die eine oder die mehreren Ursachen bestimmt werden, wenn ihre entsprechenden Grundursachenmetrik-Perzentilwerte oberhalb des einen oder der mehreren zweiten Perzentilschwellenwerte liegen; oder vorzugsweise, wobei der eine oder die mehreren Prozessoren, die mit den Speichermedien gekoppelt sind, betriebsbereit sind, um ferner die Anweisungen für Folgendes auszuführen:
Bestimmen einer Prioritätsbewertung für jedes geographische Gebiet mit niedriger Erfahrungsqualität basierend auf einer mit diesem geographischen Gebiet assoziierten Verbindungsbedarfsmetrik, wobei die Lösungsempfehlung für dieses geographische Gebiet basierend auf der Prioritätsbewertung bestimmt wird.

## Revendications

1. Un procédé comprenant, par un ou plusieurs systèmes informatiques :
la détermination (910) pour une pluralité de zones géographiques connectées par un réseau de communication, sur la base de données d'application recueillies à partir des une ou plusieurs zones géographiques, d'une ou de plusieurs mesures métriques de qualité d'expérience et d'une ou de plusieurs mesures métriques de cause profonde ;
la détermination d'une valeur percentile pour chaque mesure métrique de qualité d'expérience de chaque zone géographique de la pluralité de zones géographiques ;
la détermination (920) du fait qu'une ou plusieurs zones de la pluralité de zones géographiques ont une basse qualité d'expérience sur la base des une ou plusieurs mesures métriques de qualité d'expérience et d'un premier ensemble de critères, le premier ensemble de critères comprenant un ou plusieurs premiers seuils percentiles pour chacune des une ou plusieurs valeurs percentiles de mesure métrique de qualité d'expérience ;
la détermination d'une valeur percentile pour chaque mesure métrique de cause profonde de chaque zone géographique ayant une basse qualité d'expérience ;
la détermination (930) d'une ou de plusieurs causes pour la basse qualité d'expérience dans chaque zone géographique associée sur la base des une ou plusieurs mesures métriques de cause profonde et d'un deuxième ensemble de critères, le deuxième ensemble de critères comprenant un ou plusieurs deuxièmes seuils percentiles pour chacune des une ou plusieurs valeurs percentiles de mesure métrique de cause profonde, et les un ou plusieurs deuxièmes seuils percentiles étant plus larges que les un ou plusieurs premiers seuils percentiles ; et
la détermination (940) d'une recommandation de solution pour la basse qualité d'expérience de chaque zone géographique associée sur la base des une ou plusieurs causes de la basse qualité d'expérience de cette zone géographique.

2. Le procédé de la revendication 1, dans lequel la détermination du fait que les une ou plusieurs zones des zones géographiques ont une basse qualité d'expérience comprend :
le filtrage des valeurs percentiles des mesures métriques de qualité d'expérience de la pluralité de zones géographiques à l'aide des un ou plusieurs premiers seuils percentiles, les une ou plusieurs zones des zones géographiques étant déterminées comme ayant une basse qualité d'expérience lorsque chacune de ces zones géographiques a au moins une valeur percentile de mesure métrique de qualité d'expérience qui est au-dessus des un ou plusieurs premiers seuils percentiles.

3. Le procédé de la revendication 1 ou de la revendication 2, dans lequel la détermination des une ou plusieurs causes pour chaque zone géographique présentant une basse qualité d'expérience comprend :
le filtrage des valeurs percentiles des mesures métriques de cause profonde des une ou plusieurs zones géographiques ayant une basse qualité d'expérience à l'aide des un ou plusieurs deuxièmes seuils percentiles, les une ou plusieurs des causes étant déterminées lorsque leurs valeurs percentiles de mesure métrique de cause profonde correspondantes sont au-dessus des un ou plusieurs deuxièmes seuils percentiles.

4. Le procédé de la revendication 1, de la revendication 2 ou de la revendication 3, comprenant en outre :
la détermination d'un score de qualité d'expérience sur la base des une ou plusieurs mesures métriques de qualité d'expérience et d'une fonction de mappage, une ou plusieurs zones de la pluralité de zones géographiques ayant une basse qualité d'expérience étant déterminées sur la base du score de qualité d'expérience et d'un troisième seuil.

5. Le procédé de n'importe laquelle des revendications 1 à 4, comprenant en outre :
la génération d'un rapport comprenant les une ou plusieurs zones des zones géographiques ayant la basse qualité d'expérience et les une ou plusieurs causes pour la basse qualité d'expérience dans des zones géographiques respectives.

6. Le procédé de n'importe laquelle des revendications précédentes, comprenant en outre :
la détermination d'un score de priorité pour chaque zone géographique ayant une basse qualité d'expériences sur la base d'une mesure métrique de demande de connexion associée à cette zone géographique, dans lequel la recommandation de solution pour cette zone géographique est déterminée sur la base du score de priorité ; et
de préférence dans lequel la mesure métrique de demande de connexion comprend un ou plusieurs éléments parmi :
un certain nombre d'échantillons ;
un certain nombre de dispositifs connectés ;
un certain nombre d'utilisateurs connectés ;
une quantité de données transmises ;
une mesure métrique de trafic réseau ; ou
une mesure métrique de chiffre d'affaires.

7. Le procédé de n'importe laquelle des revendications précédentes, dans lequel les une ou plusieurs causes pour la basse qualité d'expérience dans une zone géographique associée comprennent une intensité de signal, dans lequel la recommandation de solution pour cette zone géographique associée comprend une ou plusieurs actions de recommandation comprenant une ou plusieurs actions parmi :
l'augmentation de la puissance de transmission cellulaire ;
la réduction d'interférences ;
l'ajout de répéteurs ;
l'ajout de nouvelles cellules ; ou
la syntonisation d'antenne cellulaire.

8. Le procédé de n'importe laquelle des revendications précédentes, dans lequel les une ou plusieurs causes pour la basse qualité d'expérience dans une zone géographique associée comprennent un indicateur de congestion, dans lequel la recommandation de solution pour cette zone géographique associée comprend une ou plusieurs actions de recommandation comprenant une ou plusieurs actions parmi :
l'amélioration de réseau ;
la densification de réseau ;
le transfert de charge de trafic réseau ; ou
l'équilibrage de charge de réseau.

9. Le procédé de n'importe laquelle des revendications précédentes, dans lequel les une ou plusieurs mesures métriques de qualité d'expérience et les une ou plusieurs mesures métriques de cause profonde comprennent un ou plusieurs éléments parmi :
une vitesse de téléchargement vers l'aval ;
une vitesse de téléchargement vers l'aval d'heures chargées ;
une latence de réseau à toute heure ;
une latence de réseau aux heures chargées ;
une latence dans le sens descendant ;
une latence dans le sens montant ;
un score de qualité vidéo ;
un score de qualité d'expérience ;
une mesure métrique de perte de paquets ;
une intensité de signal ;
un indicateur de congestion ;
une latence de réseau ; ou
un certain nombre d'échantillons.

10. Le procédé de n'importe laquelle des revendications précédentes, dans lequel les un ou plusieurs premiers seuils percentiles pour les une ou plusieurs mesures métriques de qualité d'expérience et les un ou plusieurs deuxièmes seuils percentiles pour les une ou plusieurs mesures métriques de cause profonde sont déterminés par un modèle d'apprentissage machine.

11. Le procédé de n'importe laquelle des revendications précédentes, dans lequel les une ou plusieurs zones géographiques ayant une basse qualité d'expérience et les une ou plusieurs causes pour la basse qualité d'expérience dans chaque zone géographique associée sont déterminées par un modèle d'apprentissage machine.

12. Un ou plusieurs supports de stockage non transitoires lisibles par ordinateur incorporant un logiciel qui est exploitable lorsqu'il est exécuté par un ordinateur pour :
déterminer, pour une ou plusieurs zones géographiques connectées par un réseau de communication, sur la base de données d'application recueillies à partir des une ou plusieurs zones géographiques, une ou plusieurs mesures métriques de qualité d'expérience et une ou plusieurs mesures métriques de cause profonde ;
déterminer une valeur percentile pour chaque mesure métrique de qualité d'expérience de chaque zone géographique de la pluralité de zones géographiques ;
déterminer qu'une ou plusieurs des zones géographiques ont une basse qualité d'expérience sur la base des une ou plusieurs mesures métriques de qualité d'expérience et d'un premier ensemble de critères, le premier ensemble de critères comprenant un ou plusieurs premiers seuils percentiles pour chacune des une ou plusieurs valeurs percentiles de mesure métrique de qualité d'expérience ;
déterminer une valeur percentile pour chaque mesure métrique de cause profonde de chaque zone géographique ayant une basse qualité d'expérience ;
déterminer une ou plusieurs causes pour la basse qualité d'expérience dans chaque zone géographique associée sur la base des une ou plusieurs mesures métriques de cause profonde et d'un deuxième ensemble de critères, le deuxième ensemble de critères comprenant un ou plusieurs deuxièmes seuils percentiles pour chacune des une ou plusieurs valeurs percentiles de mesure métrique de cause profonde, et les un ou plusieurs deuxièmes seuils percentiles étant plus larges que les un ou plusieurs premiers seuils percentiles ; et
déterminer une recommandation de solution pour la basse qualité d'expérience de chaque zone géographique associée sur la base des une ou plusieurs causes de la basse qualité d'expérience de cette zone géographique.

13. Les supports de stockage non transitoires lisibles par ordinateur de la revendication 12, dans lesquels la détermination du fait que les une ou plusieurs zones des zones géographiques ont une basse qualité d'expérience comprend :
la détermination d'une valeur percentile pour chaque mesure métrique de qualité d'expérience de chaque zone géographique de la pluralité de zones géographiques ; et le filtrage des valeurs percentiles des mesures métriques de qualité d'expérience de la pluralité de zones géographiques à l'aide des un ou plusieurs premiers seuils percentiles, les une ou plusieurs zones des zones géographiques étant déterminées comme ayant une basse qualité d'expérience lorsque chacune de ces zones géographiques a au moins une valeur percentile de mesure métrique de qualité d'expérience qui est au-dessus des un ou plusieurs premiers seuils percentiles ; ou de préférence dans lesquels la détermination des une ou plusieurs causes pour chaque zone géographique présentant une basse qualité d'expérience comprend :
la détermination d'une valeur percentile pour chaque mesure métrique de cause profonde de chaque zone géographique ayant une basse qualité d'expérience ; et
le filtrage des valeurs percentiles des mesures métriques de cause profonde des une ou plusieurs zones géographiques ayant une basse qualité d'expérience à l'aide des un ou plusieurs deuxièmes seuils percentiles, les une ou plusieurs des causes étant déterminées lorsque leurs valeurs percentiles de mesure métrique de cause profonde correspondantes sont au-dessus des un ou plusieurs deuxièmes seuils percentiles ; ou de préférence incorporant en outre un logiciel qui est exploitable lorsqu'il est exécuté pour :
déterminer un score de priorité pour chaque zone géographique ayant une basse qualité d'expériences sur la base d'une mesure métrique de demande de connexion associée à cette zone géographique, dans lesquels la recommandation de solution pour cette zone géographique est déterminée sur la base du score de priorité.

14. Un système comprenant : un ou plusieurs supports de stockage lisibles par ordinateur non transitoires incorporant des instructions ; et un ou plusieurs processeurs couplés aux supports de stockage et exploitables pour exécuter les instructions de :
déterminer, pour une ou plusieurs zones géographiques connectées par un réseau de communication, sur la base de données d'application recueillies à partir des une ou plusieurs zones géographiques, une ou plusieurs mesures métriques de qualité d'expérience et une ou plusieurs mesures métriques de cause profonde ;
déterminer une valeur percentile pour chaque mesure métrique de qualité d'expérience de chaque zone géographique de la pluralité de zones géographiques ;
déterminer qu'une ou plusieurs des zones géographiques ont une basse qualité d'expérience sur la base des une ou plusieurs mesures métriques de qualité d'expérience et d'un premier ensemble de critères, le premier ensemble de critères comprenant un ou plusieurs premiers seuils percentiles pour chacune des une ou plusieurs valeurs percentiles de mesure métrique de qualité d'expérience ;
déterminer une valeur percentile pour chaque mesure métrique de cause profonde de chaque zone géographique ayant une basse qualité d'expérience ;
déterminer une ou plusieurs causes pour la basse qualité d'expérience dans chaque zone géographique associée sur la base des une ou plusieurs mesures métriques de cause profonde et d'un deuxième ensemble de critères, le deuxième ensemble de critères comprenant un ou plusieurs deuxièmes seuils percentiles pour chacune des une ou plusieurs valeurs percentiles de mesure métrique de cause profonde, et les un ou plusieurs deuxièmes seuils percentiles étant plus larges que les un ou plusieurs premiers seuils percentiles ; et
déterminer une recommandation de solution pour la basse qualité d'expérience de chaque zone géographique associée sur la base des une ou plusieurs causes de la basse qualité d'expérience de cette zone géographique.

15. Le système de la revendication 14, dans lequel la détermination du fait que les une ou plusieurs zones des zones géographiques ont une basse qualité d'expérience comprend :
le filtrage des valeurs percentiles des mesures métriques de qualité d'expérience de la pluralité de zones géographiques à l'aide des un ou plusieurs premiers seuils percentiles, les une ou plusieurs zones des zones géographiques étant déterminées comme ayant une basse qualité d'expérience lorsque chacune de ces zones géographiques a au moins une valeur percentile de mesure métrique de qualité d'expérience qui est au-dessus des un ou plusieurs premiers seuils percentiles ; ou de préférence dans lequel la détermination des une ou plusieurs causes pour chaque zone géographique présentant une basse qualité d'expérience comprend :
le filtrage des valeurs percentiles des mesures métriques de cause profonde des une ou plusieurs zones géographiques ayant une basse qualité d'expérience à l'aide des un ou plusieurs deuxièmes seuils percentiles, les une ou plusieurs des causes étant déterminées lorsque leurs valeurs percentiles de mesure métrique de cause profonde correspondantes sont au-dessus des un ou plusieurs deuxièmes seuils percentiles ; ou de préférence dans lequel les un ou plusieurs processeurs couplés aux supports de stockage sont exploitables pour exécuter en outre les instructions de :
déterminer un score de priorité pour chaque zone géographique ayant une basse qualité d'expériences sur la base d'une mesure métrique de demande de connexion associée à cette zone géographique, dans lequel la recommandation de solution pour cette zone géographique est déterminée sur la base du score de priorité.
